(19) Europäisches Patentamt

European Patent Office

Office européen des brevets

(11) **EP 4 617 301 A1**

(12) **EUROPEAN PATENT APPLICATION**
published in accordance with Art. 153(4) EPC

(43) Date of publication:
**17.09.2025 Bulletin 2025/38**

(21) Application number: **23888696.4**

(22) Date of filing: **07.11.2023**

(51) International Patent Classification (IPC):
*C08J 3/03* (2006.01)   *C08F 8/50* (2006.01)
*C08J 11/16* (2006.01)

(52) Cooperative Patent Classification (CPC):
**C08F 8/50; C08J 3/03; C08J 11/16; Y02W 30/62**

(86) International application number:
**PCT/JP2023/040035**

(87) International publication number:
**WO 2024/101349 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 07.11.2022   JP 2022178500
23.01.2023   JP 2023007768
10.07.2023   JP 2023113188
09.08.2023   JP 2023130519
25.08.2023   JP 2023137023

(71) Applicant: **Nippon Shokubai Co., Ltd.**
**Osaka-shi, Osaka 541-0043 (JP)**

(72) Inventors:
• **MATSUI, Daisuke**
**Himeji-shi, Hyogo 671-1282 (JP)**
• **ENOKIDA, Yusuke**
**Himeji-shi, Hyogo 671-1282 (JP)**
• **YAMAMOTO, Emiko**
**Himeji-shi, Hyogo 671-1282 (JP)**
• **KOBAYASHI, Nobuhiro**
**Himeji-shi, Hyogo 671-1282 (JP)**
• **TORII, Kazushi**
**Himeji-shi, Hyogo 671-1282 (JP)**
• **ISHIZAKI, Kunihiko**
**Himeji-shi, Hyogo 671-1282 (JP)**
• **NOGI, Kozo**
**Himeji-shi, Hyogo 671-1282 (JP)**
• **FUJINO, Shinichi**
**Himeji-shi, Hyogo 671-1282 (JP)**

(74) Representative: **Schön, Christoph**
**Dr. Schön, Neymeyr & Partner mbB**
**Bavariaring 26**
**80336 München (DE)**

(54) **METHOD FOR PRODUCING SOLUBILIZING POLYMER AND METHOD FOR PRODUCING WATER ABSORBENT RESIN**

(57)    The present invention relates to a method for producing a solubilized polymer by decomposing a recovered water-absorbent resin to produce a solubilized polymer, the method including preparing a mixture containing a recovered water-absorbent resin, water, and a peroxide (excluding persulfates), wherein the mixture has a pH of 6.5 or more and 8.5 or less. The present invention also relates to a method for producing a water-absorbent resin, the method including using, as a part of a raw material, a solubilized polymer produced by decomposing a recovered water-absorbent resin. According to the present invention, a means capable of solubilizing (decomposing) a recovered water-absorbent resin in a short time without using a large amount of decomposer.

FIG. 1

EP 4 617 301 A1

**Description**

Technical Field

The present invention relates to a method for producing a solubilized polymer by solubilizing (decomposing) a recovered water-absorbent resin, and a method for producing a water-absorbent resin containing the solubilized polymer as a part of a raw material.

Background Art

In recent years, in absorbent articles such as disposable diapers, sanitary napkins, and incontinence pads, a water-absorbent resin as a constituent material of the absorbent articles has been widely used as a water absorbent from the viewpoint of body fluid absorption. Known examples of the water-absorbent resin include a hydrolyzate of a starch-acrylonitrile graft copolymer, a neutralized product of a starch-acrylic acid graft polymer, a saponified product of a vinyl acetate-acrylic acid ester copolymer, and a crosslinked product of a partially neutralized acrylic acid polymer. From the viewpoint of water absorption performance, a polyacrylic acid (salt)-based water-absorbent resin using acrylic acid and/or a salt thereof as a monomer is most produced industrially.

Absorbent articles are generally disposable, but because of increased environmental awareness, there is an increasing interest in recycling absorbent articles. As a technique for recycling a water-absorbent resin used for an absorbent article, a method has been developed in which a water-absorbent resin is decomposed and solubilized to be separated from other members in a paper diaper, and then the resulting solubilized polymer is added to a step for producing a water-absorbent resin for reuse (WO 2020/213298 A (corresponding to US 2022/0212165 A1)).

As techniques for decomposing and solubilizing a water-absorbent resin, proposed are a technique in which a mixture of a water-absorbent resin and pulp is heat-treated in the presence of a decomposer such as hydrogen peroxide to solubilize the water-absorbent resin (JP H04-317785 A), a technique in which ascorbic acid as a reducing agent is used under conditions of pH 4 to 7.5 to solubilize a water-absorbent resin (JP H05-247221 A), a technique in which a water-absorbent resin is solubilized by using a reducing agent and transition metal ions (JP 2019-131789 A), and a technique in which a water-absorbent resin is solubilized by heating in the presence of an oxidizing water-soluble salt (WO 2021/042113 A and WO 2022/183184 A).

Summary of Invention

However, the known techniques for decomposing and solubilizing a water-absorbent resin as described above require a long time to solubilize a water-absorbent resin, and have a problem from an economic viewpoint. As a method for shortening the time required for the solubilization treatment on a water-absorbent resin, a method of using a large amount of a decomposer agent has been proposed. However, the method has such a problem that not only the cost of the decomposer increases, but also the solubilized polymer is colored, and the water-absorbent resin produced using the solubilized polymer as a part of the raw material is colored.

As another method for shortening the time required for the solubilization treatment, a method using an oxidizing water-soluble salt (combination of hydrogen peroxide and persulfate) as a decomposer (WO 2021/042113 A) has been proposed. However, in this method, the remaining decomposer (hydrogen peroxide, persulfate) increases, and a problem such as destabilization of polymerization separately occurs when the solubilized polymer after decomposition is used as a part of the raw material of the water-absorbent resin.

The present invention has been made in view of the above circumstances, and an object thereof is to provide a means capable of solubilizing (decomposing) a recovered water-absorbent resin in a short time without using a large amount of decomposer. Another object of the present invention is to provide a means capable of stably producing a water-absorbent resin with less coloring when a water-absorbent resin is produced using a solubilized polymer as a part of the raw material.

The inventors of the present invention have intensively studied to solve the above problems. As a result, the inventors of the present invention have found that the above problems are solved by, when a recovered water-absorbent resin is solubilized (decomposed), preparing a mixture containing the recovered water-absorbent resin, water, and a peroxide (excluding persulfates) at specific mass ratios and setting the pH of the mixture within a specific range, and have completed the present invention.

That is, the above objects can be achieved by the present invention having the following configurations, and the present invention includes the following aspects and modes.

One aspect of the present invention provides the following:

[1] a method for producing a solubilized polymer by decomposing a recovered water-absorbent resin to produce a solubilized polymer, the method including preparing a mixture by mixing 100 parts by mass of a recovered water-absorbent resin, 66 parts by mass or more and 1900 parts by mass or less of water, and 0.1 parts by mass or more and 50 parts by mass or less of a peroxide (excluding persulfates), wherein the mixture has a pH of 6.5 or more and 8.5 or less;

[2] in the method for producing a solubilized polymer according to [1], the solubilized polymer preferably has a weight-average molecular weight of 10,000 or more and 1,000,000 or less;

[3] in the method for producing a solubilized polymer according to [1] or [2], the method preferably further includes heating the mixture to 50°C or higher and 130°C or lower;

[4] in the method for producing a solubilized polymer according to any one of [1] to [3], the mixture preferably further contains 0.01 parts by mass or more and 50 parts by mass or less of a reducing agent with respect to 100 parts by mass of the recovered water-absorbent resin;

[5] in the method for producing a solubilized polymer according to [4], the reducing agent preferably contains at least one selected from the group consisting of ascorbic acid (salt) and/or a derivative thereof, hydrogen sulfite (salt), and sulfurous acid (salt);

[6] in the method for producing a solubilized polymer according to any one of [1] to [5], the mixture preferably further contains $1.0 \times 10^{-6}$ mol or more and 1 mol or less of transition metal ions with respect to 100 parts by mass of the recovered water-absorbent resin;

[7] in the method for producing a solubilized polymer according to any one of [1] to [6], the method preferably further includes applying a shear force to the recovered water-absorbent resin before the recovered water-absorbent resin contained in the mixture is decomposed and/or during a period from a start to an end of decomposition of the recovered water-absorbent resin contained in the mixture, and pulverizing the recovered water-absorbent resin to reduce its particle size;

[8] in the method for producing a solubilized polymer according to [7], the recovered water-absorbent resin with a reduced particle size preferably has: a mass average particle size obtained in terms of dry matter of 20 μm or more and 160 μm or less; and/or a mass proportion of particles having a mass average particle size of 80 μm or less obtained in terms of dry matter of 40 mass% or more;

[9] in the method for producing a solubilized polymer according to any one of [1] to [8], the solubilized polymer preferably has a weight-average molecular weight (Mw) of 30,000 or more, and a content of remaining peroxide is preferably 1000 mass ppm or less with respect to a solid content of the solubilized polymer; and

[10] in the method for producing a solubilized polymer according to any one of [1] to [9], the recovered water-absorbent resin is preferably a used water-absorbent resin recovered from a used absorbent article.

Another aspect of the present invention provides the following:

[11] a method for producing a water-absorbent resin using the solubilized polymer as a part of a raw material, the method including, in one or more steps, adding the solubilized polymer produced by the method described in any one of [1] to [10] or an aqueous solution of the solubilized polymer;

[12] in the method for producing a water-absorbent resin according to [11], addition of the solubilized polymer or an aqueous solution of the solubilized polymer is preferably performed in a state where the solubilized polymer is heated; and

[13] in the method for producing a water-absorbent resin according to [12], a heating temperature of the solubilized polymer is preferably 50°C or higher.

Another aspect of the present invention is a method for producing an absorbent article using the water-absorbent resin produced by the method described in any one of [11] to [13].

Brief Description of Drawings

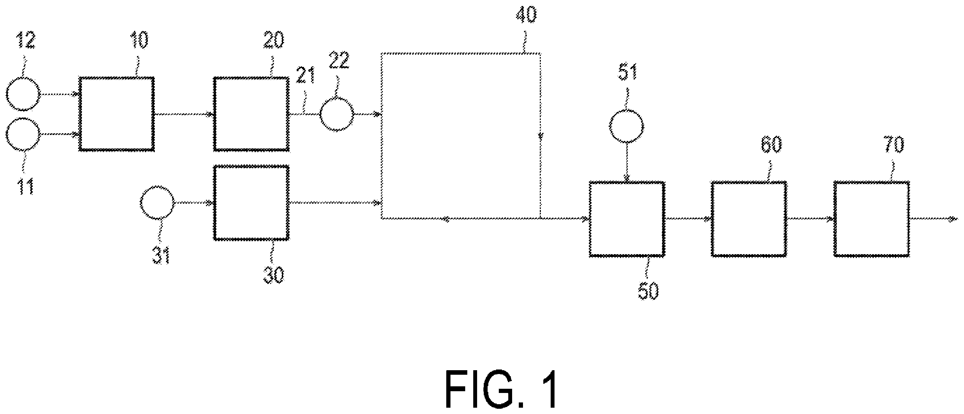

FIG. 1 is a schematic view illustrating a part of the process for producing a water-absorbent resin according to one embodiment of the present invention. In FIG. 1, 10 represents a solubilization reaction vessel, 11 and 12 represent pipes, 20 represents a storage vessel, 21 represents a pipeline, 22 represents a strainer, 30 represents a monomer mixing apparatus, 31 represents a pipe, 40 represents a Venturi tube, 50 represents a polymerization apparatus, 51 represents a pipe, 60 represents a gel pulverizer, and 70 represents a drying apparatus.

Description of Embodiments

One embodiment of the present invention provides a method for producing a solubilized polymer by decomposing a recovered water-absorbent resin to produce a solubilized polymer, the method including preparing a mixture by mixing 100 parts by mass of a recovered water-absorbent resin, 66 parts by mass or more and 1900 parts by mass or less of water, and 0.1 parts by mass or more and 50 parts by mass or less of a peroxide (excluding persulfates), wherein the mixture has a pH of 6.5 or more and 8.5 or less. Hereinafter, the method for producing a solubilized polymer having the above configuration is also referred to as "method for producing a solubilized polymer according to the present invention" or "solubilization method according to the present invention".

In the method for producing a solubilized polymer according to the present invention, a mixture containing a recovered water-absorbent resin, water, and a peroxide (excluding persulfates) in specific mass ratios and having a pH within a specific range is prepared. The inventors of the present invention surprisingly found that a recovered water-absorbent resin can be solubilized (decomposed) in a short time without using a large amount of decomposer (but with a small amount of decomposer) by preparing a mixture containing the recovered water-absorbent resin, water, and a peroxide (excluding persulfates) at specific mass ratios and having the specific pH.

Here, the mechanism of exhibiting the action and effect with the configuration of the present invention is presumed as follows.

In the method for producing a solubilized polymer according to the present invention, the pH of the mixture containing a recovered water-absorbent resin, water, and a peroxide (excluding persulfates) is adjusted to a range of 6.5 or more and 8.5 or less. This improves efficiency of radical generation from the peroxide, and the solubilization (decomposition) of the recovered water-absorbent resin sufficiently proceeds even with a small amount of decomposer (peroxide).

In contrast, when the pH of the mixture is less than 6.5, efficiency of radical generation from the peroxide is poor, and thus the solubilization (decomposition) of the recovered water-absorbent resin hardly proceeds. When the pH of the mixture is more than 8.5, efficiency of radical generation from the peroxide is poor, and thus the solubilization (decomposition) of the recovered water-absorbent resin hardly proceeds.

With the method for producing a solubilized polymer according to the present invention, the recovered water-absorbent resin can be solubilized (decomposed) by using a small amount of decomposer (peroxide), and thus a solubilized polymer with less coloring can be produced. As a result, coloring is suppressed also in a water-absorbent resin produced using the solubilized polymer as a part of the raw material.

Further, with the method for producing a solubilized polymer according to the present invention, the amount of the decomposer (peroxide) to be used is small, and thus destabilization of polymerization is suppressed when the resulting solubilized polymer is used as a part of the raw material of the water-absorbent resin.

Thus, according to the present invention, a recovered water-absorbent resin can be solubilized (decomposed) in a short time without using a large amount of decomposer. Further, according to the present invention, when a water-absorbent resin is produced by using the solubilized polymer as a part of the raw material, a water-absorbent resin with less coloring can be stably produced.

The mechanism described above is a presumption, and it does not limit the technical scope of the present invention at all.

Hereinafter, embodiments of the present invention will be described in detail. The present invention is not limited to the embodiments, and various modifications can be made within the described range, and embodiments obtained by appropriately combining technical means disclosed in different embodiments are also included in the technical scope of the present invention. The embodiments described in the present specification can be freely combined to form other embodiments. "A and/or B" means at least one of A and B, and means A, B, and a combination of A and B. Unless otherwise specified, operations and measurements of physical properties and the like are performed under conditions of room temperature (20°C or higher and 25°C or lower)/relative humidity of 40%RH or more and 50%RH or less. The term " ~acid (salt)" means "~acid and/or a salt thereof", and the term "(meth)acrylic" means "acrylic and/or methacrylic".

Throughout the present specification, the expression with a singular form is to be understood as including the concept of the plural form unless otherwise stated. Thus, the singular article (for example, "a", "an", "the", and the like in English) should be understood to include the plural concept thereof as well, unless otherwise stated. Also, the terms used herein are to be understood as being used in the sense commonly used in the art unless otherwise stated. Thus, unless defined otherwise, all technical and chemical terms used herein have the same meaning as commonly understood by one of ordinary skill in the art to which this invention belongs. When a contradiction arises, the present specification (including definitions) will take precedence. Dimensional ratios in the drawings are exaggerated for convenience of description, and may be different from actual ratios.

[1] Definition of Terms

[1-1] Water-absorbent resin

The "water-absorbent resin" is a water-swellable water-insoluble polymer gelling agent, and without any limitations, refers to a common water-absorbent resin having a water absorption ratio of 10 times or more and 1000 times or less. More specifically, the water-absorbent resin before absorbing a liquid to be absorbed (hereinafter, also referred to as "initial water-absorbent resin") preferably satisfies, as the "water swellability", a property in which CRC defined by ERT441.2-02 is 5 g/g or more. The definition and measurement method of CRC are as described in Examples.

The water-absorbent resin may be a polymer derived from an acid group-containing unsaturated monomer. In one preferred embodiment, the water-absorbent resin may be a polymer derived from a carboxyl group-containing unsaturated monomer. In this case, the water-absorbent resin may have a partially neutralized carboxyl group. Specific examples of the water-absorbent resin include a poly(meth)acrylic acid (salt)-based resin, a polysulfonic acid (salt)-based resin, a maleic anhydride (salt)-based resin, a polyacrylamide-based resin, a polyvinyl alcohol-based resin, a polyethylene oxide-based resin, a polyaspartic acid (salt)-based resin, a polyglutamic acid (salt)-based resin, a polyalginic acid (salt)-based resin, a starch-based resin, a cellulose-based resin, a (meth)acrylate cross-linked polymer, a saponified cross-linked product of a (meth)acrylate-vinyl acetate copolymer, a starch-acrylate graft polymer, and a cross-linked product thereof.

In the present specification, the "water-absorbent resin" is not limited to an embodiment in which the entire amount (100 mass%) consists of only the water-absorbent resin, and it may be a water-absorbent resin composition containing an additive or the like. The water-absorbent resin may contain a water-absorbent resin in a water-containing gel state.

[1-2] Poly(meth)acrylic acid (salt)

The "poly(meth)acrylic acid (salt)" in the present invention refers to a (co)polymer of (meth)acrylic acid and/or a salt thereof, and means a crosslinked polymer containing a structure derived from (meth)acrylic acid and/or a salt thereof (hereinafter, also referred to as "(meth)acrylic acid (salt)") as a repeating unit as a main component and containing a structure derived from an internal crosslinking agent as an optional component. The "main component" means that the amount (content) of (meth)acrylic acid (salt) used is preferably 50 mol% or more and 100 mol% or less, more preferably 70 mol% or more and 100 mol% or less, still more preferably 90 mol% or more and 100 mol% or less, and particularly preferably substantially 100 mol% with respect to the entire monomers (all monomers excluding the crosslinking agent) used for polymerization.

[1-3] Recovered water-absorbent resin

The "recovered water-absorbent resin" means a water-absorbent resin that should be originally discarded. Specifically, there is a water-absorbent resin contained in a used absorbent article (for example, a water-absorbent resin that has absorbed body fluids such as urine and blood in a used absorbent article).

From the viewpoint of environmental protection and the like, it is preferable to use the water-absorbent resin recovered (taken out and collected) from used absorbent articles. That is, in one embodiment of the present invention, the recovered water-absorbent resin is a used water-absorbent resin recovered from a used absorbent article.

Here, the "used absorbent article" refers to a used sanitary material that is used by a consumer and has absorbed body fluids such as urine and blood. Examples of the sanitary material include disposable diapers, sanitary napkins, adult incontinence products (incontinence pads), pet sheets, and pet diapers. The "used water-absorbent resin" includes a water-absorbent resin that has absorbed body fluids such as urine and blood in a used absorbent article. As the used water-absorbent resin, a waste water-absorbent resin generated in the process of producing a water-absorbent resin or a water-absorbent resin contained in an absorbent article discarded before use may be contained.

The recovered water-absorbent resin is not limited to an embodiment in which the total amount (100 mass%) consists of only the water-absorbent resin, but it may be a water-absorbent resin composition containing a fibrous material, a nonwoven fabric, an adhesive, an additive, and the like. When the recovered water-absorbent resin is a water-absorbent resin according to an embodiment in which the recovered water-absorbent resin is contained in a used absorbent article, the recovered water-absorbent resin may be in a state of a water-containing gel in which water such as urine water is incorporated. Thus, the water-absorbent resin may contain a water-absorbent resin in a water-containing gel state.

The mass of the water-absorbent resin and the recovered water-absorbent resin is a value in terms of solid content unless otherwise specified. For example, when the weight of the water-absorbent resin contained in a used paper diaper is unknown, the weight of the water-absorbent resin is determined using the weight of the water-absorbent resin contained in an unused paper diaper and a general value of the water absorption ratio of the water-absorbent resin in the used paper diaper, or assuming that the content (in terms of solid content) of the water-absorbent resin with respect to the total weight of the used paper diaper is 3 mass% or more and 9 mass% or less. Although the actual content of the water-absorbent resin may vary greatly depending on the usage state of the used paper diaper, those skilled in the art can appropriately adjust the decomposition conditions while checking the actual decomposition state.

[1-4] Absorbent article

The "absorbent article" is an article used for water absorption. More specifically, the "absorbent article" is an absorbent article including an absorber containing a water-absorbent resin and a fibrous material, a surface sheet having liquid permeability, and a back sheet having liquid impermeability. The absorber is suitably produced by blending a water-absorbent resin and a fibrous material, or sandwiching a water-absorbent resin with a fibrous material and molding the resulting material into a film shape, a cylindrical shape, a sheet shape, or the like. Examples of the fibrous material include hydrophilic fibers such as pulverized wood pulp, cotton linters, crosslinked cellulose fibers, rayon, cotton, wool, acetate, and vinylon.

[1-5] Solubilized polymer

The "solubilized polymer" is a polymer produced by decomposing a water-swellable (that is, insoluble in water) recovered water-absorbent resin, and can be solubilized in water. The solubilized polymer may be all solubilized in water, or may be a partially solubilized product containing a polymer that is not partially solubilized.

In the solubilization step described in detail below, it is preferable that 50 mass% or more, more preferably 60 mass% or more, still more preferably 70 mass% or more, still more preferably 80 mass% or more, still more preferably 90 mass% or more, and particularly preferably substantially 100 mass% of the recovered water-absorbent resin as the raw material be solubilized with respect to the total mass of the recovered water-absorbent resin as the raw material.

When no undissolved residue is seen in water and all the recovered water-absorbent resin is dissolved in water in appearance (when the presence of the interface between the recovered water-absorbent resin and water cannot be visually recognized in water), it is presumed that the water-absorbent resin is solubilized in water. When a partially undissolved swelling substance remains and is reduced compared to that before the solubilization treatment, it is presumed that the recovered water-absorbent resin is partially solubilized and a solubilized polymer is generated. Thus, even when a partially undissolved swelling substance remains in a solubilized polymer aqueous solution after solubilization (decomposition), it is referred to as a solubilized polymer aqueous solution (or dispersion). The resulting solubilized polymer may be used as it is in the form of an aqueous solution. Alternatively, the resulting solubilized polymer may be dried to form a solid, and then used in a solid state.

[1-6] EDANA, WSP, and NWSP

"EDANA" is an abbreviation for European Disposables and Nonwovens Associates, and "WSP" is an abbreviation for World Strategic Partners. EDANA WSP is a European and American standard (almost global standard) relating to a method for measuring physical properties of a water-absorbent resin. In the present invention, unless otherwise specified, the physical properties of the water-absorbent resin are measured in accordance with EDANA WSP original (revised in 2010/known literature).

"NWSP" stands for "Non-Woven Standard Procedures-Edition 2015".

[2] Method for Producing Solubilized Polymer by Decomposing (Solubilizing) Recovered Water-Absorbent Resin (Method for Producing Solubilized Polymer, Solubilization Method)

In one embodiment of the present invention, a method for producing a solubilized polymer by decomposing a recovered water-absorbent resin includes a step of preparing a mixture containing 100 parts by mass of the recovered water-absorbent resin, 66 parts by mass or more and 1900 parts by mass or less of water, and 0.1 parts by mass or more and 50 parts by mass or less of a peroxide (excluding persulfates), and at this time, adjusting the pH of the mixture to 6.5 or more and 8.5 or less to decompose (solubilize) the recovered water-absorbent resin contained in the mixture. That is, in one embodiment of the present invention, the method for producing a solubilized polymer includes a solubilization (decomposition) step of preparing the mixture having a pH in the range of 6.5 or more and 8.5 or less and containing the recovered water-absorbent resin, water, and a peroxide (excluding persulfates) in the mass ratios (mixture preparation step), and solubilizing the recovered water-absorbent resin using the peroxide as a decomposer.

[2-1] Solubilization (decomposition) step

In the solubilization (decomposition) step, a mixture containing 66 parts by mass or more and 1900 parts by mass or less of water and 0.1 parts by mass or more and 50 parts by mass or less of a peroxide (excluding persulfates) with respect to 100 parts by mass of the recovered water-absorbent resin (solid content) and having a pH of 6.5 or more and 8.5 or less is prepared. In this case, the method for preparing the mixture is not particularly limited, and the recovered water-absorbent resin, water, and the peroxide may be added to a reaction vessel all at once, or the recovered water-absorbent resin, water, and the peroxide may be sequentially added to a reaction vessel. From the viewpoint of workability, the former is preferable.

The recovered water-absorbent resin to be used in preparation of the mixture may be a gel (swollen gel, water-containing gel) of the recovered water-absorbent resin in a swollen state, or may be a recovered water-absorbent resin in a dry state. In one embodiment, the peroxide or an aqueous solution containing the peroxide may be added to the recovered water-absorbent resin in a dry state because the peroxide can be uniformly mixed with the recovered water-absorbent resin.

The "(recovered) water-absorbent resin in a dry state" in the present specification is a concept including a water-absorbent resin in a substantially dry state in which a content of water with respect to 100 parts by mass of the water-absorbent resin is 30 parts by mass or less in addition to a completely dried water-absorbent resin (the content of water with respect to 100 parts by mass of the water-absorbent resin (solid content) is 0 parts by mass).

(Recovered water-absorbent resin)

The mixture prepared in the solubilization step contains a recovered water-absorbent resin serving as a raw material of the solubilized polymer. The recovered water-absorbent resin is preferably a crosslinked polymer. More specifically, the recovered water-absorbent resin is preferably a crosslinked polymer having each of the monomers described in "(Acid group-containing unsaturated monomer)" in the following [3] and an internal crosslinking agent as constituent units. The definition of the "recovered water-absorbent resin" is as described above. In one embodiment, the recovered water-absorbent resin is preferably a crosslinked polymer containing a constituent unit derived from (meth) acrylic acid, and more preferably a crosslinked polymer containing a constituent unit derived from acrylic acid.

(Water)

The mixture prepared in the solubilization step contains water. Here, the water is not particularly limited as long as it is clean, and examples thereof include tap water, industrial water, ion-exchanged water, and pure water. In the solubilization method according to the present invention, a mixing ratio between water and the recovered water-absorbent resin as the raw material is such that the amount (mixing amount) of water is 66 parts by mass or more and 1900 parts by mass or less with respect to 100 parts by mass of the recovered water-absorbent resin (solid content). The content of water in the mixture is more preferably 80 parts by mass or more and 1500 parts by mass or less, still more preferably 500 parts by mass or more and 1400 parts by mass or less, and particularly preferably 600 parts by mass or more and 1200 parts by mass or less, with respect to 100 parts by mass of the recovered water-absorbent resin (solid content). In another embodiment, the content of water in the mixture may be 100 parts by mass or more and 900 parts by mass or less with respect to 100 parts by mass of the recovered water-absorbent resin (solid content). When the content of water with respect to 100 parts by mass of the recovered water-absorbent resin (solid content) in the mixture is less than 66 parts by mass, the flowability of the water-absorbent resin may be poor, leading to lowering of the degradability. When the content of water is more than 1900 parts by mass, the concentration of the resulting solubilized polymer becomes low, leading to an increase in production cost. When the recovered water-absorbent resin is in a water-containing gel state, for example when the recovered water-absorbent resin as the raw material is contained in a used absorbent article, moisture absorbed in the recovered water-absorbent resin (contained in the recovered water-absorbent resin) may be used as it is. In this case, the total amount of the moisture and water to be added at the time of preparing the mixture is taken as the content of water in the mixture.

(Peroxide (decomposer))

The mixture prepared in the solubilization step contains a peroxide (excluding persulfates) as a decomposer. Here, examples of the peroxide include hydrogen peroxide, an alkyl hydroperoxide, and a peroxyester, and do not include persulfates such as potassium persulfate, sodium persulfate, and ammonium persulfate. As the peroxide, one of the above-described exemplary compounds may be used alone, or two or more thereof may be used in combination. When two or more of peroxides are used, the content of the peroxide in the mixture refers to the total amount.

From the viewpoint of further promoting solubilization (decomposition), hydrogen peroxide is preferably used as the peroxide. In a further preferred embodiment, the decomposer is preferably substantially composed only of hydrogen peroxide. Here, "substantially composed only of hydrogen peroxide" means that the decomposer does not contain any peroxide other than hydrogen peroxide, or even when the decomposer contains a peroxide other than hydrogen peroxide, the concentration of the peroxide other than hydrogen peroxide in the mixture is, for example, 0.05 mass% or less, preferably 0.01 mass% or less, and most preferably 0 mass%, that is, most preferably the decomposer does not contain any peroxide other than hydrogen peroxide.

In the solubilization method according to the present invention, the mixing ratio between the peroxide and the recovered water-absorbent resin as the raw material is such that the mixing amount of the peroxide is 0.1 parts by mass or more and 50 parts by mass or less with respect to 100 parts by mass of the recovered water-absorbent resin (solid content). The content of the peroxide in the mixture is more preferably 0.3 parts by mass or more and 30 parts by mass or less, still more preferably 0.5 parts by mass or more and 20 parts by mass or less, still more preferably 0.8 parts by mass or more and 10 parts by mass or less, and particularly preferably 1 part by mass or more and 5 parts by mass or less, with respect to 100 parts by mass of the recovered water-absorbent resin (solid content). When the content of the peroxide with respect to 100 parts by mass of the recovered water-absorbent resin (solid content) in the mixture is less than 0.1 parts by mass, the degradability may be lowered. When the content of the peroxide is more than 50 parts by mass, the solubilized polymer may be colored.

(pH of mixture)

The mixture prepared in the solubilization step has a pH in the range of 6.5 or more and 8.5 or less. Among the components of the mixture, the recovered water-absorbent resin is not completely dissolved in water (homogeneous solution), and a solid content remains in the mixture. Thus, the pH of the mixture is measured using a pH test paper.
The pH of the mixture is preferably 7.0 or more and 8.5 or less, more preferably more than 7.0 and 8.5 or less, still more preferably 7.5 or more and 8.5 or less, still more preferably 8.0 or more and 8.5 or less, and particularly preferably more than 8.0 and less than 8.5. In another embodiment, the pH of the mixture may be 6.5 or more and 8.3 or less, 6.5 or more and 8.0 or less, 6.5 or more and 7.5 or less, or more than 6.5 and less than 7.0. When the pH of the mixture is less than 6.5 or more than 8.5, the degradability of the recovered water-absorbent resin is lowered, and the solubilization (decomposition) treatment may take a long time, or the solubilized polymer may be colored.
The pH of the mixture can be adjusted by adding a pH adjuster such as an acid or a base to the mixture as necessary. Examples of the acid that can be used as the pH adjuster include, but are not particularly limited to, inorganic acids such as hydrochloric acid, sulfuric acid, nitric acid, and phosphoric acid; and organic acids such as acetic acid and citric acid. Examples of the base that can be used as the pH adjuster include, but are not particularly limited to, bases such as sodium hydroxide, sodium carbonate, potassium hydroxide, and magnesium hydroxide. One of the pH adjusters may be used alone, or two or more thereof may be used in combination.
The pH adjuster may be added in an amount such that the pH of the mixture falls in the above range. Here, the method for adding the pH adjuster to the mixture is not particularly limited, and the pH adjuster may be added to a reaction vessel at once together with the recovered water-absorbent resin, water, and the peroxide, or may be added separately after the recovered water-absorbent resin, water, and the peroxide are mixed in the reaction vessel. From the viewpoint of workability, the former is preferable.
The pH of the mixture may be adjusted within the above range at the time of preparing the mixture (after mixing each component). However, from the viewpoint of decomposition efficiency, the pH of the mixture is preferably adjusted to fall within the above range for a certain period of time (for example, about 1 hour) at which decomposition (solubilization) of the recovered water-absorbent resin sufficiently proceeds, and more preferably adjusted to fall within the above range from the start of decomposition (solubilization) to the end of decomposition (solubilization). In the above description, the "period from the start of decomposition (solubilization) to the end of decomposition (solubilization)" refers to, as an example, a period from the start to the end of heating of the mixture. Heating conditions at this time are as follows.

(Reducing agent)

In one embodiment of the present invention, the mixture may further contain a reducing agent. The reducing agent is a compound having reducibility, and is a compound that generates a radical when used in combination with the peroxide. When the mixture further contains a reducing agent, the content of the reducing agent in the mixture is not particularly limited, but the content is preferably 0.01 parts by mass or more and 50 parts by mass or less, more preferably 0.05 parts by mass or more and 25 parts by mass or less, and still more preferably 0.1 parts by mass or more and 5 parts by mass or less with respect to 100 parts by mass of the recovered water-absorbent resin (solid content). For the mixture containing a reducing agent, when the content of the reducing agent is set within the above range, the degradability is further improved, and the coloring of the solubilized polymer can be more effectively suppressed.
Examples of such a reducing agent include sulfurous acid (salt), hydrogen sulfite (salt), phosphorous acid (salt), hypophosphorous acid (salt), thiosulfuric acid (salt), formic acid, oxalic acid, erythorbic acid, amine, ascorbic acid (salt) or a derivative thereof (for example, L-ascorbic acid (salt), isoascorbic acid (salt), and alkyl ester of ascorbic acid), phosphoric ester, and sulfuric ester. When a reducing agent is used, the reducing agent is preferably at least one selected from the group consisting of sulfurous acid (salt), hydrogen sulfite (salt), and ascorbic acid (salt) and/or a derivative thereof. The reducing agent is more preferably at least one selected from the group consisting of sulfurous acid (salt), hydrogen sulfite (salt), L-ascorbic acid (salt), and isoascorbic acid (salt). One of these reducing agents may be used alone, or two or more thereof may be used in combination. When two or more reducing agents are used, the content of the reducing agent in the mixture refers to the total amount.

(Transition metal ion)

In one embodiment of the present invention, the mixture may further contain a transition metal ion. The transition metal ion is used in combination with the peroxide to generate radicals through the Fenton reaction. The transition metal ion is used in combination with the above-described reducing agent to generate radicals. When the mixture further contains a transition metal ion, the content of the transition metal ion in the mixture is not particularly limited, but the content is preferably $1 \times 10^{-6}$ mol or more and 1 mol or less, more preferably $1 \times 10^{-6}$ mol or more and 0.5 mol or less, and still more preferably $1 \times 10^{-6}$ mol or more and 0.1 mol or less with respect to 100 parts by mass of the recovered water-absorbent resin (solid content). When the mixture contains a transition metal ion, the degradability is further improved by setting the content of the transition metal ion within the above range, and the coloring of the solubilized polymer can be more effectively suppressed.

Examples of such a transition metal ion include $Cu^{2+}$, $Ag^+$, $Fe^{2+}$, $Fe^{3+}$, $Al^{3+}$, $Ni^{2+}$, and $Mn^{2+}$. An iron ion ($Fe^{2+}$) and a copper ion ($Cu^{2+}$) are preferable, and an iron ion ($Fe^{2+}$) is most preferable. Examples of the compound that generates the transition metal ion include chlorides and hydrates thereof, such as ferrous chloride: organic acid salts and hydrates thereof, such as ferrous fumarate, ferrous oxalate, ferrous chloride, sodium ferrous citrate, ferrous gluconate, ferrous citrate, and ferrous acetate: sulfates and hydrates thereof, such as ferrous sulfate. One of these exemplified substances may be used alone, or two or more thereof may be used in combination. When two or more transition metal ions are contained, the content of transition metal ions in the mixture refers to the total amount.

(Preferred form of mixture)

In one embodiment of the present invention, the mixture prepared in the method for producing a solubilized polymer is substantially composed of at least one selected from the group consisting of a recovered water-absorbent resin, water, a peroxide (excluding persulfates), a pH adjuster, a reducing agent, and a salt containing a transition metal ion (excluding persulfates). In one embodiment of the present invention, the mixture is substantially composed of the recovered water-absorbent resin, water, a peroxide (excluding persulfates), and a pH adjuster. In one embodiment of the present invention, the mixture is substantially composed of the recovered water-absorbent resin, water, hydrogen peroxide, and a pH adjuster.

In the above form, "the mixture is substantially composed of X" means that the total content of X exceeds 99 mass% (upper limit: 100 mass%) with respect to 100 mass% of the total mass of the mixture (with respect to the mixture). Preferably, the mixture is composed of X (total content of the respective components = 100 mass%). For example, "the mixture is substantially composed of at least one selected from the group consisting of the recovered water-absorbent resin, water, and a peroxide (excluding persulfates), a pH adjuster, a reducing agent, and a salt containing a transition metal ion (excluding persulfates)" means that the total content of the recovered water-absorbent resin, water, a peroxide (excluding persulfates), a pH adjuster, a reducing agent, and a salt containing a transition metal ion (excluding persulfates) exceeds 99 mass% (upper limit: 100 mass%) with respect to 100 mass% of the total mass of the mixture (with respect to the mixture). It is preferable that the mixture be composed of at least one selected from the group consisting of the recovered water-absorbent resin, water, a peroxide (excluding persulfates), a pH adjuster, a reducing agent, and a salt containing a transition metal ion (excluding persulfates) (the total content of the respective components = 100 mass%). The mixture is more preferably composed of the recovered water-absorbent resin, water, a peroxide (excluding persulfates), and a pH adjuster. Further, it is particularly preferable that the mixture be composed of the recovered water-absorbent resin, water, hydrogen peroxide and a pH adjuster.

In another embodiment of the present invention, the mixture is preferably substantially free of an oxidizing water-soluble salt containing at least one cation and at least one anion. Here, "the mixture is substantially free of an oxidizing water-soluble salt" means that the oxidizing water-soluble salt is not contained in the mixture at least intentionally. Thus, a mixture inevitably containing a trace amount of an oxidizing water-soluble salt derived from the raw materials, the production method, and the like can be included in the concept of the mixture substantially free of an oxidizing water-soluble salt as used herein. For example, the concentration of the oxidizing water-soluble salt in the mixture may be 0.05 mass% or less, preferably 0.01 mass% or less, and most preferably 0 mass%, that is, it is most preferable that the mixture not contain an oxidizing water-soluble salt at all. At this time, the at least one cation may be selected from the group consisting of $Li^+$, $Na^+$, $K^+$, $Rb^+$, $Cs^+$, $NH_4^+$, organic substituted ammonium, $Ca^{2+}$, $Mg^{2+}$, $Sr^{2+}$, $Ba^{2+}$, $Al^{3+}$, transition metal cations in oxidation states of 1+ to 3+, and mixtures and combinations thereof. The at least one anion may be selected from the group consisting of peroxydisulfate, peroxymonosulfate, peroxydicarbonate, peroxydiphosphate, peroxydiborate, and mixtures and combinations thereof.

(Solubilization (decomposition) temperature)

In the method for producing a solubilized polymer according to the present invention, it is preferable to heat the mixture, because good decomposition efficiency (time and energy) and molecular weight control after decomposition are achieved. That is, in a preferred embodiment, the method for producing a solubilized polymer according to the present invention further includes, in the solubilization step, heating the mixture (heating step) after preparing the mixture (mixture preparation step).

In one embodiment of the present invention, the temperature at which the recovered water-absorbent resin is decomposed (the temperature of the mixture at the time of solubilization) is not particularly limited as long as a sufficient decomposition rate can be achieved, but it is preferably 50°C or higher and 130°C or lower. That is, the method for producing a solubilized polymer according to the present invention preferably further includes heating the mixture to 50°C or higher and 130°C or lower. When the temperature of the mixture is set to 50°C or higher, the amount of radicals generated from the peroxide is increased, the recovered water-absorbent resin can be more efficiently solubilized, and the time required to produce a solubilized polymer can be shortened. In addition, a solubilized polymer having excellent physical properties can be provided. On the other hand, when the temperature of the mixture is set to 130°C or lower, it is possible to prevent the generated radicals from being deactivated before the recovered water-absorbent resin is decomposed. Thus, the recovered water-absorbent resin can be solubilized more efficiently.

From the above viewpoint, the temperature at which the recovered water-absorbent resin is decomposed (the temperature of the mixture at the time of solubilization) is more preferably 65°C or higher and 120°C or lower, still more preferably 80°C or higher and 110°C or lower, particularly preferably 85°C or higher and 105°C or lower.

The method for adjusting the decomposition temperature (solubilization temperature) is not particularly limited, and examples of the method include a method in which the respective components are mixed at room temperature (for example, 20°C or higher and 25°C or lower), and then the resulting mixture is heated to a predetermined temperature. For example, a method in which a mixture is prepared at room temperature and then a container filled with the mixture is immersed in a known temperature adjusting means, such as an oil bath, adjusted to a predetermined temperature may be adopted. The means for heating the mixture to a predetermined temperature is not particularly limited, and a known heating apparatus such as a steam jacket can be used. Alternatively, a method in which the recovered water-absorbent resin, water, and the like that have been heated to a predetermined temperature in advance is mixed, and the temperature during the decomposition (solubilization) treatment is maintained, or the like may be exemplified.

(Solubilization (decomposition) time)

The solubilization step is preferably performed by heating the mixture so that the temperature of the mixture falls within the preferable range, and maintaining the temperature for a predetermined time or longer. In this case, the heating time can be appropriately determined depending on the type and amount of the peroxide, and is usually 10 minutes or more, preferably 10 minutes or more and 240 minutes or less, more preferably 15 minutes or more and 120 minutes or less, and particularly preferably 20 minutes or more and 100 minutes or less.

[2-2] Particle size reduction of water-absorbent resin with shear force (particle size reduction step)

In one embodiment of the present invention, the recovered water-absorbent resin contained in the mixture is preferably reduced in particle size through pulverization. That is, the method for producing a solubilized polymer according to the present invention preferably further includes applying a shear force to the recovered water-absorbent resin to pulverize the recovered water-absorbent resin and reduce the particle size (particle size reduction step).

When the particle size of the recovered water-absorbent resin is reduced, the surface area of the recovered water-absorbent resin is increased, and the solubilization treatment can be efficiently performed. As a result, the time required to produce the solubilized polymer can be shortened while the amount of the peroxide used as the decomposer is lowered. In addition, when the particle size reduction step is performed, decomposition proceeds more uniformly in the interior and on the surface of the recovered water-absorbent resin particles in the solubilization step. As a result, the molecular weight of the resulting solubilized polymer can be easily controlled. Thus, it is possible to provide a solubilized polymer suitable not only for the purpose of simply decomposing and discarding the recovered water-absorbent resin but also as a raw material of a water-absorbent resin for product use.

The time at which the particle size reduction step is performed is not particularly limited, but in one embodiment, it is preferable that a shear force be applied to the recovered water-absorbent resin before the recovered water-absorbent resin contained in the mixture is decomposed and/or during the period from the start to the end of decomposition of the recovered water-absorbent resin contained in the mixture, and the recovered water-absorbent resin be pulverized to reduce the particle size. That is, the particle size reduction step is preferably performed before the decomposition (solubilization) step or simultaneously with the decomposition (solubilization) step. In the above description, "from the start to the end of decomposition of the recovered water-absorbent resin contained in the mixture" refers, as an example, to a period from the start to the end of heating of the mixture. The heating conditions at this time are as described above.

When the particle size reduction step is performed simultaneously with the solubilization step, for example, the particle size reduction treatment can be performed on the recovered water-absorbent resin to which the peroxide has been added. The particle size reduction step is preferably performed before the solubilization step because the recovered water-absorbent resin can be efficiently solubilized.

The particle size of the recovered water-absorbent resin may be reduced for either the recovered water-absorbent resin in a dry state or the recovered water-absorbent resin in a water-containing state (water-containing gel of the recovered water-absorbent resin).

In one embodiment, when the recovered water-absorbent resin to be subjected to the particle size reduction step is in a powder state, it is preferable to reduce the particle size of the recovered water-absorbent resin in a dry state in the particle size reduction step. Such an embodiment has an advantage of high pulverization efficiency.

In another embodiment, when the recovered water-absorbent resin to be subjected to the particle size reduction step is a water-containing gel, the water-absorbent resin may be pulverized after being dried to a powder, or may be pulverized in a water-containing gel state in the particle size reduction step. In consideration of drying energy and time and effort to form a water-containing gel (in particular, a water-containing gel containing a decomposer) again after the recovered water-absorbent resin is pulverized, it may be preferable to pulverize the resin in a water-containing gel state.

(Apparatus used for particle size reduction)

There is no particular limitation on the apparatus (crushing apparatus, pulverizing apparatus) used when a shear force is applied to the recovered water-absorbent resin to reduce the particle size. When the recovered water-absorbent resin is in a dry state, a jaw crusher, a cone crusher, an impact crusher, a roll crusher, an autogenous crusher, a stamp mill, a stone mill type crusher, a mortar mill, a ring mill, a roller mill, a jet mill, a pin mill, a vibration mill, a planetary mill, a bead mill, an attritor, a hammer mill, a cutter mill or the like can be used.

When the recovered water-absorbent resin is in a water-containing state (water-containing gel), a gel grinder equipped with a plurality of rotary stirring blades such as a batch-type or continuous-type double-arm kneader, a single-screw extruder, a twin-screw extruder, a meat chopper, a disper, a homomixer, a colloid mill, a roll mill, a high-pressure jet disperser, a rotary mill, a vibration mill, a planetary mill, an attritor, a bead mill or the like can be used.

The primary particles or secondary particles of the recovered water-absorbent resin can be reduced in particle size using the pulverizing apparatus.

(Mass average particle size of recovered water-absorbent resin)

The particle size of the recovered water-absorbent resin reduced in particle size in the particle size reduction step is not particularly limited.

In one embodiment, the recovered water-absorbent resin reduced in particle size in the particle size reduction step preferably satisfies at least one of "(i) the mass average particle size (solid D50) obtained in terms of dry matter is 20 $\mu$m or more and 160 $\mu$m or less" and "(ii) the mass proportion of the particle segment having a mass average particle size of 80 $\mu$m or less obtained in terms of dry matter is 40 mass% or more". That is, the recovered water-absorbent resin reduced in particle size preferably satisfies (i) and/or (ii) described above. Further, the recovered water-absorbent resin reduced in particle size preferably satisfies at least the above (i), and more preferably satisfies both the above (i) and (ii).

The mass average particle size (Solid D50) obtained in terms of dry matter is preferably 20 $\mu$m or more and 160 $\mu$m or less, and in view of the balance between the energy and time required for reducing the particle size and the effect of reducing the particle size, more preferably 30 $\mu$m or more and 120 $\mu$m or less, still more preferably 40 $\mu$m or more and 80 $\mu$m or less, and particularly preferably 45 $\mu$m or more and 60 $\mu$m or less. The mass proportion of the particles (particle segment) having a mass average particle size of 80 $\mu$m or less obtained in terms of dry matter is preferably 40 mass% or more, more preferably 50 mass% or more, and still more preferably 60 mass% or more. The upper limit of the mass proportion of the particles (particle segment) having a mass average particle size of 80 $\mu$m or less obtained in terms of dry matter is not particularly limited, but, for example, 90 mass% or less in view of the balance between the energy and time required for reducing the particle size and the effect of reducing the particle size.

Here, "the mass average particle size (Solid D50) obtained in terms of dry matter" refers to "the mass average particle size (Solid D50) of the water-containing gel particles of the recovered water-absorbent resin obtained in terms of dry matter (solid content 100 mass%)", and it can be derived from [mass average particle size (Gel D50) of water-containing gel particles] $\times$ [(solid content concentration (mass%) of water-containing gel particles)/100)$^{1/3}$]. In the formula, "solid content concentration (mass%) of water-containing gel particles" is a value calculated based on a loss on drying when a sample (recovered water-absorbent resin) is dried at 180°C for 3 hours.

When the mass average particle size is 160 $\mu$m or less, the effect of shortening the time required to produce a solubilized polymer is more easily achieved. On the other hand, when the mass average particle size is 20 μm or more, the energy required for pulverization does not become excessive, which is preferable.

When the mass proportion of particles having a mass average particle size of 80 μm or less obtained in terms of dry matter is 40 mass% or more, the effect of shortening the time required to produce a solubilized polymer can be sufficiently achieved.

In the particle size reduction step, primary particles or secondary particles (aggregates of primary particles or granules) of the recovered water-absorbent resin may be reduced in particle size within the above range. The particle size reduction of the recovered water-absorbent resin can be performed by any one of pulverization of primary particles, destruction of aggregation of secondary particles or granulation, and pulverization of primary particles and destruction of secondary particles into primary particles. By reducing the particle size of the recovered water-absorbent resin in this manner, permeation of the peroxide into the recovered water-absorbent resin particles and permeation of heat or light having a decomposing action into the recovered water-absorbent resin particles can be promoted. As a result, the recovered water-absorbent resin can be solubilized (decomposed) in a short time without using a large amount of a peroxide, and coloring of the resulting solubilized polymer can be further reduced. In addition, the molecular weight of the solubilized polymer after solubilization (decomposition) also tends to be uniform by undergoing the particle size reduction step.

For the recovered water-absorbent resin to be subjected to the particle size reduction step (before the particle size reduction step), the mass average particle size (Solid D50) obtained in terms of dry matter is not particularly limited and can be appropriately selected. The mass average particle size of the recovered water-absorbent resin to be subjected to the particle size reduction step may usually be more than 160 μm. The mass average particle size is preferably 200 μm or more and 800 μm or less, more preferably 250 μm or more and 700 μm or less, and particularly preferably 300 μm or more and 600 μm or less. In the recovered water-absorbent resin to be subjected to the particle size reduction step, the mass proportion of particles (particle segment) having a mass average particle size of more than 160 μm may be 50 mass% or more, 60 mass% or more, or 70 mass% or more. The upper limit thereof is not particularly limited, but is, for example, 90 mass% or less.

When the recovered water-absorbent resin is subjected to the solubilization step without being subjected to the particle size reduction step, the mass average particle size (Solid D50) of the recovered water-absorbent resin obtained in terms of dry matter may be within the above range. In this case, the mass average particle size (Solid D50) of the recovered water-absorbent resin is preferably 200 μm or more and 800 μm or less, more preferably 250 μm or more and 700 μm or less, particularly preferably 300 μm or more and 600 μm or less, and most preferably 350 μm or more and 450 μm or less. In another embodiment, the mass average particle size (Solid D50) of the recovered water-absorbent resin may be 20 μm or more and 160 μm or less, 30 μm or more and 120 μm or less, 40 μm or more and 80 μm or less, or 45 μm or more and 60 μm or less.

From the viewpoint of more efficiently and homogeneously solubilizing the recovered water-absorbent resin, in the particle size reduction step, the mass average particle size obtained in terms of dry matter of the recovered water-absorbent resin subjected to the step is preferably reduced by 10% or more, more preferably reduced by 20% or more, still more preferably reduced by 50% or more, particularly preferably reduced by 75% or more, and most preferably reduced by 80% or more. The upper limit of the reduction rate of the mass average particle size in the particle size reduction step is not particularly limited, but is about 95%. That is, for the mass average particle size obtained in terms of dry matter of the recovered water-absorbent resin, the ratio of the mass average particle size after the particle size reduction step to the mass average particle size before the particle size reduction step (after the particle size reduction step/before the particle size reduction step) is preferably 9/10 or less (90% or less), more preferably 8/10 (80% or less) or less, still more preferably 1/2 or less (50% or less), particularly preferably 1/4 or less (25% or less), and most preferably 1/5 or less (20% or less). The lower limit of the ratio of the mass average particle size (after the particle size reduction step/before the particle size reduction step) is not particularly limited, but is about 5%. When the particle size reduction step is performed on powder of the recovered water-absorbent resin, the mass average particle size or particle size distribution obtained in terms of dry matter may be calculated from the mass average particle size of the water-containing gel of the recovered water-absorbent resin as the mass average particle size obtained in terms of dry matter of the recovered water-absorbent resin, but the particle size (mass average particle size) in terms of dry matter of the water-containing gel is substantially the same as the particle size (mass average particle size) of the recovered water-absorbent resin powder before swelling, and it may be substituted by measuring the particle size (mass average particle size) of the recovered water-absorbent resin powder.

[2-3] Peroxide removal (lowering the amount of peroxide) step

The peroxide may remain in the solubilized polymer (mixture, preferably, an aqueous solution of the solubilized polymer) produced in the solubilization step. From the viewpoint of using the solubilized polymer as a raw material of the water-absorbent resin (particularly for product use), it is preferable to perform a treatment of removing the peroxide contained in the mixture after the decomposition reaction of the recovered water-absorbent resin is completed (that is, after the solubilization step). That is, the method for producing a solubilized polymer according to the present invention preferably further includes removing the peroxide remaining in the solubilized polymer (a mixture produced in the solubilization step, preferably, an aqueous solution of the solubilized polymer) after the solubilization step (peroxide removal (lowering the amount of peroxide) step).

The peroxide remaining in the mixture containing the solubilized polymer produced in the solubilization step (preferably, an aqueous solution of the solubilized polymer) may bring about a further change in performance or molecular weight of the solubilized polymer after decomposition. In addition, the peroxide may cause destabilization of polymerization when the solubilized polymer is used as a part of the raw material of the water-absorbent resin. Thus, from the viewpoint of providing a more homogeneous water-absorbent resin, it is preferable to perform the peroxide removal step after the solubilization step. A specific method of the peroxide removal step will be described in the following "(Method for removing (lowering the amount of) remaining peroxide)".

(Remaining peroxide amount)

The amount of the peroxide remaining in the aqueous solution of the solubilized polymer after the peroxide removal (lowering the amount of the peroxide) step (mass; in the present specification, it is also referred to as "remaining peroxide amount") is preferably as small as possible. Specifically, the amount is preferably 1000 mass ppm or less, more preferably 800 mass ppm or less, still more preferably 600 mass ppm or less, still more preferably 400 mass ppm or less, still more preferably 200 mass ppm or less, still more preferably 100 mass ppm or less, still more preferably 50 mass ppm or less, still more preferably 30 mass ppm or less, and particularly preferably 15 mass ppm or less (lower limit: 0 mass ppm) with respect to the solubilized polymer solid content. The "remaining peroxide amount" is a value measured by the method described in Examples. It is preferable that the "peroxide" in the "remaining peroxide amount" not contain persulfate.

(Method for removing (lowering the amount of) remaining peroxide)

The remaining peroxide amount can be appropriately adjusted by the type of peroxide, solubilization (decomposition) conditions (temperature, time, concentration, pH, and the like), addition of a substance capable of decomposing peroxide, and the like.

Specifically, examples of the method for lowering the amount of the remaining peroxide include a method of aging the solubilized polymer after the solubilization step for a certain period of time or more, further at a certain temperature for a certain period of time or more (aging after the solubilization treatment); and a method of decomposing the remaining peroxide by adding a peroxide decomposer (preferably, an acid (acidic substance) or an alkali (basic substance)) after the solubilization step and performing stirring treatment for a certain period of time. Here, the solubilization step (treatment) of the recovered water-absorbent resin and the removal (lowering the amount) step (treatment) of the remaining peroxide are the solubilization step (treatment) when the solubilization of the recovered water-absorbent resin mainly proceeds, and are the removal (lowering the amount) treatment of the remaining peroxide when the reduction and/or decomposition of the remaining peroxide mainly proceeds after the solubilization step (treatment). When the solubilization step (treatment) and the remaining peroxide removal (lowering the amount of the peroxide) step (treatment) are performed in different apparatuses (reactors), for example, when the solubilization step (treatment) is performed in one apparatus and then the remaining peroxide is removed (the amount of the peroxide is lowered) in another apparatus or storage vessel, the two steps can be clearly distinguished from each other.

From the viewpoint of reliably removing the peroxide and easily controlling the amount of the remaining peroxide, the removal (lowering the amount) of the remaining peroxide is preferably performed by adding a peroxide decomposer (preferably, an acid (acidic substance) or an alkali (basic substance)).

Examples of the acid (acidic substance) that may be used here include inorganic acids such as hydrochloric acid, sulfuric acid, and phosphoric acid; and organic carboxylic acids such as acetic acid, malic acid, and citric acid. Examples of the alkali (basic substance) include carbonate (hydrogen carbonate) salts of alkali metals such as lithium carbonate, sodium carbonate, potassium carbonate, lithium hydrogen carbonate, sodium hydrogen carbonate, and potassium hydrogen carbonate; carbonate (hydrogen carbonate) salts of alkaline earth metals such as calcium carbonate, magnesium carbonate, calcium hydrogen carbonate, and magnesium hydrogen carbonate; hydroxides of alkali metals such as lithium hydroxide, sodium hydroxide, and potassium hydroxide; hydroxides of alkaline earth metals such as magnesium hydroxide and calcium hydroxide. One of the above-described exemplary compounds may be used alone, or two or more thereof may be used in combination. When two or more of peroxide decomposers are used, the use amount of the decomposer refers to the total amount. Among them, as the peroxide decomposer, an alkali (basic substance) is preferably used, a carbonate (hydrogen carbonate) salt of an alkali metal and/or a hydroxide of an alkali metal is more preferably used, and a carbonate (hydrogen carbonate) salt of sodium and/or a hydroxide is particularly preferably used.

The type and amount (addition amount) of the acid (acidic substance) or the alkali (basic substance) are appropriately determined depending on the type and amount of the remaining peroxide, and as an example, the amount is preferably 0.001 mass% or more and 100 mass% or less, more preferably 0.01 mass% or more and 50 mass% or less, still more preferably 0.1 mass% or more and 25 mass% or less, and particularly preferably 1 mass% or more and 15 mass% or less with respect to 100 mass% of the total mass of the solubilized polymer.

The temperature at which the peroxide is removed (decomposed) is not particularly limited, and the peroxide may be removed at room temperature (for example, 20°C or higher and 25°C or lower), or the peroxide may be heated to a predetermined temperature. From the viewpoint of further suppressing coloring of the solubilized polymer, the removal is preferably performed at room temperature.

The time required for the removal (decomposition) treatment of the peroxide is not particularly limited as long as the decomposition of the peroxide sufficiently proceeds, but as an example, the time is preferably 15 minutes or more and 10 hours or less, more preferably 30 minutes or more and 5 hours or less, and particularly preferably 2 hours or more and 4 hours or less.

(Peroxide lowering rate after peroxide removal step)

The peroxide after the peroxide removal step is preferably consumed in an amount of 50 mass% or more, more preferably 60 mass% or more, still more preferably 70 mass% or more, still more preferably 80 mass% or more, particularly preferably 90 mass% or more, and most preferably 95 mass% or more (upper limit: 100 mass%) with respect to 100 mass% of the used amount (total mass added at the time of preparing the mixture).

That is, the peroxide lowering rate calculated from the following formula is preferably in the above range:

Peroxide lowering rate (mass%) = {1 - (mass of peroxide remaining in aqueous solution of solubilized polymer)/(mass of peroxide used (added) in solubilization step)} $\times$ 100.

[2-4] Apparatus for producing solubilized polymer

The apparatus to be used in the method for producing a solubilized polymer according to the present invention is not particularly limited as long as it is an apparatus (production apparatus) capable of decomposing a recovered water-absorbent resin while constantly maintaining desired decomposition conditions. Examples of such an apparatus include a tank-type decomposition apparatus, a decomposition apparatus equipped with a stirrer, and a multi-screw decomposition apparatus.

The inner wall surface of the decomposition apparatus is preferably made of a corrosion-resistant (acid resistance, alkali resistance) material from the viewpoint of reducing the maintenance frequency of the apparatus and maintaining the performance. Examples of such a corrosion-resistant material include stainless steel, Hastelloy steel, titanium steel, glass-lined steel, resin-lined steel, and metal spray coated steel. Examples of the stainless steel include austenitic stainless steels such as SUS304, SUS304L, SUS304LN, SUS312L, SUS316, SUS316L, SUS316N, SUS316LN, SUS317, SUS317N, and SUS317LN; ferritic stainless steel such as SUS430, SUS430F, SUS434, and SUS444; and martensitic stainless steel such as SUS410, SUS410F2, SUS410J1, SUS410S, and SUS431. Examples of the resin-lined steel include those lined with rubber, fluororesins (polytetrafluoroethylene, perfluoroalkoxy alkane, perfluoroethylene propylene copolymer, ethylene tetrafluoroethylene copolymer, polyvinylidene fluoride, and the like), and thermosetting resins (epoxy resin, bisphenol type polyester, vinyl ester, and the like). Examples of the metal spray coated steel include those coated with metal, ceramic, or a mixture thereof by flame spraying, high-speed flame spraying, arc spraying, plasma spraying, or a wire blast method. The apparatus used in the method for producing a solubilized polymer according to the present invention may be an apparatus in which the lining or coating is applied to the entire apparatus or may be an apparatus in which the lining or coating is applied only to a portion where corrosion is particularly likely to occur (such as a gas-liquid interface).

Examples of measures for suppressing corrosion other than the use of a corrosion-resistant material include periodic washing of the apparatus with water, sufficient stirring or standing before heating when adding an acid or an alkali to make the pH of the solution (mixture) uniform, and removal of oxygen in the solution (inert gas replacement, degassing, use of a deoxidizer, and the like).

[2-5] Various physical properties of solubilized polymer

(Weight-average molecular weight (Mw) of solubilized polymer)

In one embodiment of the present invention, the weight-average molecular weight (Mw) of the solubilized polymer produced by decomposing the recovered water-absorbent resin is preferably 10,000 or more and 1,000,000 or less, more preferably 15,000 or more and 750,000 or less, still more preferably 20,000 or more and 700,000 or less, still more preferably 20,000 or more and 600,000 or less, particularly preferably 30,000 or more and 500,000 or less, and most preferably 100,000 or more and 450,000 or less.

When the weight-average molecular weight of the resulting solubilized polymer is within the above range, in the water-absorbent resin produced using the solubilized polymer as a part of the raw material, the complexation of the water-absorbent resin raw material and the solubilized polymer efficiently proceeds, and thus the water-soluble content of the resulting water-absorbent resin can be lowered, and water absorption properties can be improved. In addition, when the weight-average molecular weight of the resulting solubilized polymer is within the above-described range, the viscosity of the solubilized polymer aqueous solution does not become excessively high, and the handleability can be improved. The definition and measurement method of the weight-average molecular weight are as described in Examples.

(Solid content concentration of solubilized polymer)

In one embodiment of the present invention, the solid content concentration of the solubilized polymer (aqueous solution) produced by decomposing the recovered water-absorbent resin is not particularly limited. As one example, the solid content concentration of the resulting solubilized polymer aqueous solution (or aqueous dispersion) is preferably 0.1 mass% or more, more preferably 1 mass% or more and 90 mass% or less, still more preferably 5 mass% or more and 85 mass% or less, still more preferably 6 mass% or more and 50 mass% or less, and particularly preferably 8 mass% or more and 30 mass% or less. The solid content concentration of the solubilized polymer aqueous solution may be 10 mass% or more and 80 mass% or less. The solid content concentration of the resulting solubilized polymer aqueous solution can be appropriately adjusted by using the concentration and heating in the decomposition step, and further, as necessary, condensation and dilution of the solubilized polymer after the solubilization step. When the solid content concentration of the solubilized polymer (solubilized polymer aqueous solution) is within the above-described range, advantageously, the solubilized polymer (solubilized polymer aqueous solution) can be applied to a wide range of uses such as a raw material of a water-absorbent resin or other solubilized polymer use applications. When the content is equal to or more than the lower limit, the use application and use amount (consumption amount) of the solubilized polymer are hardly restricted, which is preferable from the viewpoint of recycling water-absorbent resins. On the other hand, when the content is equal to or less than the upper limit, the viscosity of the solubilized polymer does not become too high, and the handleability is excellent. The "solid content concentration of the solubilized polymer" in the present specification is a value measured by the method described in Examples.

The decomposition product produced in the solubilization step may be used as it is as a raw material (for recycling) in the step of producing the water-absorbent resin, or the concentration may be appropriately adjusted by adding water or the like.

(YI value of solubilized polymer)

In one embodiment of the present invention, the yellowness (YI value) (hereinafter, it may be simply referred to as YI value) in the Hunter Lab color space of the solubilized polymer produced by decomposing the recovered water-absorbent resin is preferably 10.00 or less, more preferably 5.00 or less, still more preferably 4.00 or less. The lower limit of the YI value of the solubilized polymer is not particularly limited, and it is 1.00 or more for example, or may be 0. The YI value of the solubilized polymer is an index indicating the colorability of the solubilized polymer, and when the YI value of the solubilized polymer is within the above range, coloring of the water-absorbent resin produced using the solubilized polymer as a part of a raw material for producing the water-absorbent resin can be further suppressed.

The "YI value of a solubilized polymer" in the present specification is a value measured by applying the method described in Examples to an aqueous solution of a solubilized polymer having a solid content concentration of 8.00 mass% or more and 10.00 mass% or less.

(pH of aqueous solution of solubilized polymer)

In one embodiment of the present invention, the pH of the aqueous solution of the solubilized polymer produced by decomposing the recovered water-absorbent resin is not particularly limited. As one example, it is preferably 6.5 or more and 8.5 or less, more preferably 6.6 or more and 8.4 or less, still more preferably 6.7 or more and 8.4 or less, still more preferably 6.8 or more and 8.3 or less, particularly preferably 6.9 or more and 8.3 or less, and most preferably more than 7.0 and 8.3 or less. The pH of the aqueous solution of the solubilized polymer can be measured using a pH measuring instrument (pH meter: LAQUA act D-71 manufactured by HORIBA, Ltd.).

[2-6] Other components that may be contained in solubilized polymer (aqueous solution)

(Remaining water-absorbent resin)

The solubilized polymer may be in a dried form or in the form of an aqueous solution having a solid content concentration in the above-described range. In the solubilization method according to the present invention, preferably 50 mass% or more, more preferably 60 mass% or more, still more preferably 70 mass% or more, still more preferably 80 mass% or more, particularly preferably 90 mass% or more, and most preferably substantially 100 mass% (upper limit: 100 mass%) can be solubilized with respect to 100 mass% of the total mass of the recovered water-absorbent resin as the raw material. On the other hand, the solubilized polymer produced in the solubilization method according to the present invention may contain a small amount of (undecomposed) recovered water-absorbent resin in addition to the solubilized polymer. That is, the solubilized polymer produced by the solubilization method according to the present invention may be a mixture of the solubilized polymer and the undecomposed recovered water-absorbent resin. The mixture contains the solubilized polymer in an amount of preferably 50 mass% or less, more preferably 40 mass% or less, still more preferably 30 mass% or less, still more preferably 20 mass% or less, and particularly preferably 10 mass% or less of the undecomposed recovered water-absorbent resin (lower limit: more than 0 mass%) with respect to 100 mass% of the total mass of the undecomposed recovered water-absorbent resin and the solubilized polymer to be generated.

(Transition metal ion and L-ascorbic acid)

Transition metal ions and L-ascorbic acid may cause coloring and deterioration in the water-absorbent resin. Thus, from the viewpoint of using transition metal ions and L-ascorbic acid as raw materials for the water-absorbent resin particularly for product applications, it is more preferable as the amounts of the transition metal ions and the L-ascorbic acid in the solubilized polymer produced by the solubilization method according to the present invention are smaller. Specifically, with respect to the solid content of the solubilized polymer, the amounts of the transition metal ion and the L-ascorbic acid are each preferably 10 mass ppm or less, more preferably 5 mass ppm or less, still more preferably 2 mass ppm or less, still more preferably 1 mass ppm or less, and particularly preferably ND (detection limit or less). The transition metal ion and L-ascorbic acid contained in the solubilized polymer may be impurities derived from urine contained in the used absorbent article, or the transition metal ion and L-ascorbic acid used as a decomposer (or used in the production of the recovered water-absorbent resin). That is, the transition metal ion and/or L-ascorbic acid may remain in the solubilized polymer (mixture, as one example, an aqueous solution of the solubilized polymer) produced by decomposing the recovered water-absorbent resin. In contrast, for example, when the recovered water-absorbent resin as the raw material of the solubilized polymer is purified or washed with water, the amounts of the transition metal ion and L-ascorbic acid in the solubilized polymer can be controlled within the above ranges. The amounts of the transition metal ion and L-ascorbic acid in the solubilized polymer may be controlled to fall within the above ranges by not using transition metal ions or L-ascorbic acid for the mixture to be prepared in the solubilization step, or by using a predetermined amount or less of transition metal ions and L-ascorbic acid. A chelating agent that traps transition metal ions may be added. That is, the method for producing a solubilized polymer according to the present invention may further include removing the transition metal ion and/or L-ascorbic acid (step of removing (lowering the amount of) the transition metal ion and/or L-ascorbic acid) after the solubilization step.

(Polymerization inhibitor)

When a water-absorbent resin is produced using the solubilized polymer as a part of the raw material, the solubilized polymer may contain a polymerization inhibitor to prevent unexpected polymerization from proceeding when mixed with a monomer (aqueous solution) as the raw material of the water-absorbent resin. Examples of the polymerization inhibitor include, but are not particularly limited to, N-oxyl compounds, manganese compounds, and substituted phenol compounds disclosed in WO 2008/096713 A (US 2010/0009846 A1). Among them, substituted phenols are preferable, and methoxyphenols are particularly preferable.

Examples of the methoxyphenols include o, m, p-methoxyphenol, and methoxyphenols having one or two or more substituents such as a methyl group, a t-butyl group, and a hydroxy group. In the present invention, p-methoxyphenol is particularly preferable.

The amount of the polymerization inhibitor in the solubilized polymer (solid content) is usually 1 mass ppm or more and 250 mass ppm or less, and preferably 10 mass ppm or more and 200 mass ppm or less.

[3] Method for Producing Water-Absorbent Resin Using the Solubilized Polymer as Part of Raw Material

Another embodiment of the present invention provides a method for producing a water-absorbent resin using a solubilized polymer produced by the solubilization method according to the present invention as a part of a raw material in a process of producing a water-absorbent resin using a monomer constituting the water-absorbent resin as a raw material.

That is, according to the present invention, there can be provided a method for producing a water-absorbent resin using the solubilized polymer as a part of a raw material, the method including, in one or more steps, adding the solubilized polymer produced by the method for producing a solubilized polymer according to the present invention or an aqueous solution thereof.

Hereinafter, the method for producing the water-absorbent resin having the above configuration may be referred to as "method for producing an absorbent-resin according to the present invention" or "the present method for producing a water-absorbent resin". Here, "using the solubilized polymer as a part of the raw material (of the resulting water-absorbent resin)" means that the solubilized polymer produced by the solubilization method according to the present invention is added to the water-absorbent resin raw material (for example, an aqueous monomer solution, a water-containing gel, a dried polymer, and/or a (particulate) dried polymer) in any of the water-absorbent resin production steps that can be included in the method for producing the water-absorbent resin.

According to the method for producing a water-absorbent resin of the present invention, it is possible to produce a water-absorbent resin in which decrease in water absorption performance and coloring is suppressed because of the solubilized polymer added as a part of a raw material. That is, according to the method for producing a water-absorbent resin of the present invention, it is possible to provide a water-absorbent resin excellent in various physical properties (in particular, colorability) while using the recovered water-absorbent resin as a part of the raw material.

In a preferred embodiment, the method for producing a water-absorbent resin according to the present invention is a method for producing a water-absorbent resin using a solubilized polymer produced by solubilizing (decomposing) a recovered water-absorbent resin as a part of a raw material, the method including adding the solubilized polymer produced by the solubilization method according to the present invention or an aqueous solution thereof to a water-absorbent resin raw material in any step performed when newly producing a water-absorbent resin (producing a known water-absorbent resin using a monomer constituting the water-absorbent resin as a raw material). "Newly producing a water-absorbent resin (producing a known water-absorbent resin using a monomer constituting the water-absorbent resin as a raw material)" described above is intended to mean an ordinary method for producing a water-absorbent resin (using no raw material derived from a recovered water-absorbent resin) using a monomer constituting a water-absorbent resin as a raw material. The ordinary method for producing a water-absorbent resin may include, for example, a step of preparing an aqueous monomer solution, a polymerization step, an optionally performed water-containing gel pulverization step, a drying step, an optionally performed pulverization step after drying, an optionally performed classification step, a surface crosslinking step, an optionally performed cooling step, and an optionally performed granulating step.

In the method for producing a water-absorbent resin according to the present invention, the time (step) for adding the solubilized polymer or an aqueous solution thereof is not particularly limited, but it is preferable to add the solubilized polymer in any one of the step of preparing an aqueous monomer solution, the step of polymerizing a monomer (polymerization step), the step of pulverizing a water-containing gel of a polymer (water-containing gel pulverization step), the step of drying the water-containing gel (drying step), and the step of surface-crosslinking a dried polymer (surface crosslinking step).

That is, a preferred embodiment is a method for producing a water-absorbent resin including a step of preparing an aqueous monomer solution, a step of polymerizing a monomer (polymerization step), a step of pulverizing a water-containing gel of a polymer (water-containing gel pulverization step), a step of drying the water-containing gel (drying step), and a step of surface-crosslinking a dried polymer (surface crosslinking step), wherein a solubilized polymer produced by the solubilization method according to the present invention or an aqueous solution thereof is added in one or more of the steps. The method for producing a water-absorbent resin may further include steps other than the above steps, and for example, a pulverization step (after drying) and/or a classification step may be optionally performed after the step of drying (drying step) the water-containing gel of the production method. After the surface crosslinking step, a cooling step and/or a granulating step may be optionally performed.

[3-1] Addition of solubilized polymer

Examples of the method of adding the solubilized polymer in any of the above-described steps include, but are not particularly limited to, a method of adding the solubilized polymer in the form of an aqueous solution, a method of adding the solubilized polymer in the form of a powder after once drying the solubilized polymer, and a method of adding the solubilized polymer in the form of an aqueous dispersion (slurry form) in which an undissolved matter partially remains.

The form of "addition" of the solubilized polymer or the aqueous solution thereof is not particularly limited, and the total amount of the solubilized polymer may be added at one time at any time (step), or may be divided and added in a plurality of times (steps). Thus, for example, the total amount of the solubilized polymer may be added in the step of preparing the aqueous monomer solution, or the solubilized polymer may be divided and added in the step of preparing the aqueous monomer solution and the step of polymerizing the monomer (polymerization step), respectively. Further, the solubilized polymer may be added in different forms depending on the time (step) of addition.

The addition of the solubilized polymer may be performed in a state where the solubilized polymer (or an aqueous solution thereof) produced in the solubilization method is as it is, or may be performed after at least a portion of the solubilized polymer is crosslinked with a crosslinking agent (such as an internal crosslinking agent or a surface crosslinking agent described later) to form a crosslinked polymer (in the form of a crosslinked polymer). After a crosslinked polymer is produced as described above, the crosslinked polymer may be mixed with a newly produced water-absorbent resin in any of the above steps. Further, at least a portion of the solubilized polymer may be crosslinked with a crosslinking agent to form a crosslinked polymer, and then the crosslinked polymer may be made into a marketable product through a process similar to a known process (steps including drying, pulverization, classification, surface treatment, cooling, and granulating).

The solubilized polymer or an aqueous solution thereof may be added at room temperature (20°C or higher and 25°C or lower), or may be added in a preheated state. From the viewpoint of further suppressing coloring of the resulting water-absorbent resin and producing a water-absorbent resin having more stable water absorption performance, the addition of the solubilized polymer or an aqueous solution thereof is preferably performed in a heated state. That is, the addition of the solubilized polymer or an aqueous solution thereof is preferably performed in a state where the solubilized polymer is heated.

To bring the solubilized polymer or an aqueous solution thereof into a heated state, the solubilized polymer produced by the solubilization method according to the present invention is preferably heated. The heating method is not particularly limited, and various containers and stirring apparatus having a heating function are used. For example, a jacket-type storage vessel shown in FIG. 8 of WO 2012/102406 A, a storage vessel provided with a multi-tube heat exchanger outside the storage vessel shown in FIG. 9 of WO 2012/102406 A, various heating stirring apparatuses (for example, kneaders), and the like are used. When stirring is performed using a stirring blade or the like, the stirring portion may also be heated. When stirring is performed as necessary, the rotation speed and time are appropriately determined, and are, for example, 0.1 rpm or more and 5000 rpm or less, and further 1 rpm or more and 1000 rpm or less for 1 second or more and 10 hours or less. The heating may be performed continuously or intermittently.

The heating temperature of the solubilized polymer is preferably 30°C or higher, more preferably 50°C or higher, and particularly preferably 55°C or higher. The upper limit thereof is preferably 100°C or lower, and more preferably 80°C or lower. As an example, the heating temperature of the solubilized polymer is preferably 30°C or higher and 100°C or lower, more preferably 50°C or higher and 100°C or lower, still more preferably 55°C or higher and 100°C or lower, and particularly preferably 55°C or higher and 80°C or lower. When the heating temperature is the above-described upper limit or lower, the solubilized polymer can be prevented from being excessively heated. On the other hand, by heating to the lower limit or higher, the mixing uniformity of the solubilized polymer is further improved, and coloring and/or increase in the water soluble content is further suppressed. In addition, the physical properties (for example, centrifuge retention capacity (CRC)) of the resulting water-absorbent resin are stabilized. Further, even when a recovered water-absorbent resin is used in the step of producing a water-absorbent resin, the performance (in particular, absorption against pressure (AAP)) of the resulting water-absorbent resin can be maintained or improved. Further, in a mode in which the solubilized polymer is mixed with an unsaturated monomer, for example, in the step of preparing an aqueous monomer solution, polymerization is stabilized. In general, when a solubilized polymer is added to an aqueous monomer solution, the amount of the solubilized polymer added is very large as compared with other additives, which may cause polymerization delay of the monomer or increase in fluctuation of the induction time (polymerization initiation time). In contrast, by adding the solubilized polymer in a heated state, polymerization delay and fluctuation of induction time (polymerization initiation time) can be inhibited. The suppression of the polymerization delay includes shortening of the induction time (polymerization initiation time) described in Examples described later.

From the viewpoint of the stability of physical properties and the improvement of physical properties (in particular, absorption against pressure (AAP)) of the resulting water-absorbent resin, the heating temperature is preferably within a substantially constant temperature range, in particular, the same temperature. Specifically, the temperature of the solubilized polymer in a heated state is preferably controlled within a range of $\pm 10°C$, $\pm 9°C$, $\pm 6°C$, $\pm 3°C$, or $\pm 1°C$. Here, the temperature of the solubilized polymer in the heated state being within $\pm 10°C$ means that the temperature range (difference between the maximum temperature and the minimum temperature) of the solubilized polymer is within 20°C. Similarly, "within a range of $\pm 9°C$, $\pm 6°C$, $\pm 3°C$, or $\pm 1°C$" means that the temperature range (difference between the maximum temperature and the minimum temperature) of the solubilized polymer is within 18°C, within 12°C, within 6°C, or within 2°C, respectively.

The temperature difference between the solubilized polymer and the water-absorbent resin raw material to be mixed is preferably 50°C or lower (lower limit: 0°C), more preferably 0°C or higher and 40°C or lower, still more preferably 0°C or higher and 30°C or lower, and particularly preferably 0°C or higher and 20°C or lower. When the temperature difference between the solubilized polymer and the water-absorbent resin raw material to be mixed is within the above range, mixing of the solubilized polymer and the water-absorbent resin raw material is more likely to be uniform, and the physical properties (in particular, absorption against pressure (AAP)) of the resulting water-absorbent resin can be improved. The temperature of the solubilized polymer and the water-absorbent resin raw material to be mixed may be controlled so as to achieve the temperature difference. Here, the water-absorbent resin raw material to be mixed with the solubilized polymer is preferably at least one selected from the group consisting of water for producing an unsaturated monomer-containing aqueous solution, an unsaturated monomer-containing aqueous solution, and a water-containing gel.

The water-absorbent resin raw material to be mixed with the solubilized polymer may be in a heated state. Here, the temperature of the water-absorbent resin raw material in a heated state is preferably 30°C or higher and 100°C or lower, more preferably 40°C or higher and 100°C or lower, and particularly preferably 40°C or higher and 80°C or lower. By heating the raw material in such a temperature range, the solubilized polymer and the water-absorbent resin raw material are easily mixed uniformly, and the resulting water-absorbent resin performance (in particular, absorption against pressure (AAP)) can be improved.

In the method for producing a water-absorbent resin according to the present invention, the description of the preferred form in the above [2-5] is cited for various physical properties of the solubilized polymer to be used, for example, the weight-average molecular weight (Mw), the solid content concentration, and the YI value. The aqueous solution of the solubilized polymer to be added preferably has a smaller amount of the remaining peroxide, and specifically, the description of the preferred form in "(Amount of remaining peroxide)" in the above [2-3] is cited.

In one preferred embodiment, the addition of the solubilized polymer may be performed in the form of an aqueous solution. In this case, the solubilized polymer used as a part of the raw material of the water-absorbent resin preferably has a weight-average molecular weight (Mw) of 30,000 or more, and the content of the peroxide remaining in the aqueous solution of the solubilized polymer is preferably 1000 mass ppm or less (with respect to solubilized polymer solid content). By adopting such a form, coloring of the resulting water-absorbent resin can be lowered, and polymerization can be stably performed. Thus, a water-absorbent resin having stable physical properties can be produced. From the viewpoint of production efficiency, in the embodiment, the solid content concentration of the aqueous solution of the solubilized polymer is preferably 5 mass% or more and 85 mass% or less, more preferably 6 mass% or more and 50 mass% or less, and particularly preferably 8 mass% or more and 30 mass% or less.

[3-2] Step of adding solubilized polymer

In a preferred embodiment, the solubilized polymer or an aqueous solution thereof may be added (mixed) in a production step prior to the drying step. That is, the solubilized polymer or an aqueous solution thereof is preferably added in any one or more steps of the step of preparing an aqueous monomer solution, the polymerization step, the water-containing gel pulverization step, and the drying step.

In another preferred embodiment, the solubilized polymer or an aqueous solution thereof may be added (mixed) in a production step prior to the drying step. That is, the solubilized polymer or an aqueous solution thereof is preferably added in any one or more steps of the step of preparing an aqueous monomer solution, the polymerization step, and the water-containing gel pulverization step. By adopting such a form, the solubilized polymer (liquid product) is easily mixed uniformly in the production step, and high complexation (in other words, reduction of the elution amount as a water-soluble component) of the solubilized polymer to the water-absorbent resin can be realized.

In still another preferred embodiment, the solubilized polymer in a heated state may be added (mixed) in a production step prior to the drying step. That is, the solubilized polymer or an aqueous solution thereof in a heated state is preferably added in any one or more steps of the step of preparing an aqueous monomer solution, the polymerization step, and the water-containing gel pulverization step. Specifically, the solubilized polymer in a heated state is preferably mixed with an unsaturated monomer.

In still another preferred embodiment, the solubilized polymer is preferably added in the step of preparing an aqueous monomer solution and/or the polymerization step, and more preferably added in the step of preparing an aqueous monomer solution. In this case, the solubilized polymer is more preferably in a heated state. In this case, a preferred mode of the heating condition is as described in [3-1].

[3-3] Each production step

Hereinafter, specific embodiments of the present method for producing a water-absorbent resin will be described in detail by exemplifying a method including a step of preparing an aqueous monomer solution, a polymerization step, a water-containing gel pulverization step, a step of drying the water-containing gel, an optionally performed pulverization step after drying, an optionally performed classification step, and a surface crosslinking step.

[3-3-1] Step of preparing aqueous monomer solution

This step is a step of preparing an aqueous solution containing an unsaturated monomer as a raw material of the water-absorbent resin, preferably an aqueous solution (hereinafter, referred to as an "aqueous monomer solution") mainly containing an acid group-containing unsaturated monomer (preferably, acrylic acid (salt)). A monomeric slurry liquid may be used as long as the water absorption performance of the resulting water-absorbent resin does not deteriorate.

However, in this section, an aqueous monomer solution will be described for convenience. The "main component" means that the amount (content) of the acid group-containing unsaturated monomer (preferably, acrylic acid (salt)) used is 50 mol% or more in the total amount (100 mol%) of monomers subjected to the polymerization reaction of the water-absorbent resin (in other words, monomers contained in the aqueous monomer solution excluding an internal crosslinking agent). The content of the acid group-containing unsaturated monomer (preferably, acrylic acid (salt)) in the total amount (100 mol%) of the monomers is preferably 70 mol% or more, more preferably 90 mol% or more (the upper limit is 100 mol%).

As described above, in a preferred embodiment of the method for producing a water-absorbent resin according to the present invention, the solubilized polymer may be added (mixed) in the present step. According to such a form, the mixing uniformity of the solubilized polymer during the production step is further improved, and the resulting water-absorbent resin performance (in particular, absorption against pressure (AAP)) is improved, which is preferable.

When the solubilized polymer is added in the "step of preparing an aqueous monomer solution", the solubilized polymer may be mixed into the aqueous monomer solution, or the solubilized polymer may be mixed with water in advance and then mixed with another raw material such as a monomer. From the viewpoint of uniformly mixing with the raw material, it is preferable to mix the solubilized polymer into an aqueous monomer solution. The solubilized polymer can also be added in the form of an aqueous solution or a dispersion of the solubilized polymer (the same applies to the case where the solubilized polymer is added in each of the following steps).

(Solubilized polymer)

The solubilized polymer may be added in the following polymerization step which is the next step, but the aqueous monomer solution preferably contains the solubilized polymer. In this case, in the aqueous monomer solution, the mixing ratio between the solubilized polymer and the acid group-containing unsaturated monomer (preferably, acrylic acid) in producing the water-absorbent resin is preferably in the following form. That is, the aqueous monomer solution preferably contains the solubilized polymer in a proportion (solid content) of 1 mass% or more and 60 mass% or less with respect to the total mass of the acid group-containing unsaturated monomer (preferably, acrylic acid) and the solubilized polymer (assuming that the total mass is 100 mass%).

In another embodiment, the aqueous monomer solution more preferably contains the solubilized polymer in a proportion of 3 mass% or more and 50 mass% or less, still more preferably 5 mass% or more and 40 mass% or less, yet still more preferably more than 5 mass% and less than 40 mass%, and particularly preferably 8 mass% or more and 30 mass% or less, with respect to the total mass of the acid group-containing unsaturated monomer (preferably, acrylic acid) and the solubilized polymer (assuming that the total mass is 100 mass%). With such a mixing proportion, not only the solubilized polymer is easily uniformly dispersed in the water-absorbent resin, but also the solubilized polymer is easily incorporated in the water-absorbent resin. As a result, the amount of the water soluble component can be effectively lowered, and a water-absorbent resin excellent in water absorption properties can be produced.

(Acid group-containing unsaturated monomer)

The "acid group" contained in the unsaturated monomer is not particularly limited, and examples thereof include a carboxyl group, a sulfone group, and a phosphate group. Examples of the acid group-containing unsaturated monomer include water-soluble or hydrophobic unsaturated monomers. As an example, the description of compounds described in US 2005/0215734 A1 can be incorporated. Specific examples of the acid group-containing unsaturated monomer include anionic unsaturated monomers such as (meth)acrylic acid, maleic acid (maleic anhydride), fumaric acid, crotonic acid, itaconic acid, cinnamic acid, vinyl sulfonic acid, allyl toluene sulfonic acid, vinyl toluene sulfonic acid, styrene sulfonic acid, 2-(meth)acrylamide-2-methylpropane sulfonic acid, 2-(meth)acryloyl ethane sulfonic acid, 2-(meth)acryloyl propane sulfonic acid, and 2-hydroxyethyl (meth)acryloyl phosphate, and/or salts thereof. One of these other monomers may be used alone, or two or more thereof may be used in combination. From the viewpoint of water absorption performance, (meth)acrylic acid, maleic acid (maleic anhydride), itaconic acid, and cinnamic acid are preferable, (meth)acrylic acid is more preferable, and acrylic acid is particularly preferable.

(Acrylic acid)

In one embodiment of the present invention, acrylic acid and/or a salt thereof (in the present specification, it is also referred to as "acrylic acid (salt)") is used as a monomer constituting the water-absorbent resin from the viewpoint of physical properties and productivity of the resulting water-absorbent resin. As the "acrylic acid", a known acrylic acid may be used. The "acrylic acid salt" is intended to mean a product produced by neutralizing the acrylic acid with the following basic composition. The acrylic acid salt may be a commercially available acrylic acid salt (for example, sodium acrylate), or may be produced through neutralization in a water-absorbent resin production plant.

(Concentration of acid group-containing unsaturated monomer)

The concentration of the monomer in the aqueous monomer solution (excluding the solubilized polymer) is appropriately selected according to the selected monomer, the type of the solubilized polymer and the solvent, and the like. From the viewpoint of production efficiency, the lower limit is preferably 10 mass% or more, more preferably 20 mass% or more, and still more preferably 30 mass% or more. The upper limit is preferably 100 mass% or less, more preferably 90 mass% or less, still more preferably 80 mass% or less, and still more preferably 70 mass% or less.

(Basic composition)

In the present specification, the "basic composition" means a composition containing a basic compound. Specific examples of the basic compound include a carbonate and/or a hydrogen carbonate of an alkali metal, a hydroxide of an alkali metal, ammonia, and an organic amine. One of these basic compounds may be used alone, or two or more thereof may be used in combination. Among these, from the viewpoint of the physical properties of the resulting water-absorbent resin, a strongly basic compound is preferable. As the basic compound, for example, hydroxides of alkali metals such as sodium hydroxide, potassium hydroxide, and lithium hydroxide are preferable, and sodium hydroxide is more preferable. As an example, the basic composition may be a commercially available aqueous sodium hydroxide solution or the like.

(Neutralization)

In the present method for producing a water-absorbent resin, it is preferable to neutralize at least a portion of the acid group-containing unsaturated monomer (preferably, acrylic acid). As the neutralization in the present method for producing a water-absorbent resin, either neutralization (before polymerization) for the acid group-containing unsaturated monomer (preferably, acrylic acid) or neutralization (after polymerization) (hereinafter, referred to as "latter neutralization") for the water-containing gel-like crosslinked polymer produced by crosslinking polymerization of the acid group-containing unsaturated monomer (preferably, acrylic acid) can be selected or used in combination. The neutralization may be performed continuously or batchwise, but is preferably performed continuously from the viewpoint of production efficiency and the like. Regarding conditions such as the apparatus for performing neutralization, the neutralization temperature, and the residence time, the conditions described in WO 2009/123197, US 2008/0194863 A1, and the like can also be applied to the present invention.

The neutralization rate of the acid group-containing unsaturated monomer (preferably, acrylic acid) is preferably 10 mol% or more and 90 mol% or less, more preferably 40 mol% or more and 85 mol% or less, still more preferably 50 mol% or more and 80 mol% or less, and particularly preferably 60 mol% or more and 75 mol% or less, in the total amount (100 mol%) of the acid groups of the monomer. When the neutralization rate is 10 mol% or more, a water-absorbent resin having a sufficient water absorption ratio can be provided. On the other hand, when the neutralization rate is 90 mol% or less, a water-absorbent resin having a higher absorption against pressure can be provided. The neutralization rate of the aqueous monomer solution will be further described by exemplifying the case where the aqueous monomer solution contains only acrylic acid as a monomer component. In this case, the neutralization rate of the monomer being 75 mol% means that the monomer component contained in the aqueous monomer solution is a mixture of 25 mol% of acrylic acid and 75 mol% of acrylate. Such a mixture may be referred to as a partially neutralized acrylic acid.

The neutralization rate is the same even in the case of the latter neutralization. The neutralization rate is also applied to the neutralization rate of the water-absorbent resin as a final product. In the present method for producing a water-absorbent resin, the solubilized polymer derived from the recovered water-absorbent resin is used as a part of the raw material in the production of the water-absorbent resin. When such a solubilized polymer is used as a part of the raw material for producing a water-absorbent resin, the solubilized polymer may contain a basic compound derived from the recovered water-absorbent resin. Then, the basic compound can neutralize the acid group-containing unsaturated monomer (preferably, acrylic acid) before polymerization or the water-containing gel-like crosslinked polymer after polymerization. Thus, in consideration of neutralization with the basic compound derived from the recovered water-absorbent resin, it is preferable to adjust the neutralization (latter neutralization) rate of the monomer in the aqueous monomer solution, the water-containing gel-like crosslinked polymer, and the water-absorbent resin as a final product to a predetermined range.

(Monomer other than acid group-containing unsaturated monomer)

The aqueous monomer solution may contain a monomer other than the acid group-containing unsaturated monomer. The monomer other than the acid group-containing unsaturated monomer may be any compound that can be polymerized into a water-absorbent resin. Examples of the compound include amide group-containing unsaturated monomers such as (meth)acrylamide, N-ethyl (meth)acrylamide, and N,N-dimethyl (meth)acrylamide; amino group-containing unsaturated monomers such as N,N-dimethylaminoethyl (meth)acrylate, N,N-dimethylaminopropyl (meth) acrylate, and N,N-dimethylaminopropyl (meth)acrylamide; mercapto group-containing unsaturated monomers; phenolic hydroxy group-containing unsaturated monomers; and lactam group-containing unsaturated monomers such as N-vinylpyrrolidone.

(Internal crosslinking agent)

The aqueous monomer solution preferably contains an internal crosslinking agent. Examples of the internal crosslinking agent that can be contained in the aqueous monomer solution include the compounds described in US 6241928 B2. Among these, one or more compounds can be used as the internal crosslinking agent in consideration of reactivity. From the viewpoint of water absorption performance of the resulting water-absorbent resin, the internal crosslinking agent is preferably a compound having two or more polymerizable unsaturated groups, more preferably a compound having thermal degradability at the following drying temperature, and still more preferably a compound having a (poly)alkylene glycol structural unit and two or more polymerizable unsaturated groups. The polymerizable unsaturated group is preferably an allyl group or a (meth)acrylate group, more preferably a (meth)acrylate group. The (poly)alkylene glycol structural unit is preferably polyethylene glycol, and the n number is preferably 1 or more and 100 or less, more preferably 6 or more and 50 or less.

Examples of the internal crosslinking agent include (poly)ethylene glycol di(meth)acrylate, (poly)propylene glycol di(meth)acrylate, trimethylolpropane tri(meth)acrylate, glycerin (meth)acrylate, glycerin acrylate methacrylate, ethylene oxide-modified trimethylolpropane tri(meth)acrylate, and pentaerythritol hexa(meth)acrylate. One of these internal crosslinking agents may be used alone, or two or more thereof may be used in combination.

The amount (content in the aqueous monomer solution) of the internal crosslinking agent used is preferably 0.0001 mol% or more and 10 mol% or less, and more preferably 0.001 mol% or more and 1 mol% or less with respect to the total amount of monomers. When the amount of the internal crosslinking agent used is within the above range, a desired water-absorbent resin is produced. The reasons why the above range is preferable are as follows: when the amount of the internal crosslinking agent used is 0.0001 mol% or more, the gel strength of the resulting water-absorbent resin tends to be improved, and the amount of the water-soluble component tends to be lowered; and when the amount of the internal crosslinking agent used is 10 mol% or less, the water absorption ratio of the resulting water-absorbent resin tends to be improved. The mol% of the whole monomer is a percentage of the number of moles of the internal crosslinking agent to the total number of moles of monomers contained in the aqueous monomer solution.

In the present method for producing a water-absorbent resin, a method is preferably used in which a predetermined amount (within the above range) of an internal crosslinking agent is added to the aqueous monomer solution in advance, and a crosslinking reaction is performed simultaneously with polymerization. In addition to this method, a method of adding an internal crosslinking agent during and/or after polymerization and then crosslinking; a method of performing radical crosslinking using a radical polymerization initiator; a method of performing radiation crosslinking using an active energy ray such as an electron beam or an ultraviolet ray or the like can also be adopted. These methods may be used in combination.

(Polymerization inhibitor)

The aqueous monomer solution may contain a polymerization inhibitor. The polymerization inhibitor is not particularly limited, but is preferably a methoxyphenol, more preferably p-methoxyphenol. From the viewpoint of the polymerizability of the acid group-containing unsaturated monomer (preferably, acrylic acid) and the color tone of the water-absorbent resin, the content of the polymerization inhibitor in the aqueous monomer solution is preferably 200 mass ppm or less, more preferably 10 mass ppm or more and 160 mass ppm or less, and still more preferably 20 mass ppm or more and 100 mass ppm or less.

(Impurity)

The aqueous monomer solution may contain impurities derived from the components in the aqueous monomer solution. For example, for impurities derived from acrylic acid, the description related to the compound described in US 2008/0161512 A1 is incorporated.

(Additional substance)

From the viewpoint of improving the physical properties of the resulting water-absorbent resin, the aqueous monomer solution may contain a substance (additional substance) other than the above components.

Examples of the additional substance include other additives, for example, chain transfer agents such as thiols, thiol acids, secondary alcohols, amines, and hypophosphites; foaming agents such as carbonates, bicarbonates, and azo compounds; chelating agents such as amino polyvalent carboxylic acids (salts), for example, metal salts of ethylenediaminetetraacetic acid and metal salts of diethylenetriaminepentaacetic acid, and amino polyvalent phosphonic acids (salts), for example, metal salts of ethylenediaminetetra (methylenephosphonic acid); and hydrophilic polymers such as starch, starch derivatives, cellulose, cellulose derivatives, polyvinyl alcohol, polyacrylic acid (salt), and polyacrylic acid (salt) crosslinked products.

When the aqueous monomer solution contains a hydrophilic polymer as an additional substance, the content of the hydrophilic polymer is preferably 50 mass% or less, more preferably 20 mass% or less, still more preferably 10 mass% or less, and particularly preferably 5 mass% or less (the lower limit is 0 mass%) with respect to the total amount (100 mass%) of the aqueous monomer solution. When the aqueous monomer solution contains another additive other than the hydrophilic polymer as an additional substance, the content of the another additive is preferably 5 mass% or less, more preferably 1 mass% or less, and still more preferably 0.5 mass% or less (the lower limit is 0 mass%) with respect to the total amount (100 mass%) of the aqueous monomer solution.

The additional substance may not only take the form of being added to the aqueous monomer solution but also be added to the reaction system in the polymerization step described later. In such a case, the total amount of the additional substance contained in the aqueous monomer solution and the additional substance added to the reaction system in the polymerization step is preferably within the above range.

When a water-soluble resin or a water-absorbent resin is used as the hydrophilic polymer, a graft polymer or a water-absorbent resin composition (for example, starch-acrylic acid polymer, PVA-acrylic acid polymer, and the like) is produced. These polymers and water-absorbent resin compositions are also within the scope of one embodiment of the present invention.

[3-3-2] Polymerization step

This step is a step of polymerizing an unsaturated monomer (in particular, an acrylic acid (salt)-based monomer) in the aqueous monomer solution prepared in the step of preparing an aqueous monomer solution to produce a water-containing gel-like crosslinked polymer (hereinafter, referred to as "water-containing gel").

From the viewpoint of the uniformity of the polymer component, it is preferable to add the solubilized polymer before the start of polymerization (that is, the step of preparing an aqueous monomer solution), but the solubilized polymer may be added in the polymerization step (in particular, the monomer composition in the polymerization apparatus). When the solubilized polymer is added in the "polymerization step", the addition time of the solubilized polymer is not particularly limited. The solubilized polymer may be added before the start of polymerization or may be added after the start of polymerization. Specific examples of the addition time of the solubilized polymer include a form in which a solubilized polymer is added immediately before polymerization of the monomer composition (specifically, for example, a form in which a solubilized polymer is added simultaneously with a polymerization initiator); a form in which the solubilized polymer is added during polymerization of a monomer (specifically, for example, a form in which a solubilized polymer is added in the gel pulverization step during the polymerization step, for example when polymerization and gel pulverization are simultaneously performed as in continuous kneader polymerization) and a combination thereof.

(Polymerization initiator)

In this step, it is preferable to perform a polymerization reaction of the monomer using a polymerization initiator. The polymerization initiator used in this step is appropriately selected depending on the polymerization form and the like, and thus is not particularly limited. Examples thereof include a thermal decomposition type polymerization initiator, a photolysis type polymerization initiator, and a redox type polymerization initiator in which a reducing agent (for example, L-ascorbic acid, sodium hydrogen sulfite, and the like) that promotes decomposition of these polymerization initiators is used in combination. Specifically, one, or two or more of the polymerization initiators disclosed in US 7265190 B2 can be suitably used. From the viewpoint of the handleability of the polymerization initiator, the physical properties of the resulting water-absorbent resin, and the like, it is preferable to use a peroxide or an azo compound as the polymerization initiator, it is more preferable to use a peroxide, and it is still more preferable to use a persulfate.

The amount of the polymerization initiator used in this step is preferably 0.001 mol% or more and 1 mol% or less, more preferably 0.001 mol% or more and 0.5 mol% or less, with respect to the total amount of monomers (monomers contained in the aqueous monomer solution) to be subjected to polymerization. When a reducing agent is used in combination (that is, when a redox-type polymerization initiator is used), the amount of the reducing agent used is preferably 0.0001 mol% or more and 0.02 mol% or less with respect to the total amount of the monomers. The "mol%" with respect to the monomer is a percentage of the number of moles of the polymerization initiator or the reducing agent with respect to the total number of moles of monomers contained in the aqueous monomer solution.

Instead of using the polymerization initiator, the polymerization reaction may be performed by irradiating active energy rays such as radiation, an electron beam, and an ultraviolet ray, or the polymerization reaction may be performed using these active energy rays and the polymerization initiator in combination.

(Polymerization form)

The polymerization form in the polymerization step is not particularly limited, but from the viewpoint of water absorption properties of the resulting water-absorbent resin, ease of polymerization control, and the like, spray droplet polymerization, aqueous solution polymerization, and reversed phase suspension polymerization are preferable, aqueous solution polymerization and reversed phase suspension polymerization are more preferable, and aqueous solution polymerization is still more preferable. Among these, continuous aqueous solution polymerization is particularly preferable. Forms such as continuous belt polymerization and continuous kneader polymerization can also be applied. It is also possible to apply a form of foam polymerization in which polymerization is performed by dispersing bubbles (in particular, the following inert gas or the like) in the aqueous monomer solution.

As specific polymerization forms, continuous belt polymerization is disclosed in US 4893999 B2, US 6241928 B2, US 2005/215734 A1, and the like, and continuous kneader polymerization is disclosed in US 6987151 B2, US 6710141 B2, and the like. By adopting these continuous aqueous solution polymerizations, the production efficiency of the water-absorbent resin can be improved.

Preferable forms of the continuous aqueous solution polymerization include "high-temperature initiation polymerization" and "high-concentration polymerization". "High-temperature initiation polymerization" refers to a form in which polymerization is initiated with the temperature of the aqueous monomer solution to be subjected to polymerization set to preferably 30°C or higher, more preferably 35°C or higher, still more preferably 40°C or higher, and particularly preferably 50°C or higher (upper limit is boiling point). For example, the polymerization temperature is preferably 20°C or more and 100°C or less, and more preferably 40°C or more and 90°C or less. The "high-concentration polymerization" refers to a form in which polymerization is performed with the monomer concentration of the aqueous monomer solution to be subjected to polymerization set to preferably 30 mass% or more, more preferably 35 mass% or more, still more preferably 40 mass% or more, and particularly preferably 45 mass% or more (upper limit is saturation concentration). These polymerized forms can also be used in combination.

In this step, the polymerization can be performed in an air atmosphere, but from the viewpoint of the color tone of the resulting water-absorbent resin, the polymerization is preferably performed in an inert gas atmosphere such as nitrogen or argon. In this case, the oxygen concentration is preferably controlled to 1 vol% or less. Dissolved oxygen in the aqueous monomer solution is preferably replaced with an inert gas (for example, the replacement is performed such that dissolved oxygen is less than 1 mg/L.).

[3-3-3] Water-containing gel pulverization step

The method for producing a water-absorbent resin according to the present invention preferably optionally includes a water-containing gel pulverization step of pulverizing the water-containing gel produced in the polymerization step.

This step is a step of subjecting the water-containing gel (water-containing gel of polymer) produced in the polymerization step to gel pulverization with, for example, a screw extruder such as a kneader or a meat chopper, or a gel pulverizer such as a cutter mill to produce a water-containing gel in the form of particles (hereinafter, also referred to as "particulate water-containing gel"). When kneader polymerization is employed as the polymerization form in the polymerization step, the polymerization step and the gel pulverization step are performed simultaneously. When a water-containing gel in the form of particles is directly produced in the polymerization process, for example in gas phase polymerization or reversed phase suspension polymerization, the water-containing gel pulverization step is not performed in some cases. As necessary, after the polymerization step and before the gel pulverization step, a shredding step of cutting or roughly crushing the water-containing gel-like crosslinked polymer into a size that can be put into a gel pulverizer using a roller cutter, a guillotine cutter, or the like may be performed. In particular, when the polymerization step is belt polymerization, and a sheet-like or block-like water-containing gel is produced, it is preferable to perform the shredding step. With respect to gel pulverization conditions and forms other than those described above, the contents disclosed in WO 2011/126079 A are preferably applied to the present invention.

When the solubilized polymer produced by the solubilization method according to the present invention is added in the "water-containing gel pulverization step", the solubilized polymer may be added before pulverization or may be added during pulverization. From the viewpoint of uniformity of the gel component, it is preferable to add the solubilized polymer before gel pulverization.

More specifically, a form in which the water-containing gel and the solubilized polymer are added to a gel pulverizer, a form in which the solubilized polymer is added before the water-containing gel after the polymerization step to be subjected to gel pulverization is put into the gel pulverizer, and the solubilized polymer is mixed in the water-containing gel simultaneously with the gel pulverization, and the like may be used. The solubilized polymer may be added in the shredding step optionally performed before the gel pulverization step. In this case, the solubilized polymer may be put in several parts.

The addition amount (solid content) of the solubilized polymer is preferably 1 mass% or more and 60 mass% or less, more preferably 3 mass% or more and 50 mass% or less, and still more preferably 5 mass% or more and 40 mass% or less with respect to the solid content of the water-containing gel.

[3-3-4] Drying step

This step is a step of producing a dried polymer by drying the particulate water-containing gel produced in the polymerization step and/or the water-containing gel pulverization step to have a desired resin solid content amount. The resin solid content amount of the dried polymer is determined from the loss on drying (mass change when 1 g of the water-absorbent resin is heated at 180°C for 3 hours), and is preferably 80 mass% or more, more preferably 85 mass% or more and 99 mass% or less, still more preferably 90 mass% or more and 98 mass% or less, and particularly preferably 92 mass% or more and 97 mass% or less.

The method for drying the particulate water-containing gel is not particularly limited, and examples thereof include heat drying, hot air drying, reduced pressure drying, fluidized bed drying, infrared drying, microwave drying, drum dryer drying, drying through azeotropic dehydration with a hydrophobic organic solvent, and high humidity drying using high temperature water vapor. Among these, from the viewpoint of drying efficiency, hot air drying is preferable, and band drying in which hot air drying is performed on a ventilation belt is more preferable.

The drying temperature (temperature of hot air) in the hot air drying is preferably 120°C or higher and 250°C or lower, and more preferably 150°C or higher and 200°C or lower from the viewpoint of the color tone, drying efficiency, and the like of the resulting water-absorbent resin. The drying conditions other than the drying temperature, such as the drying time and the wind speed of hot air, can be appropriately set according to the water content and total weight of the particulate water-containing gel to be dried and the intended resin solid content. When band drying is performed, various conditions described in WO 2006/100300 A, WO 2011/025012 A, WO 2011/025013 A, WO 2011/111657 A, and the like are appropriately applied as the drying conditions.

When the drying temperature, the drying time, and the like described above are within the above ranges, AAP 0.3 (absorption against pressure at 0.3 psi), CRC (water absorption ratio), and the color tone of the resulting water-absorbent resin can be set within desired ranges (see [3-6-1] and [3-6-2] below).

When the solubilized polymer produced by the solubilization method according to the present invention is added in the "drying step", the water-containing gel and the solubilized polymer may be mixed before drying, or may be mixed after drying. The water-containing gel and the solubilized polymer may be dried without being mixed.

[3-3-5] Pulverization step after drying

The method for producing a water-absorbent resin according to the present invention preferably optionally includes a pulverization step after drying, in which the dried polymer produced in the drying step is appropriately pulverized to adjust the particle size of the dried polymer. In the pulverization step after drying, the method for pulverizing the dried polymer is not particularly limited, and the pulverization step can be performed using a high-speed rotary pulverizer such as a roll mill, a hammer mill, a screw mill, or a pin mill, a vibration mill, a knuckle type pulverizer, a cylindrical mixer, or the like.

[3-3-6] Classification step

The method for producing a water-absorbent resin according to the present invention preferably optionally includes a classification step of classifying the dried polymer produced in the drying step or the pulverized product of the dried polymer produced in the pulverization step after drying to produce a particulate dried polymer having a desired particle size.

Examples of the method for classifying the dried polymer or the pulverized product thereof in the classification step include sieve classification using JIS standard sieves (JIS Z8801-1 (2000)) and air flow classification. Among these, the sieve classification is preferably selected from the viewpoint of classification efficiency.

The particle size of the particulate dried polymer produced in the classification step is not particularly limited, but for example, the mass average particle size (D50) is preferably 200 $\mu$m or more and 500 $\mu$m or less, more preferably 250 $\mu$m or more and 450 $\mu$m or less, and still more preferably 300 $\mu$m or more and 400 $\mu$m or less. The proportion of the particles having a mass average particle size (D50) of less than 150 $\mu$m is preferably less than 5 mass%, more preferably 4 mass% or less, and still more preferably 3 mass% or less (lower limit: 0 mass%).

When the solubilized polymer produced by the solubilization method according to the present invention is added in the "classification step", the dried polymer or the pulverized product of the dried polymer may be mixed with the solubilized polymer before classification, or may be mixed with the solubilized polymer after classification. From the viewpoint of particle size uniformity, it is preferable to add the solubilized polymer before classification.

[3-3-7] Surface crosslinking step

This step is a step of providing a portion having a higher crosslinking density in the surface layer (portion of several 10 μm from the surface of the (particulate) dried polymer) of the (particulate) dried polymer (hereinafter, also referred to as a "water-absorbent resin precursor") produced through the above-described steps. The surface crosslinking step may include a mixing step and a heat treatment step.

In the surface crosslinking step, a surface-crosslinked water-absorbent resin (water-absorbent resin particles) is produced by radical crosslinking on the surface of the (particulate) dried polymer, surface polymerization, a crosslinking reaction with a surface crosslinking agent, or the like.

When the solubilized polymer produced by the solubilization method according to the present invention is added in the "surface crosslinking step", the (particulate) dried polymer and the solubilized polymer may be mixed, or may be mixed after surface crosslinking. The (particulate) dried polymer and the solubilized polymer may be treated without being mixed. From the viewpoint of uniform mixing properties of the surface treatment liquid (solution containing a surface crosslinking agent) and the (particulate) dried polymer, it is preferable to subject all the surface-crosslinked objects (that is, the (particulate) dried polymer and the solubilized polymer in powder form) to surface crosslinking in the form of powder using powder of the solubilized polymer. When the solubilized polymer is mixed after surface crosslinking, it is preferable to use a solubilized polymer in which at least a portion thereof is surface-crosslinked as the solubilized polymer.

(Surface crosslinking agent)

In the surface crosslinking step, it is preferable to crosslink the surface of the particulate dried polymer using a surface crosslinking agent. The surface crosslinking agent used in one embodiment of the present invention is not particularly limited, and examples thereof include an organic or inorganic surface crosslinking agent. Among these, an organic surface crosslinking agent that reacts with a carboxyl group is preferable from the viewpoint of the physical properties of the water-absorbent resin, the handleability of the surface crosslinking agent, and the like. Specifically, as the surface crosslinking agent, one, or two or more compounds disclosed in US 7183456 B2 can be used. More specific examples of the surface crosslinking agent include a polyhydric alcohol compound; an epoxy compound; a haloepoxy compound; a polyamine compound or a condensate thereof with the haloepoxy compound; an oxazoline compound; an oxazolidinone compound; a polyvalent metal salt; an alkylene carbonate compound; and a cyclic urea compound. Specific examples thereof include polyhydric alcohol compounds such as ethylene glycol, diethylene glycol, propylene glycol, triethylene glycol, tetraethylene glycol, polyethylene glycol, 1,3-propanediol, dipropylene glycol, 2,2,4-trimethyl-1,3-pentanediol, polypropylene glycol, glycerol, polyglycerol, 2-butene-1,4-diol, 1,3-butanediol, 1,4-butanediol, 1,5-pentanediol, 1,6-hexanediol, 1,2-cyclohexanedimethanol, 1,2-cyclohexanol, trimethylolpropane, diethanolamine, triethanolamine, polyoxypropylene, oxyethylene-oxypropylene block copolymers, pentanediol, and sorbitol; epoxy compounds such as ethylene glycol diglycidyl ether, polyethylene glycol diglycidyl ether, glycerol polyglycidyl ether, diglycerol polyglycidyl ether, polyglycerol polyglycidyl ether, propylene glycol diglycidyl ether, polypropylene glycol polyglycidyl ether, glycidol, sorbitol polyglycidyl ether, pentaerythritol polyglycidyl ether, trimethylolpropane polyglycidyl ether, neopentylglycol diglycidyl ether, and 1,6-hexanediol diglycidyl ether; polyamine compounds such as ethylenediamine, diethylenetriamine, triethylenetetramine, tetraethylenepentamine, pentaethylenehexamine, and polyethylenimine, and inorganic salts or organic salts thereof; aziridine compounds such as polyaziridine; polyhydric oxazoline compounds such as 1,2-ethylenebisoxazoline, bisoxazoline, and polyoxazoline; carbonic acid derivatives such as urea, thiourea, guanidine, dicyandiamide, and 2-oxazolidinone; alkylene carbonate compounds such as 1,3-dioxolan-2-one(ethylene carbonate), 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 4-hydroxymethyl-1,3-dioxolan-2-one, 1,3-dioxan-2-one, 4-methyl-1,3-dioxan-2-one, 4,6-dimethyl-1,3-dioxan-2-one, and 1,3-dioxopan-2-one; haloepoxy compounds such as epichlorohydrin and polyamine adducts thereof; and polyvalent metal salts such as hydroxides, chlorides, sulfates, nitrates, and carbonates of zinc, calcium, magnesium, aluminum, iron, and zirconium. One of these surface crosslinking agents may be used alone, or two or more thereof may be used in combination. Among the surface crosslinking agents, it is preferable to use one, or two or more selected from the group consisting of a polyhydric alcohol compound, an epoxy compound, a polyvalent metal salt, and an alkylene carbonate compound. These surface crosslinking agents are preferably used in the form of an aqueous solution (that is, in the state of a surface crosslinking agent solution).

The amount of the surface crosslinking agent to be used in the surface crosslinking step (the total amount used when a plurality of the surface crosslinking agents are used) is preferably 0.01 parts by mass or more and 10 parts by mass or less, and more preferably 0.01 parts by mass or more and 5 parts by mass or less, with respect to 100 parts by mass of the (particulate) dried polymer. The surface crosslinking agent is preferably added in the form of an aqueous solution, and in this case, the amount of water used is preferably 0.1 parts by mass or more and 20 parts by mass or less, and more preferably 0.5 parts by mass or more and 10 parts by mass or less, with respect to 100 parts by mass of the (particulate) dried polymer. As necessary, a hydrophilic organic solvent may be used in combination, and in such a case, the amount of the hydrophilic organic solvent used is preferably 10 parts by mass or less, more preferably 5 parts by mass or less, with respect to 100 parts by mass of the (particulate) dried polymer.

An additive other than the surface crosslinking agent ("other additives" to be described later) may be mixed, within a range of 5 parts by mass or less, with the aqueous solution of the surface crosslinking agent.

(Mixing step)

The surface crosslinking step includes a mixing step of mixing the (particulate) dried polymer and the surface crosslinking agent. The method for mixing the surface crosslinking agent in the mixing step is not particularly limited, and examples thereof include a method in which a surface crosslinking agent solution is produced in advance, and the solution is preferably sprayed or dropped onto (particulate) dried polymer, more preferably sprayed, then mixed.

The apparatus for mixing the (particulate) dried polymer and the surface crosslinking agent is not particularly limited, but a high-speed stirring type mixer is preferable, and a high-speed stirring type continuous mixer is more preferable.

(Heat treatment step)

The surface crosslinking step includes a heat treatment step of heating the mixture discharged from the mixing step to cause a crosslinking reaction on the surface of the (particulate) dried polymer. The heat treatment step can also be said to be a crosslinking reaction step.

The apparatus for performing the crosslinking reaction is not particularly limited, but a paddle dryer is preferable. The heating temperature in the heat treatment, in other words, the reaction temperature in the crosslinking reaction is appropriately set according to the type of the surface crosslinking agent to be used, but is preferably 50°C or higher and 300°C or lower, and more preferably 100°C or higher and 200°C or lower. The heating time is not particularly limited as long as the crosslinking reaction can sufficiently proceed, and is preferably, for example, 10 minutes or more and 3 hours or less.

[3-3-8] Cooling step

The method for producing a water-absorbent resin according to the present invention preferably optionally includes, after the surface crosslinking step, a cooling step of cooling the surface-crosslinked (particulate) dried polymer (that is, water-absorbent resin particles) after the heat treatment. The cooling step is an optional step installed as necessary after the heating treatment step. The apparatus for performing cooling in the cooling step is not particularly limited, but is preferably an apparatus having the same specification as the apparatus used in the heat treatment step, and more preferably a paddle dryer. This is because the heat medium can be changed to a refrigerant and thus used as a cooling apparatus. In the cooling step, the water-absorbent resin particles produced in the heat treatment step are forcibly cooled to preferably 40°C or higher and 80°C or lower, more preferably 50°C or higher and 70°C or lower as necessary.

[3-3-9] Granulating step

The method for producing a water-absorbent resin according to the present invention optionally and preferably further includes a granulating step after the surface crosslinking step or after the cooling step optionally performed. This step is a step of adjusting the particle size of the surface-crosslinked water-absorbent resin. Through this granulating step, a water-absorbent resin in which the particle size or particle size distribution is more actively controlled is produced.

Preferably, the granulating step includes a crushing step and/or a classification step. The crushing step is a step of crushing the granulated substance loosely aggregated through the surface crosslinking step with a crusher to adjust the particle size. The classification step is a step of removing coarse particles and fine powder from the surface-crosslinked granulated substance or their crushed material using a classifier.

The crusher is not particularly limited, and examples thereof include a vibration mill, a roll granulator, a knuckle type pulverizer, a roll mill, a high-speed rotary pulverizer (pin mill, hammer mill, screw mill), and a cylindrical mixer. Those causing little damage to the dried polymer or the surface-crosslinked dried polymer are preferred, and specific examples thereof include a roll granulator (Matsubo Corporation), a granulator (Kurimoto, Ltd.), and a Lundell mill (Tokuju Corporation). As the classifier, a vibration type or swing type sieve classifier using a sieve mesh is used.

[3-3-10] Other steps

The method for producing a water-absorbent resin according to the present invention may further include a pulverization step, a classification step, a rewetting step, a granulating step, a transportation step, a storage step, a packaging step, a safekeeping step, and the like, as necessary, in addition to the above-described steps.

(Other additives)

In addition to the optionally used surface crosslinking agent, it is possible to further add known components as other additives before or after drying. Examples of such known components include a gel fluidizing agent, a polymer powder (for example, starch such as tapioca acetate starch), inorganic particles (for example, hydrotalcite, silicon dioxide, talc, aluminum hydroxide, and tricalcium phosphate), a dust inhibitor, a dried water-absorbent resin (fine powder), a liquid permeability improver, a reducing agent (for example, sodium sulfite), a chelating agent, and an acid or a base (or a salt thereof) such as lactic acid.

[3-4] Content of solubilized polymer in water-absorbent resin

In the method for producing a water-absorbent resin according to the present invention, the proportion of the solubilized polymer in the total mass of the water-absorbent resin raw material is not particularly limited, but is preferably 1 mass% or more and 60 mass% or less, more preferably 1 mass% or more and 50 mass% or less, still more preferably 1 mass% or more and 40 mass% or less, and particularly preferably 1 mass% or more and 30 mass% or less. In other words, in the production method according to the present invention, it is preferable to add the solubilized polymer such that the proportion of the solubilized polymer in the whole water-absorbent resin raw material falls within the above range. In the above description, the term "whole water-absorbent resin raw material" refers to all the raw materials used in the process of producing the water-absorbent resin (that is, the amount of the solubilized polymer to be added and the water-absorbent resin prepared from the aqueous monomer solution). More specific examples of the raw material include a solubilized polymer, and an ordinary water-absorbent resin (that is, non-recycled water-absorbent resin) and a raw material thereof (for example, acrylic acid (salt); basic composition; other monomers; internal crosslinking agent; additional substances (starch, etc.); polymerization initiator; and surface crosslinking agents). The proportion is a proportion of the solid content amount of the solubilized polymer in the solid content amount of all the water-absorbent resin raw materials.

[3-5] Apparatus and process for producing water-absorbent resin

Hereinafter, a production apparatus and a process thereof for carrying out the method for producing a water-absorbent resin according to the present invention will be described with reference to the drawings.
FIG. 1 is a schematic view illustrating a part of the process for producing a water-absorbent resin according to one embodiment of the present invention. Hereinafter, in the description of the drawings, the same elements are denoted by the same reference numerals, and redundant description will be omitted. Although a piping system is provided with a plurality of valves for adjusting the flow rate and the pressure, these valves are not illustrated in FIG. 1.
As illustrated in FIG. 1, the process for producing a water-absorbent resin includes a solubilization reaction vessel 10, a storage vessel 20, a monomer mixing apparatus 30, a Venturi tube 40, a polymerization apparatus 50, a gel pulverizer 60, a drying apparatus 70, and pipes connecting these apparatuses. The drying apparatus 70 is connected with a pipe for discharging the dried polymer. The unsaturated monomers supplied to the polymerization apparatus 50 are polymerized to produce a water-containing gel-like crosslinked polymer (water-containing gel). The water-containing gel-like crosslinked polymer is crushed by the gel pulverizer 60. The particulate water-containing gel-like crosslinked polymer crushed by the gel pulverizer is transferred to the drying apparatus 70. The drying apparatus 70 includes, for example, a paddle dryer, a fluidized bed dryer, a rotary dryer, and a steam tube dryer, and stirs and dries the water-containing gel.
The solubilization reaction vessel 10 is connected with a pipe 11 for supplying a decomposer and a pipe 12 for supplying a recovered water-absorbent resin as a raw material. The solubilization reaction vessel 10 and the storage vessel 20 are connected by piping, and the solubilized polymer decomposed in the solubilization reaction vessel 10 is transferred to the storage vessel 20. The storage vessel 20 preferably includes a heating means (heat retaining means). By providing such a heating means (heat retaining means) in the storage vessel 20, the solubilized polymer can be heated to a heated state, and the heated state can be maintained. In addition, a form may be adopted in which the solubilized polymer is brought into a heated state in advance before the storage vessel 20, and kept warm in the storage vessel 20 to maintain the heated state.
The heating means and/or heat retaining means provided in the storage vessel 20 is not particularly limited, but from the viewpoint of preventing adhesion and aggregation of the solubilized polymer, heating means of direct heat transfer using convection heat transfer and/or indirect heat transfer by heat conduction from a heating surface (contact

# EP 4 617 301 A1

surface with water-containing gel, heat source portion) of the storage vessel heated with a heat medium is preferable. More preferable heating means is a ventilation heating type for direct heat transfer and an outer wall heating type for indirect heat transfer. At the time of heating in the storage vessel, stirring may be performed, or heating may be performed as it is without stirring. When stirring is performed using a stirring blade or the like, the stirring portion may also be heated.

The solubilized polymer (preferably, the heated solubilized polymer) stored in the storage vessel 20 is transferred through a pipeline 21 to the Venturi tube 40. When a water-absorbent resin is produced using the solubilized polymer in a heated state, the pipeline 21 preferably has a heat retaining means in the pipe (heat retaining pipeline). Examples of the heat retaining means include a heat retaining means with direct heat transfer using convection heat transfer and/or indirect heat transfer using heat conduction from a heating surface (contact surface, heat source portion) of the pipe heated by the heat medium. A more preferable heat retaining means is a ventilation heating type for direct heat transfer and an outer wall heating type for indirect heat transfer.

The pipeline 21 includes a strainer 22. When the solubilized polymer passes through the strainer 22, water insoluble matters such as pulp which may be present in the solubilized polymer can be filtered off. The filtration of the solubilized polymer is not limited to such a form, and the filtration may be performed at any time before mixing in the production step. Thus, in a preferred embodiment, the method for producing a water-absorbent resin according to the present invention includes mixing the solubilized polymer in any one or more steps of the production step after filtering the solubilized polymer.

As the strainer 22, a bag filter or a candle filter can be used. The filtration with the strainer 22 is preferably performed with a fluid pressure difference before and after the strainer. In the form of FIG. 1, the strainer 22 is provided in the pipeline 21, but the installation position of the filtration means such as the strainer is not particularly limited, and may be any position before the solubilized polymer is mixed in the step of producing the water-absorbent resin.

Raw materials (for example, water, an internal crosslinking agent, and the like) are transferred from a pipe 31 for supplying an unsaturated monomer and another pipe (not illustrated), and mixed in the monomer mixing apparatus 30. To the Venturi tube 40, the solubilized polymer is transferred from the pipeline 21, and the aqueous monomer solution is transferred from the monomer mixing apparatus 30. In one preferred embodiment, the solubilized polymer and the aqueous monomer solution are continuously supplied into the pipe and mixed in the pipe. The pipe is not limited to the Venturi tube, and is not particularly limited as long as the solubilized polymer and the unsaturated monomer-containing aqueous solution are mixed. The mixing of the solubilized polymer and the aqueous monomer solution is not limited to the mixing in the Venturi tube, and a mixing apparatus such as a horizontal or vertical high-speed stirring type continuous mixing apparatus may be used. Specific examples of the high-speed stirring type continuous mixing apparatus include a Schugi mixer, a turbulizer (both manufactured by Hosokawa Micron Corporation), and a Loedige mixer (manufactured by Loedige).

Next, the mixture of the aqueous monomer solution and the solubilized polymer supplied from the Venturi tube 40 and the polymerization initiator supplied from the pipe 51 are continuously supplied to the polymerization apparatus 50 via pipes and mixed, and a polymerization reaction is performed to produce a water-containing gel (polymerization step).

Subsequently, the resulting water-containing gel is continuously supplied to the gel pulverizer 60. Next, the pulverized water-containing gel is continuously supplied to the next step (drying apparatus 70) via a pipe (drying step).

In the embodiment described above, continuous polymerization (continuous production method) is employed. The continuous production method is a method in which an aqueous monomer solution is continuously transferred into a polymerization apparatus, polymerized, and a water-containing gel formed by a polymerization reaction is continuously discharged from the polymerization apparatus. In this case, each operation in each step and between steps can be continuously performed, and thus, troubles such as blockage due to stop and restart of each apparatus can be avoided.

[3-6] Various physical properties of water-absorbent resin produced by method for producing water-absorbent resin according to present invention

[3-6-1] Colorability of water-absorbent resin (yellowness/YI value)

The YI value of the water-absorbent resin produced by the present method for producing a present water-absorbent resin is preferably 20.0 or less, more preferably 18.0 or less, and still more preferably 16.0 or less. The lower limit of the YI value is not particularly limited, and it may be 0. The YI value of the water-absorbent resin is an index indicating the colorability of the water-absorbent resin, and the fact that the YI value of the water-absorbent resin is within the above range means that coloring of the water-absorbent resin is further suppressed. The YI value of the water-absorbent resin can be measured by the method described in Examples.

[3-6-2] Water absorption properties of water-absorbent resin

As the water absorption property of the water-absorbent resin produced by the present method for producing a water-absorbent resin, CRC is preferably 25 g/g or more, more preferably 27 g/g or more, still more preferably 30 g/g or more, and particularly preferably 40 g/g or more. Higher CRC is preferable, but from the viewpoint of balance with other physical properties, CRC is preferably 70 g/g or less, and more preferably 50 g/g or less. AAP 0.3 is preferably 10 g/g or more, more preferably 15 g/g or more, more preferably 20 g/g or more, more preferably 22 g/g or more, still more preferably 24 g/g or more, particularly preferably 25 g/g or more, and most preferably 26 g/g or more. Higher AAP 0.3 is preferable, but from the viewpoint of balance with other physical properties, AAP 0.3 (absorption against pressure) of the water-absorbent resin may be 40 g/g or less. AAP 0.3 (absorption against pressure) can be controlled by a known technique, and can be controlled by, for example, the crosslinking density of the surface crosslinking layer. CRC and AAP 0.3 of the water-absorbent resin can be measured by the method described in Examples. When the water-absorbent resin is used for an absorbent article, in particular, a disposable diaper, it is preferable to satisfy at least one of the preferable range of CRC and the preferable range of AAP, and it is more preferable to satisfy both the ranges.

[4] Method for Producing Absorbent Article

According to the method for producing a water-absorbent resin of the present invention, when a water-absorbent resin is produced using a solubilized polymer as a part of a raw material, a water-absorbent resin with less coloring can be produced. As described above, the water-absorbent resin having less coloring is suitably used for producing an absorbent article. Thus, another embodiment of the present invention provides a method for producing an absorbent article using the water-absorbent resin produced by the method for producing a water-absorbent resin according to the present invention. The absorbent article produced by the production method is not particularly limited as long as it is an article containing a water-absorbent resin, and examples thereof include an article used for absorption.
The present invention is not limited to each embodiment described above, and it may be changed in various ways within the scope of the claims. Thus, an embodiment achieved by appropriately combining technical means described herein with different embodiments will be included in the technical scope of the present invention.

Examples

The present invention will be described more specifically according to the following Examples and Comparative Examples, but the present invention is not limited thereto. Examples obtained by appropriately combining the technical means disclosed in each Example are also included in the scope of the present invention. Unless otherwise specified, the following operations and measurement of physical properties and the like were performed under the conditions of room temperature (20°C or higher and 25°C or lower)/relative humidity of 40%RH or higher and 50%RH or lower.

(a) Evaluation of degradability

"Evaluation of degradability" of the water-absorbent resins in Examples and Comparative Examples was performed as follows. Specifically, water and peroxide (in some cases, a reducing agent or a transition metal ion) were mixed with a water-absorbent resin (simulated spent water-absorbent resin), the time point when the water-absorbent resin was placed at a predetermined temperature was taken as the start of decomposition, the decomposition treatment was continued at a predetermined temperature for 1 hour or 2 hours from the start of decomposition, and then whether there was any undissolved residue of the water-absorbent resin in the mixture was visually checked and evaluated.
"Degradability" was evaluated according to the following criteria:

<Degradability criteria>

◎: No undissolved residue of water-absorbent resin was observed after 1 hour passed;
O: Undissolved residue was observed after 1 hour passed, but no undissolved residue was observed after 2 hours passed;
△: Undissolved residue was observed after 2 hours passed (dissolved portion was 1/2 or more of total volume); and
✕: A large amount of undissolved residue was observed after 2 hours passed (dissolved portion was less than 1/2 of total volume).

(b) Solid content concentration of solubilized polymer aqueous solution

The solid content concentration of the solubilized polymer (aqueous solution) prepared in each of Examples and Comparative Examples was measured by the following method.

Specifically, first, a solubilized polymer aqueous solution having a mass Wa (g) was placed on an aluminum dish having a mass Wb (g), and dried in a hot air circulation oven at 180°C for 3 hours. The total mass Wc (g) of the solubilized polymer and the aluminum dish after drying was measured. The solid content concentration of the solubilized polymer aqueous solution was calculated according to the following Equation (1):

Solid content concentration of solubilized polymer aqueous solution (mass%) = {(mass Wc- mass Wb)/mass Wa} $\times$ 100 $\cdots$ Equation (1).  Equation (1).

(c) Evaluation of coloring of solubilized polymer aqueous solution (yellowness/YI value)

Evaluation of coloring of the solubilized polymer aqueous solutions prepared in Examples and Comparative Examples was performed using a spectrophotometer (Spectrophotometer SE7700) manufactured by Nippon Denshoku Industries Co., Ltd. Specifically, a square cell was filled with about 16 g of the solubilized polymer aqueous solution and placed in a sample holder in a permeate sample chamber. The YI value (Yellow Index) of the solubilized polymer aqueous solution was measured with the spectrophotometer under the conditions of room temperature (20°C or higher and 25°C or lower) and a humidity of 50RH%. As a measurement setting condition, transmission measurement was selected. In addition, a square cell (optical path 10 mm) as an accessory was used, and industrial pure water was used for reference calibration.

(d) Evaluation of coloring of water-absorbent resin (yellowness/YI value)

Evaluation of coloring of the water-absorbent resin produced using a solubilized polymer produced by decomposing the water-absorbent resin prepared in Examples and Comparative Examples as a part of a raw material was performed using a spectrophotometer (Spectrophotometer SE7700) manufactured by Nippon Denshoku Industries Co., Ltd. Specifically, the YI value (Yellow Index) was measured with the spectrophotometer under the conditions of room temperature (20°C or higher and 25°C or lower) and a humidity of 50RH%. As a measurement setting condition, reflection measurement was selected, and the measurement diameter was LAV (28 mm). In addition, the attached 35 $\varphi \times$ 15 H round cell and 35 $\varphi \times$ 15 H cell case were used, and the attached standard white board for powder was used as a standard.

(e) Weight-average molecular weight (Mw) of solubilized polymer

The weight-average molecular weight (Mw) of the solubilized polymer produced by decomposing the water-absorbent resin in Examples and Comparative Examples was measured according to the following procedure.

(Preparation of measurement sample)

First, a sample of the solubilized polymer was dissolved in the following solvent to prepare a solution having a concentration of 0.1 mass%. Thereafter, the resulting solution of the solubilized polymer was passed through a filter (GL chromatography disk manufactured by GL Sciences Inc., water base 25A, pore diameter 0.2 $\mu$m) to produce a measurement sample.
Solvent: Aqueous solution containing 60 mM of sodium dihydrogen phosphate dihydrate, 20 mM of disodium hydrogen phosphate dodecahydrate, and 400 mass ppm of sodium azide (pH 6.35 to 6.38)
Using the measurement sample, GPC measurement was performed under the following measurement conditions.

(GPC measurement)

GPC measurement on the measurement sample was performed using Viscotek TDAmax manufactured by Malvern Instruments Ltd. The measurement apparatus was equipped with a size exclusion chromatography, a refractive index detector, a light scattering detector, and a capillary viscometer. The measurement apparatus and measurement conditions were as follows.

Pump autosampler: Viscotek GPCmax (manufactured by Malvern Instruments Ltd)
Guard column: OHpak SB-G (manufactured by Showa Denko K.K.)
Column: Two columns of OHpak SB-806MHQ (manufactured by Showa Denko K.K.) connected in series
Detector: Viscotec TDAmax (manufactured by Malvern Instruments Ltd.)
Solvent: Aqueous solution containing 60 mM of sodium dihydrogen phosphate dihydrate, 20 mM of disodium hydrogen phosphate dodecahydrate, and 400 mass ppm of sodium azide (pH 6.35 to 6.38)
Flow rate: 0.5 mL/min

Injection volume: 100 μL

Pure water from which impurities were sufficiently removed was used as the water used in the GPC measurement. By allowing a sufficient amount of solvent to flow through the measurement apparatus, the GPC measurement was performed in a state where the baseline of the detection value was stable, in particular, in a state where there was no noise peak in the light scattering detector.

Calibration of the measurement apparatus was performed using polyoxyethylene glycol [weight-average molecular weight (Mw): 21966, molecular weight distribution (Mw/Mn): 1.0, differential refractive index (dn/dc): 0.132, solvent refractive index: 1.33] as a standard sample. The measurement was performed with the differential refractive index (dn/dc) of the solubilized polymer to be measured set to 0.12 and the solvent refractive index set to 1.33. Data collection and analysis of refractive index, light scattering intensity, and viscosity were performed using software (Viscotek OmniSEC4.7.0 (trade name)).

The weight-average molecular weight (Mw) of the solubilized polymer was calculated using the refractive index (RI) and light scattering intensity (angle: 7°) (LALS) obtained in the above measurement, and data obtained from a viscometer (DP).

(f) Remaining hydrogen peroxide amount

The amount of hydrogen peroxide remaining in the solubilized polymer aqueous solutions prepared in Examples and Comparative Examples was calculated by coloring the hydrogen peroxide remaining with titanium sulfate as a coloring reagent and measuring the absorbance thereof according to the following procedure.

Specifically, 0.50 g of the solubilized polymer aqueous solution, 8.5 g of industrial pure water, and 1.0 g of a 10 mass% calcium chloride aqueous solution were placed in a container, and mixed to precipitate the solubilized polymer. Thereafter, filtration was performed with a 0.2 μm chromatography disk. To the resulting filtrate, 0.30 g of 1 mol/L (2N) sulfuric acid was added, mixed, and then colored with 0.10 g of 30 mass% titanium (IV) sulfate.

As the absorbance, the absorbance at a wavelength of 410 nm was measured using a ratio beam spectrophotometer U-5100 (manufactured by Hitachi High-Technologies Corporation). At this time, a 10 mm square cell as an accessory was used, and industrial pure water was used as a standard.

Separately, a calibration curve sample having a known hydrogen peroxide concentration was reacted with titanium (IV) sulfate (colored with titanium (IV) sulfate) in the same manner as described above to prepare a calibration curve of "hydrogen peroxide amount-absorbance". "The amount of hydrogen peroxide remaining in the aqueous solution of the solubilized polymer (mass ppm; with respect to solubilized polymer solid content)" was calculated from the absorbance using the calibration curve.

(g) Mass average particle size (Gel D50) of water-containing gel particles and mass average particle size (Solid D50) obtained in terms of dry matter

(g-1) Mass average particle size of water-containing gel

The mass average particle size (Gel D50) of the water-containing gel particles in Examples and Comparative Examples was measured by the following method.

1.0 g of the water-containing gel particles (solid content α mass%) having a temperature of 20°C or higher and 25°C or lower was added to 1000 g of deionized water containing 0.08 mass% EMAL 20C (surfactant, manufactured by Kao Corporation) (hereinafter, referred to as "EMAL aqueous solution") to produce a dispersion. To the dispersion, a stirrer chip having a length of 50 mm × a diameter of 7 mm was added, and stirring was performed at 300 rpm for 60 minutes (1.14 L polypropylene container having a height of 21 cm and a diameter of 8 cm was used).

After completion of stirring, the dispersion was put into the central part of JIS standard sieves (diameter 21 cm, mesh size of sieve: 8 mm/4 mm/2 mm/1 mm/0.60 mm/0.30 mm/0.15 mm/0.075 mm) placed on a turntable. After washing out the total water-containing gel on the sieve using 200 g of the EMAL aqueous solution, 6000 g of the EMAL aqueous solution was poured evenly from the top while rotating the sieve by hands (20 rpm) from a height of 30 cm using a shower (72 holes, liquid volume: 6.0 L/min) so that the water-pouring range (50 cm$^2$) was spread over the entire sieve, and the water-containing gel was classified. The classified water-containing gel on the first stage sieve was drained for about 2 minutes and then weighed. The water-containing gel on the second stage and subsequent sieves were classified in the same manner, and the water-containing gel remaining on each sieve after draining was weighed.

The proportion in mass% was calculated from the mass of the water-containing gel remaining on each sieve by the following Equation (2). The mesh size of the sieves after draining was plotted on logarithmic probability paper as the particle size distribution of the water-containing gel according to the following Equation (3). The particle size corresponding to 50 mass% of cumulative oversize %R in the plot was defined as the mass average particle size (Gel D50) of the water-

containing gel:

$$X \, (\%) = (w/W) \times 100 \cdots \text{Equation (2)}$$

$$R(\alpha) \, [\text{mm}] = (20/w)^{1/3} \times r \cdots \text{Equation (3)}$$

Here,

X: mass% of water-containing gel remaining on each sieve after classification and draining [%]
w: mass of each water-containing gel remaining on each sieve after classification and draining [g]
W: total mass of water-containing gels remaining on sieves after classification and draining [g]
$R(\alpha)$: mesh size of sieve in terms of water-containing gel having solid content of $\alpha$ mass% [mm]
r: mesh size of sieve into which water-containing gel swollen in EMAL aqueous solution is classified [mm].

(g-2) Mass average particle size (Solid D50) obtained in terms of dry matter

The "mass average particle size (solid D50) of the water-containing gel particles obtained in terms of dry matter (solid content: 100 mass%)" was calculated according to the following Equation (4) from the mass average particle size (Gel D50) of the water-containing gel particles and the solid content concentration (mass%) of the water-containing gel particles.

(Solid D50) = (Gel D50) $\times$ {(solid content concentration of water-containing gel particles (mass %)/100)$\rfloor^{1/3}$    Equation (4)

In Formula (4), "solid content concentration of water-containing gel particles (mass%)" is a value calculated based on a loss on drying when the sample (recovered water-absorbent resin) is dried at 180°C for 3 hours.

(h) CRC

"CRC" is an abbreviation of "centrifuge retention capacity", and the CRC of the water-absorbent resin indicates an absorption ratio (unit: g/g) of the water-absorbent resin to a 0.90 mass% sodium chloride aqueous solution under no pressure for 30 minutes. A specific method for measuring CRC of the water-absorbent resin (the water-absorbent resin produced using the solubilized polymer as a part of the raw material) was as follows.
0.200 g of the water-absorbent resin was uniformly put in a bag (85 mm $\times$ 60 mm) made of a nonwoven fabric (product name: Heatlon Paper, model: GSP-22, manufactured by Nangoku Pulp Industry Co., Ltd.) and heat-sealed. The bag (containing the water-absorbent resin) was immersed in a large excess (usually about 500 mL) of a 0.90 mass% aqueous sodium chloride solution at room temperature. After 30 minutes, the bag was pulled up, and draining was performed for 3 minutes with the centrifugal force (250 G) described in ERT441.2-02 using a centrifuge (centrifuge manufactured by Kokusan Co., Ltd.: Model H-122), and then the weight W1 (g) of the bag was measured. In addition, the same operation was performed without using the water-absorbent resin, and the weight W0 (g) at that time was measured. From the measured values of W1 and W0, CRC (g/g) of the target water-absorbent resin was calculated according to the following Equation (5):

$$\text{CRC of water-absorbent resin (g/g)} = (W1 - W0)/(\text{mass of water-absorbent resin}) - 1$$
$$\cdots \text{Equation (5)}$$

(i) AAP 0.3

"AAP" is an abbreviation for "absorption against pressure", and the AAP of the water-absorbent resin indicates the absorption against pressure (unit: g/g) with respect to a 0.90 mass% aqueous sodium chloride solution. "AAP 0.3" means AAP under 0.3 psi pressure. AAP 0.3 of the water-absorbent resin was measured in accordance with ERT441.2-02. Specifically, 0.9 g of the water-absorbent resin was swollen under pressure of 2.07 kPa (21 g/cm$^2$, 0.3 psi) for 1 hour using a large excess of 0.9 mass% aqueous sodium chloride solution, and then AAP (absorption against pressure) was measured.

(j) Measurement of amount of transition metal ion in solubilized polymer

After nitric acid was added to the aqueous solution of the solubilized polymer, heating and microwave irradiation were repeated stepwise on the resulting aqueous solution, thereby preparing a decomposition product of the solubilized polymer. The resulting decomposition product was subjected to ICP emission spectrometry to determine the amount of transition metal ions in the solubilized polymer (mass ppm; with respect to solubilized polymer solid content).

(k) Measurement of amount of L-ascorbic acid in solubilized polymer

The solubilized polymer was analyzed by liquid chromatography equipped with a UV detector to determine the amount of remaining L-ascorbic acid in the solubilized polymer (mass ppm; with respect to solubilized polymer solid content).

<Method for producing simulated spent water-absorbent resin (1)>

[Production Example 1]

0.44 parts by mass of polyethylene glycol diacrylate (molecular weight: 523) was dissolved in 550 parts by mass of a 38 mass% aqueous sodium acrylate solution (neutralization rate: 71 mol%) to prepare a reaction liquid. Next, this reaction liquid was degassed for 30 minutes under a nitrogen gas atmosphere.

Subsequently, the reaction liquid was supplied to a jacketed stainless double-arm kneader having two sigma blades with an openable lid, and the system was replaced with nitrogen gas while the liquid temperature of the reaction liquid was maintained at 30°C. Subsequently, while the reaction liquid in the kneader was stirred, 0.24 parts by mass of ammonium persulfate and 0.012 parts by mass of L-ascorbic acid were added, and the polymerization reaction was started after about 1 minute. This polymerization was performed at 20°C or higher and 95°C or lower, and the water-containing gel-like crosslinked polymer (water-containing gel) was taken out after 60 minutes passed from the start of the polymerization.

The resulting water-containing gel was hot-air dried at 150°C for 100 minutes, and then the dried polymer was pulverized using a vibration mill, and further classified with JIS standard sieves having mesh sizes of 850 $\mu$m and 106 $\mu$m, thereby preparing a water-absorbent resin precursor (1) in an amorphous crushed form having an average particle size of 400 $\mu$m.

To 200 parts by mass of the resulting water-absorbent resin precursor (1), 1800 parts by mass of a 0.9 mass% aqueous sodium chloride solution (physiological saline) was added, and the resulting mixture was allowed to stand at room temperature for 8 hours or more, thereby preparing a simulated spent water-absorbent resin (1). The mass average particle size (Solid D50) obtained in terms of dry matter of the simulated spent water-absorbent resin (1) was 397 $\mu$m.

<Method for producing solubilized polymer>

[Example 1-1]

In a reaction vessel, 200.0 g of the simulated spent water-absorbent resin (1) prepared in Production Example 1 and 30.0 g of a 15 mass% aqueous sodium carbonate solution as a pH adjuster were added, and sufficiently mixed with a spatula. Next, 1.33 g of a 30 mass% aqueous hydrogen peroxide solution as a decomposer was added, and the mixture was further sufficiently mixed with a spatula. Here, when a pH test paper was attached to the mixture, the pH test paper showed a color of a pH in a range from 8.0 to 8.5. The mixture immediately after mixing did not become a uniform solution, but a solid content remained therein. Thus, the pH was measured using a pH test paper as described above (the same applies hereinafter).

Subsequently, the reaction vessel containing the mixture was immersed in a thermostatic bath at 80°C to start a decomposition reaction. After a lapse of 1 hour from immersion, the decomposition state of the mixture was checked using a spatula, and as a result, a part of the mixture remained as a gel-like material without being decomposed. After the decomposition reaction was further continued for 1 hour (total 2 hours), the decomposition state of the mixture was checked using a spatula. As a result, a gel-like material was not observed, and almost all the simulated spent water-absorbent resin (1) was solubilized. The simulated spent water-absorbent resin (1) that has been solubilized was used as a solubilized polymer (1-1).

The pH of an aqueous solution of the resulting solubilized polymer (1-1) was measured with a pH measuring instrument (pH meter: LAQUA act D-71 manufactured by Horiba, Ltd.), and the pH was 8.11. The aqueous solution of the solubilized polymer (1-1) had a solid content concentration of 8.14 mass%, a YI value of 3.41, and a weight-average molecular weight Mw of 501,000.

Subsequently, to remove hydrogen peroxide remaining in the aqueous solution of the solubilized polymer (1-1), 16.2 g of a 15 mass% aqueous sodium carbonate solution was added, and the mixture was stirred with a stirrer for 3 hours while maintaining the temperature at 25°C. The amount of remaining hydrogen peroxide (with respect to solubilized polymer solid content) in the aqueous solution of the solubilized polymer (1-1) was measured. The amount was 41 mass ppm, and it was confirmed that almost all hydrogen peroxide was removed.

[Comparative Example 1-1]

A decomposition treatment was performed in the same manner as in Example 1-1 except that 30.0 g of a 15 mass% aqueous sodium carbonate solution as a pH adjuster was not used. Specifically, in a reaction vessel, 200.0 g of the simulated spent water-absorbent resin (1) and 1.33 g of a 30 mass% aqueous hydrogen peroxide solution as a decomposer were added, and sufficiently mixed with a spatula. Here, when a pH test paper was attached to the mixture, the pH test paper showed a color of a pH in a range from 6.0 to 6.5.

Subsequently, the reaction vessel containing the mixture was immersed in a thermostatic bath at 80°C to start a decomposition reaction. After a lapse of 1 hour from immersion, the decomposition state of the mixture was checked using a spatula, and as a result, the simulated spent water-absorbent resin (1) was hardly solubilized. After the immersion was continued for another 1 hour (2 hours in total), the decomposition state of the mixture was checked. As a result, the mixture was hardly solubilized, and a solubilized polymer was not produced under this condition. Finally, when a pH test paper was attached to the mixture, the color of the pH test paper did not change from the color immediately after the preparation of the mixture.

[Comparative Example 1-2]

A decomposition treatment was performed in the same manner as in Example 1-1 except that 30.0 g of a 15 mass% aqueous sodium carbonate solution as a pH adjuster was changed to 46.1 g of the same. Specifically, in a reaction vessel, 200.0 g of the simulated spent water-absorbent resin (1) and 46.1 g of a 15 mass% aqueous sodium carbonate solution as a pH adjuster were added, and sufficiently mixed with a spatula. Next, 1.33 g of a 30 mass% aqueous hydrogen peroxide solution as a decomposer was added, and the mixture was further sufficiently mixed with a spatula. Here, when a pH test paper was attached to the mixture, the pH test paper showed a color of a pH in a range from 8.5 to 9.0.

Subsequently, the reaction vessel containing the mixture was immersed in a thermostatic bath at 80°C to start a decomposition reaction. After a lapse of 1 hour from immersion, the decomposition state of the mixture was checked using a spatula, and as a result, a part of the mixture was solubilized, but the mixture remained as a gel-like material without being decomposed. The decomposition state of the mixture was checked for another 1 hour (2 hours in total), and as a result, the mixture was hardly solubilized, and a solubilized polymer was not produced under this condition. Finally, when a pH test paper was attached to the mixture, the color of the pH test paper did not change from the color immediately after the preparation of the mixture.

[Example 1-2]

A decomposition treatment was performed in the same manner as in Example 1-1 except that the decomposition treatment temperature was changed from 80°C to 100°C. Specifically, in a reaction vessel, 200.0 g of the simulated spent water-absorbent resin (1) and 30.0 g of a 15 mass% aqueous sodium carbonate solution as a pH adjuster were added, and sufficiently mixed with a spatula. Next, 1.33 g of a 30 mass% aqueous hydrogen peroxide solution as a decomposer was added, and the mixture was further sufficiently mixed with a spatula. Here, when a pH test paper was attached to the mixture, the pH test paper showed a color of a pH in a range from 8.0 to 8.5.

Subsequently, the reaction vessel containing the mixture was immersed in a thermostatic bath at 100°C to start a decomposition reaction. After a lapse of 1 hour from the immersion, the decomposition state of the mixture was checked using a spatula. As a result, no gel-like material was observed, and almost all the simulated spent water-absorbent resins (1) were solubilized. The simulated spent water-absorbent resin (1) that has been solubilized was used as a solubilized polymer (1-2).

The pH of an aqueous solution of the resulting solubilized polymer (1-2) was measured with a pH measuring instrument (pH meter) in the same manner as in Example 1-1, and the pH was 8.05. The aqueous solution of the solubilized polymer (1-2) had a solid content concentration of 9.03 mass%, a YI value of 3.82, and a weight-average molecular weight Mw of 486,000.

Subsequently, to remove hydrogen peroxide remaining in the aqueous solution of the solubilized polymer (1-2), 16.2 g of a 15 mass% aqueous sodium carbonate solution was added, and the mixture was stirred with a stirrer for 3 hours while maintaining the temperature at 25°C. The amount of remaining hydrogen peroxide (with respect to solubilized polymer solid content) in the aqueous solution of the solubilized polymer (1-2) was measured. The amount was 3 mass ppm, and it was confirmed that almost all hydrogen peroxide was removed.

[Example 1-3]

(Particle size reduction step)

250.0 g of the simulated spent water-absorbent resin (1) prepared in Production Example 1 was placed in a mixer (Constant Speed Mixer Model 686CS manufactured by Fann Instrument Company), and a shearing treatment at 6000 rpm for 30 seconds was repeated 4 times (particle size reduction step), thereby preparing a simulated spent water-absorbent resin (2). The gel particle size (gel particle size of the simulated spent water-absorbent resin (1)) before the mixer treatment was 397 $\mu$m (mass average particle size (Solid D50) obtained in terms of dry matter), whereas the gel particle size (gel particle size of the simulated spent water-absorbent resin (2)) after the mixer treatment was 49 $\mu$m (mass average particle size (Solid D50) obtained in terms of dry matter). As a result, it was confirmed that the simulated spent water-absorbent resin (2) was reduced in particle size through the mixer treatment. Here, "the gel particle size of the water-absorbent resin (simulated spent water-absorbent resin (2)) is 49 $\mu$m in terms of dry matter" means that among all the particles (100 mass%) of the water-absorbent resin, the proportion of particles having a particle size of 49 $\mu$m or more and the proportion of the particles having a particle size of less than 49 $\mu$m are 50 mass% each. Thus, with respect to the simulated spent water-absorbent resin (2) produced by the above treatment, the proportion of particles having a particle size of 80 $\mu$m or less obtained in terms of dry matter was more than 50 mass%, specifically, about 70 mass%.

(Solubilization step)

The same decomposition treatment as in Example 1-1 was performed except that 200.0 g of the simulated spent water-absorbent resin (2) was used instead of 200.0 g of the simulated spent water-absorbent resin (1) (solubilization step). Specifically, in a reaction vessel, 200.0 g of the simulated spent water-absorbent resin (2) and 30.0 g of a 15 mass% aqueous sodium carbonate solution as a pH adjuster were added and sufficiently mixed with a spatula. Next, 1.33 g of a 30 mass% aqueous hydrogen peroxide solution as a decomposer was added, and the mixture was further sufficiently mixed with a spatula. Here, when a pH test paper was attached to the mixture, the pH test paper showed a color of a pH in a range from 8.0 to 8.5.

Subsequently, the reaction vessel containing the mixture was immersed in a thermostatic bath at 80°C to start a decomposition reaction. After a lapse of 1 hour from the immersion, the decomposition state of the mixture was checked using a spatula. As a result, no gel-like material was observed, and almost all the simulated spent water-absorbent resins (2) were solubilized. The simulated spent water-absorbent resin (2) that has been solubilized was used as a solubilized polymer (1-3).

The pH of an aqueous solution of the resulting solubilized polymer (1-3) was measured with a pH measuring instrument (pH meter) in the same manner as in Example 1-1, and the pH was 8.09. The aqueous solution of the solubilized polymer (1-3) had a solid content concentration of 9.05 mass%, a YI value of 3.83, and a weight-average molecular weight Mw of 214,000.

Subsequently, to remove hydrogen peroxide remaining in the aqueous solution of the solubilized polymer (1-3), 16.2 g of a 15 mass% aqueous sodium carbonate solution was added, and the mixture was stirred with a stirrer for 3 hours while maintaining the temperature at 25°C. The amount of remaining hydrogen peroxide (with respect to solubilized polymer solid content) in the aqueous solution of the solubilized polymer (1-3) was measured. The amount was 25 mass ppm, and it was confirmed that almost all the hydrogen peroxide was removed.

In addition, the solubilized polymer (1-3) does not use a transition metal (Fe or the like) or L-ascorbic acid as a decomposer in its production process. Thus, the content thereof was ND (1 mass ppm or less).

[Example 1-4]

A decomposition treatment was performed according to the same procedure as in Example 1-3 except that the particle size reduction step was changed as follows. The treatment was performed specifically as follows.

(Particle size reduction step)

A water-absorbent resin precursor (1) was prepared in the same manner as in Production Example 1, and used as a simulated spent water-absorbent resin (1'). The simulated spent water-absorbent resin (1') was pulverized with a pin mill and classified with a JIS standard sieve having a mesh size of 106 $\mu$m, thereby preparing a water-absorbent resin precursor (2) in an amorphous crushed form. The water-absorbent resin precursor (2) had a mass average particle size of 50 $\mu$m.

To 200 parts by mass of the resulting water-absorbent resin precursor (2), 1800 parts by mass of a 0.9 mass% aqueous sodium chloride solution (physiological saline) was added, and the resulting mixture was allowed to stand at room temperature for 8 hours or more to prepare a simulated spent water-absorbent resin (3). The gel particle size (mass average particle size (Solid D50) obtained in terms of dry matter) of the simulated spent water-absorbent resin (3) was 48 $\mu$m. Here, "the gel particle size of the water-absorbent resin (simulated spent water-absorbent resin (2)) is 48 $\mu$m in terms of dry matter" means that among all the particles (100 mass%) of the water-absorbent resin, the proportion of the particles having a particle size of 48 $\mu$m or more and the proportion of the particles having a particle size of less than 48 $\mu$m are 50 mass% each. Thus, with respect to the simulated spent water-absorbent resin (3) that has been obtained, the proportion of the particles having a particle size of 80 $\mu$m or less obtained in terms of dry matter was more than 50 mass%, specifically, about 70 mass%.

(Solubilization step)

The same decomposition treatment as in Example 1-1 (Example 1-3) was performed except that 200.0 g of the simulated spent water-absorbent resin (3) was used instead of 200.0 g of the simulated spent water-absorbent resin (1) (solubilization step). At this time, when a pH test paper was attached to the mixture, the pH test paper showed a color of a pH in a range from 8.0 to 8.5. In Example 1-1, it took 2 hours to solubilize the entire amount (almost 100%) of the simulated spent water-absorbent resin (1), but in Example 1-4, it took 1 hour to solubilize the entire amount of the simulated spent water-absorbent resin (3). The simulated spent water-absorbent resin (3) that has been solubilized was used as a solubilized polymer (1-4).

The pH of an aqueous solution of the resulting solubilized polymer (1-4) was measured with a pH measuring instrument (pH meter) in the same manner as in Example 1-1, and the pH was 8.09. The solubilized polymer (1-4) aqueous solution had a solid content concentration of 9.05 mass%, a YI value of 3.81, and a mass average particle size Mw of 221,000.

Subsequently, to remove hydrogen peroxide remaining in the aqueous solution of the solubilized polymer (1-4), 16.2 g of a 15 mass% aqueous sodium carbonate solution was added, and the mixture was stirred with a stirrer for 3 hours while maintaining the temperature at 25°C. The amount of remaining hydrogen peroxide (with respect to solubilized polymer solid content) in the aqueous solution of the solubilized polymer (1-4) was measured. The amount was 33 mass ppm, and it was confirmed that almost all the hydrogen peroxide was removed.

The solubilized polymer (1-4) does not use a transition metal (Fe or the like) or L-ascorbic acid as a decomposer in its production process. Thus, the content thereof was ND (1 mass ppm or less).

[Comparative Example 1-3]

A decomposition treatment was performed according to the same procedure as in Example 1-1 except that 1.33 g of the 30 mass% aqueous hydrogen peroxide solution as a decomposer was changed to 66.7 g of the same. Specifically, in a reaction vessel, 200.0 g of the simulated spent water-absorbent resin (1) and 66.7 g of a 30 mass% aqueous hydrogen peroxide solution as a decomposer were added, and sufficiently mixed with a spatula. Here, when a pH test paper was attached to the mixture, the pH test paper showed a color of a pH in a range from 6.0 to 6.5.

Subsequently, the reaction vessel containing the mixture was immersed in a thermostatic bath at 80°C to start a decomposition reaction. After a lapse of 1 hour from immersion, the decomposition state of the mixture was checked using a spatula, and as a result, the simulated spent water-absorbent resin (1) was hardly solubilized. After the immersion was continued for another 1 hour (2 hours in total), the decomposition state of the mixture was checked. As a result, the mixture was hardly solubilized, and a solubilized polymer was not produced under this condition. Finally, when a pH test paper was attached to the mixture, the color of the pH test paper did not change from the color immediately after the preparation of the mixture.

[Comparative Example 1-4]

A decomposition treatment was performed according to the same procedure as in Example 1-1 except that 1.33 g of the 30 mass% aqueous hydrogen peroxide solution as a decomposer was changed to 3.34 g of L-ascorbic acid and 0.46 g of iron sulfate heptahydrate, and 30.0 g of the 15 mass% aqueous sodium carbonate solution as a pH adjuster was not used. Specifically, in a reaction vessel, 200.0 g of the simulated spent water-absorbent resin (1), 3.34 g of L-ascorbic acid as a decomposer, and 0.46 g of iron sulfate heptahydrate were added, and sufficiently mixed with a spatula. Here, when a pH test paper was attached to the mixture, the pH test paper showed a color of a pH in range from 5.5 to 6.0.

Subsequently, the reaction vessel containing the mixture was immersed in a thermostatic bath at 80°C to start a decomposition reaction. After a lapse of 1 hour from immersion, the decomposition state of the mixture was checked using a spatula, and as a result, the simulated spent water-absorbent resin (1) was hardly solubilized. The immersion was further continued for 1 hour (2 hours in total), and the decomposition state of the mixture was then checked. As a result, a partially undissolved residue was observed, but most of the simulated spent water-absorbent resin (1) was solubilized. The simulated spent water-absorbent resin (1) that has been solubilized was used as a solubilized polymer (C1-4).

The pH of an aqueous solution of the resulting solubilized polymer (C1-4) was measured with a pH measuring instrument (pH meter), and the pH was 5.56. The aqueous solution of the solubilized polymer (C1-4) had a solid content concentration of 9.45 mass%, a YI value of 89.71, and a weight-average molecular weight Mw of 85,000.

<Method for producing simulated spent water-absorbent resin (4)>

[Production Example 2]

Into a reaction vessel, 244.9 parts by mass of acrylic acid, 0.71 parts by mass (0.040 mol% with respect to the carboxyl group-containing unsaturated monomer) of polyethylene glycol diacrylate (molecular weight: 523) as an internal crosslinking agent, 1.83 parts by mass of a 1.0 mass% aqueous solution of diethylenetriamine pentaacetic acid·trisodium (DTPA·3Na), 103.7 parts by mass of a 48.5 mass% aqueous sodium hydroxide solution, and 389.0 parts by mass of deionized water were put and mixed to prepare an aqueous monomer solution (S1').

Next, the aqueous monomer solution (S1') was cooled with stirring. When the liquid temperature reached 40.0°C, 100.9 parts by mass of a 48.5 mass% aqueous sodium hydroxide solution adjusted to 40°C was added and mixed to prepare an aqueous monomer solution (S1). At this time, the temperature of the aqueous monomer solution (S1) was raised to 78.2°C because of the second stage neutralization heat immediately after the preparation. Immediately after the 48.5 mass% aqueous sodium hydroxide solution was started to be mixed, precipitates were observed, but the precipitates were gradually dissolved to form a clear homogeneous solution.

Next, to the aqueous monomer solution (S1) in a stirred state, 12.1 parts by mass of a 4.0 mass% aqueous sodium persulfate solution was added, and immediately thereafter, the mixture was poured into a stainless tray-shaped container in an open-to-atmosphere system. A hot plate was used as the tray-shaped container, and heating was performed until the surface temperature reached 40°C. The time from the start of the second stage neutralization to the pouring of the aqueous monomer solution (S1) into the tray-shaped container was 55 seconds, and the polymerization reaction was started 60 seconds after the pouring of the aqueous monomer solution (S1) into the tray-shaped container (polymerization induction time). In the polymerization reaction, the reaction product expanded and foamed in all directions while generating water vapor. After the reaction, the reaction product was shrunk to a slightly larger size than that of the tray-shaped container. After a lapse of 3 minutes from the start of the polymerization reaction, the reaction product was taken out as a water-containing gel-like crosslinked polymer (water-containing gel) (S1). These series of operations were performed in an open-to-atmosphere system.

The water-containing gel (S1) produced in the polymerization reaction was cut into a strip shape and subjected to gel pulverization with a meat chopper having a die diameter of 7.5 mm. Thereafter, the water-containing gel (S1) in the form of particles was placed on a 50-mesh wire gauze and dried with hot air at 190°C for 60 minutes. Thereafter, the dried polymer was pulverized using a vibration mill. Next, the pulverized product was classified with JIS standard sieves having mesh sizes of 850 μm and 150 μm. These operations prepared a water-absorbent resin precursor (2) in an amorphous crushed form.

To 100 parts by mass of the resulting water-absorbent resin precursor (2), a surface crosslinking agent solution containing 0.030 parts by mass of ethylene glycol diglycidyl ether, 1.35 parts by mass of propylene glycol, and 3.15 parts by mass of deionized water was added, and the resulting mixture was mixed. Subsequently, the resulting mixture was heat-treated at 100°C for 45 minutes to surface-crosslink the water-absorbent resin precursor (2), thereby preparing a water-absorbent resin (2).

The resulting water-absorbent resin (2) had a CRC of 35.9 g/g, an AAP 0.3 of 29.4 g/g, and a YI value (yellow index) of 10.3.

To 200 parts by mass of the water-absorbent resin (2), 1800 parts by mass of a 0.9 mass% aqueous sodium chloride solution (physiological saline) was added, and the resulting mixture was allowed to stand at room temperature for 8 hours or more to prepare a simulated spent water-absorbent resin (4). The mass average particle size (Solid D50) obtained in terms of dry matter of the simulated spent water-absorbent resin (4) was 385 μm.

<Method for producing solubilized polymer>

[Example 1-5]

In a reaction vessel, 200.0 g of the simulated spent water-absorbent resin (4) prepared in Production Example 2 and 1.60 g of a 48.5 mass% aqueous sodium hydroxide solution as a pH adjuster were added, and sufficiently mixed with a spatula. Next, 1.33 g of a 30 mass% aqueous hydrogen peroxide solution as a decomposer was added, and the mixture was further sufficiently mixed with a spatula. Here, when a part of the mixture in the reaction vessel was taken out and a pH test paper was attached to the mixture, the pH test paper showed a color of a pH in a range from 6.5 to 7.0.

Subsequently, the reaction vessel containing the mixture was immersed in a thermostatic bath at 100°C to start a decomposition reaction. After a lapse of 45 minutes from the immersion, the decomposition state of the mixture was checked using a spatula. As a result, no gel-like material was observed, and almost all the simulated spent water-absorbent resin (4) was solubilized. The simulated spent water-absorbent resin (4) that has been solubilized was used as a solubilized polymer (1-5).

The pH of an aqueous solution of the resulting solubilized polymer (1-5) was measured using a pH measuring instrument (pH meter) in the same manner as in Example 1-1, and the pH was 6.93. The aqueous solution of the solubilized polymer (1-5) had a solid content concentration of 10.4 mass%, a YI value of 9.20, and a weight-average molecular weight Mw of 541,000. The amount of remaining hydrogen peroxide (with respect to solubilized polymer solid content) in the aqueous solution of the solubilized polymer (1-5) was 1650 mass ppm.

[Example 1-6]

To remove hydrogen peroxide remaining in the aqueous solution of the solubilized polymer (1-5) prepared in Example 1-5, 1.89 g of a 48.5 mass% aqueous sodium hydroxide solution was added, and the mixture was stirred with a stirrer for 3 hours while maintaining the temperature at 25°C. The amount of remaining hydrogen peroxide (with respect to solubilized polymer solid content) in the aqueous solution of the solubilized polymer was measured, and the amount was 2 mass ppm. The solubilized polymer from which hydrogen peroxide was removed was thus used as a solubilized polymer (1-6).

<Method for producing simulated spent water-absorbent resin (5)>

[Production Example 3]

A simulated spent water-absorbent resin (5) was produced by the same procedure as in Production Example 1 except that the temperature during polymerization was changed to 30°C or higher and 95°C or lower in place of 20°C or higher and 95°C or lower. The mass average particle size (Solid D50) obtained in terms of dry matter of the simulated spent water-absorbent resin (5) was 403 μm.

<Method for producing solubilized polymer>

[Example 1-7]

In a reaction vessel, 50 g of the simulated spent water-absorbent resin (5), 7.50 g of a 15 mass% aqueous sodium carbonate solution as a pH adjuster, and 0.33 g of a 30 mass% aqueous hydrogen peroxide solution as a decomposer were added to form a mixture. Here, when a part of the mixture in the reaction vessel was taken out and a pH test paper was attached to the mixture, the pH test paper showed a color of a pH in a range from 8.0 to 8.5. The addition amount of the pH adjuster was adjusted so that the pH of the mixture fell within a range from 8.0 to 8.5.

Subsequently, the reaction vessel containing the mixture was immersed in a thermostatic bath at 80°C to start a decomposition reaction. After a lapse of 1 hour, the decomposition state of the mixture was checked, and as a result, a part of the mixture remained as a gel-like material without being decomposed. After the decomposition reaction was further continued for 1 hour (total 2 hours), the decomposition state of the mixture was checked using a spatula. As a result, a gel-like material was not observed, and almost all the simulated spent water-absorbent resin (5) was decomposed and solubilized.

The pH of an aqueous solution of the solubilized polymer thus produced was measured with a pH measuring instrument (pH meter) in the same manner as in Example 1-1, and the pH was 8.23.

Next, to remove hydrogen peroxide remaining in the aqueous solution, 4.0 g of a 15 mass% aqueous sodium carbonate solution was added, and the mixture was stirred for 3 hours while the temperature was maintained to 25°C.

Finally, p-methoxyphenol as a polymerization inhibitor was added in an amount of 100 mass ppm with respect to the solid content of the solubilized polymer, followed by mixing. The aqueous solution of the solubilized polymer (1-7) thus produced had a solid content concentration of 8.1 mass% and a weight-average molecular weight Mw of 377,000. The contents of L-ascorbic acid, hydrogen peroxide, and transition metal ions in the aqueous solution of the solubilized polymer (1-7) were measured, and the contents were 2 mass ppm, 10 mass ppm, and 5 mass ppm, respectively (all of them were with respect to solubilized polymer solid content). The YI value in the solubilized polymer (1-7) was 8.00.

The results of Examples and Comparative Examples are shown in Tables 1 and 2.

[Table 1]

[Table 1]

| | Degradability | Solubilized polymer | | |
|---|---|---|---|---|
| | | Mw | YI value (-) | Remaining hydrogen peroxide amount (mass ppm) |
| Example 1-1 | ○ | 501,000 | 3.41 | 41 |
| Comparative Example 1-1 | × | Not decomposed | Not decomposed | - |
| Comparative Example 1-2 | × | Not decomposed | Not decomposed | - |
| Example 1-2 | ◎ | 486,000 | 3.82 | 3 |
| Example 1-3 | ◎ | 214,000 | 3.83 | 25 |
| Example 1-4 | ◎ | 221,000 | 3.81 | 33 |
| Comparative Example 1-3 | × | Not decomposed | Not decomposed | - |
| Comparative Example 1-4 | Δ | 85,000 | 89.71 | - |
| Example 1-5 | ◎ | 541,000 | 9.20 | 1650 |
| Example 1-6 | ◎ | 541,000 | 9.20 | 2 |
| Example 1-7 | ○ | 377,000 | 8.00 | 10 |

[Table 2-1]

[Table 2]

| | Particle size reduction step | Decomposer (parts by mass/100 parts by mass of recovered water-absorbent resin) | | pH adjuster (parts by mass/100 parts by mass of recovered water-absorbent resin) | | pH | | Decomposition temperature (°C) | Decomposition time | Peroxide removal treatment |
| | | $H_2O_2$ | Others | Sodium carbonate | Sodium hydroxide | Before decomposition (Immediately after mixing) | After decomposition | | | |
|---|---|---|---|---|---|---|---|---|---|---|
| Example 1-1 | None | 2.0 | - | 22.4 | - | More than 8.0 Less than 8.5 | 8.11 | 80 | 2 hr | Performed |
| Comparative Example 1-1 | None | 2.0 | - | - | - | More than 6.0 Less than 6.5 | More than 6.0 Less than 6.5 | 80 | 2 hr | - |
| Comparative Example 1-2 | None | 2.0 | - | 34.5 | - | More than 8.5 Less than 9.0 | More than 8.5 Less than 9.0 | 80 | 2 hr | - |
| Example 1-2 | None | 2.0 | - | 22.4 | - | More than 8.0 Less than 8.5 | 8.05 | 100 | 1 hr | Performed |
| Example 1-3 | Performed (Mixer shear treatment) | 2.0 | - | 22.4 | - | More than 8.0 Less than 8.5 | 8.09 | 80 | 1 hr | Performed |
| Example 1-4 | Performed (Pin milling) | 2.0 | - | 22.4 | - | More than 8.0 Less than 8.5 | 8.09 | 80 | 1 hr | Performed |
| Comparative Example 1-3 | None | 100 | - | - | - | More than 6.0 Less than 6.5 | More than 6.0 Less than 6.5 | 80 | 2 hr | - |
| Comparative Example 1-4 | None | - | L-as*) 16.7 Iron sulfate 2.3 | - | - | More than 5.5 Less than 6.0 | 5.56 | 80 | 2 hr | - |

*L-as: L-ascorbic acid

EP 4 617 301 A1

[Table 2-2]

[Table 2(continued)]

| | Particle size reduction step | Decomposer (parts by mass/recovered water-absorbent resin 100 parts by mass) | | pH adjuster (parts by mass/100 parts by mass of recovered water-absorbent resin) | | pH | | Decomposition temperature (°C) | Decomposition time | Peroxide removal treatment |
| | | $H_2O_2$ | Others | Sodium carbonate | Sodium hydroxide | Before decomposition (Immediately after mixing) | After decomposition | | | |
|---|---|---|---|---|---|---|---|---|---|---|
| Example 1-5 | None | 2.0 | - | - | 3.88 | More than 6.5 Less than 7.0 | 6.93 | 100 | 45 min | Not per-formed |
| Example 1-6 | None | 2.0 | - | - | 3.88 | More than 6.5 Less than 7.0 | 6.93 | 100 | 45 min | Performed |
| Example 1-7 | None | 2.0 | - | 22.5 | - | More than 8.0 Less than 8.5 | 8.23 | 80 | 2 hr | Performed |

From the results in Table 1, as in Example 1-1, when a mixture containing the water-absorbent resin, water, and hydrogen peroxide is decomposed under the condition of pH 6.5 or more and 8.5 or less, the mixture is decomposed in a relatively short time, and a solubilized polymer aqueous solution with less coloring is produced. In addition, by increasing the decomposition temperature (Example 1-2, Example 1-5, and Example 1-6) and decreasing the particle size of the water-absorbent resin before decomposition (Example 1-3 and Example 1-4), the decomposition time can be further significantly shortened. In addition, it is found that when the particle size of the water-absorbent resin before decomposition is reduced, the molecular weight Mw of the resulting solubilized polymer is small and the degradability is extremely improved although the decomposition time is relatively short, that is, 1 hour.

On the other hand, in Comparative Examples 1-1 and 1-2 in which the pH range is out of the range of 6.5 or more and 8.5 or less, the degradability is significantly poor. As compared with Comparative Example 1-3, when the pH range was out of the range of 6.5 or more and 8.5 or less, the degradability was not improved even when the amount of hydrogen peroxide was greatly increased.

Comparative Example 1-4 is an example in which decomposition was performed using a reducing agent and transition metal ions without adding hydrogen peroxide, but unfortunately, the YI of the resulting solubilized polymer aqueous solution is very large. In addition, the molecular weight Mw of the solubilized polymer was 85,000, and the molecular weight was excessively reduced.

<Method for producing water-absorbent resin containing solubilized polymer as part of raw material>

[Example 2-1]

In a reaction vessel, 90.2 g of acrylic acid, 26.0 g of ion-exchanged water, 0.36 g of polyethylene glycol diacrylate (molecular weight: 523) as an internal crosslinking agent, and 151.2 g of the aqueous solution of the solubilized polymer (1-1) (solid content concentration: 8.14 mass%) prepared in Example 1-1 were added and stirred. Next, the reaction vessel was immersed in an ice bath, and 75.33 g of an aqueous sodium hydroxide solution (solid content concentration: 48.5 mass%) was added little by little while the reaction liquid was stirred so that the temperature of the reaction liquid did not exceed 30°C, and then the reaction liquid was subjected to nitrogen gas replacement for 30 minutes.

Subsequently, the reaction vessel was immersed in a warm water bath at 50°C, and 0.167 g of sodium persulfate and 0.0007 g of L-ascorbic acid were added at the time when the temperature of the reaction liquid reached 30°C while the reaction liquid was stirred, and polymerization started after about 10 minutes. Thereafter, the polymerization was continued while the vessel was immersed in a warm water bath, and the water-containing gel (2-1) was taken out after 60 minutes from the start of the polymerization. The resulting water-containing gel (2-1) was pulverized with a meat chopper having a die diameter of 7.5 mm, and then dried with hot air at 190°C for 20 minutes. Subsequently, the dried polymer was pulverized using a vibration mill, and further classified with JIS standard sieves having mesh sizes of 850 $\mu$m and 150 $\mu$m, thereby preparing a water-absorbent resin precursor (2-1) in an amorphous crushed form. The water-absorbent resin precursor (2-1) had a mass average particle size of 350 $\mu$m.

With 100 parts by mass of the resulting water-absorbent resin precursor (2-1), a surface crosslinking agent solution containing 0.030 parts by mass of ethylene glycol diglycidyl ether, 1.0 part by mass of propylene glycol, and 3.0 parts by mass of deionized water were uniformly mixed, and a heat treatment was performed at 100°C for 45 minutes. Thereafter, cooling was performed, and an aqueous solution containing 1 part by mass of deionized water and 0.01 parts by mass of trisodium diethylenetriamine pentaacetate was uniformly mixed. The mixture was dried at 60°C for 1 hour, and then classified with a JIS standard sieve having a mesh size of 710 $\mu$m, and 0.3 parts by mass of hydrotalcite (product name: DHT-6, manufactured by Kyowa Chemical Industry Co., Ltd., $Mg_6Al_2(OH)_{16}CO_3 \cdot 4H_2O$, volume average particle size: 0.5 $\mu$m) was uniformly mixed, thereby preparing a water-absorbent resin (2-1). The water-absorbent resin (2-1) had a CRC of 47.5 (g/g), an AAP 0.3 of 26.5 (g/g), and a YI value of 14.76.

[Example 2-2]

In a reaction vessel, 90.2 g of acrylic acid, 26.0 g of ion-exchanged water, 0.79 g of polyethylene glycol diacrylate (molecular weight: 523) as an internal crosslinking agent, and 151.2 g of the aqueous solution of the solubilized polymer (1-2) (solid content concentration: 9.03 mass%) prepared in Example 1-2 were added and stirred. Next, the reaction vessel was immersed in an ice bath, and 75.33 g of an aqueous sodium hydroxide solution (solid content concentration: 48.5 mass%) was added little by little while the reaction liquid was stirred so that the temperature of the reaction liquid did not exceed 30°C, and then the reaction liquid was subjected to nitrogen gas replacement for 30 minutes.

Subsequently, the reaction vessel was immersed in a warm water bath at 50°C, and 0.167 g of sodium persulfate and 0.0007 g of L-ascorbic acid were added at the time when the temperature of the reaction liquid reached 30°C while the reaction liquid was stirred, and polymerization started after about 10 minutes. Thereafter, the polymerization was continued while the vessel was immersed in a warm water bath, and the water-containing gel (2-2) was taken out after 60 minutes from the start of the polymerization. The resulting water-containing gel (2-2) was pulverized with a meat chopper having a die diameter of 7.5 mm, and then dried with hot air at 190°C for 20 minutes. Subsequently, the dried polymer was pulverized using a vibration mill, and further classified with JIS standard sieves having mesh sizes of 850 $\mu$m and 150 $\mu$m, thereby preparing a water-absorbent resin precursor (2-2) in an amorphous crushed form. The water-absorbent resin precursor (2-2) had a mass average particle size of 350 $\mu$m.

With 100 parts by mass of the resulting water-absorbent resin precursor (2-2), a surface crosslinking agent solution containing 0.030 parts by mass of ethylene glycol diglycidyl ether, 1.0 part by mass of propylene glycol, and 3.0 parts by mass of deionized water were uniformly mixed, and a heat treatment was performed at 100°C for 45 minutes. Thereafter, cooling was performed, and an aqueous solution containing 1 part by mass of deionized water and 0.01 parts by mass of trisodium diethylenetriamine pentaacetate was uniformly mixed. The mixture was dried at 60°C for 1 hour, and then classified with a JIS standard sieve having a mesh size of 710 $\mu$m, and 0.3 parts by mass of hydrotalcite (product name: HT-1 NC, manufactured by Sakai Chemical Industry Co., Ltd., chemical formula: $Mg_4Al_2(OH)12CO_3 \cdot 3H_2O$, volume average particle size: 0.58 $\mu$m) was uniformly mixed to produce a water-absorbent resin (2-2). The water-absorbent resin (2-2) had a CRC of 36.1 (g/g), an AAP 0.3 of 32.0 (g/g), and a YI value of 15.16.

[Example 2-3]

In a reaction vessel, 90.2 g of acrylic acid, 26.0 g of ion-exchanged water, 0.79 g of polyethylene glycol diacrylate (molecular weight: 523) as an internal crosslinking agent, and 151.2 g of the aqueous solution of the solubilized polymer (1-3) (solid content concentration: 9.05 mass%) prepared in Example 1-3 were added and stirred. Next, the reaction vessel was immersed in an ice bath, and 75.33 g of an aqueous sodium hydroxide solution (solid content concentration: 48.5 mass%) was added little by little while the reaction liquid was stirred so that the temperature of the reaction liquid did not exceed 30°C, and then the reaction liquid was subjected to nitrogen gas replacement for 30 minutes.

Subsequently, the reaction vessel was immersed in a warm water bath at 50°C, and 0.167 g of sodium persulfate and 0.0007 g of L-ascorbic acid were added at the time when the temperature of the reaction liquid reached 30°C while the reaction liquid was stirred, and polymerization started after about 10 minutes. Thereafter, the polymerization was continued while the vessel was immersed in a warm water bath, and the water-containing gel (2-3) was taken out after 60 minutes from the start of the polymerization. The resulting water-containing gel (2-3) was pulverized with a meat chopper having a die diameter of 7.5 mm, and then dried with hot air at 190°C for 20 minutes. Subsequently, the dried polymer was pulverized using a vibration mill, and further classified with JIS standard sieves having mesh sizes of 850 $\mu$m and 150 $\mu$m, thereby preparing a water-absorbent resin precursor (2-3) in an amorphous crushed form. The water-absorbent resin precursor (2-3) had a mass average particle size of 350 $\mu$m.

With 100 parts by mass of the resulting water-absorbent resin precursor (2-3), a surface crosslinking agent solution containing 0.030 parts by mass of ethylene glycol diglycidyl ether, 1.0 part by mass of propylene glycol, and 3.0 parts by mass of deionized water were uniformly mixed, and a heat treatment was performed at 100°C for 45 minutes. Thereafter, cooling was performed, and an aqueous solution containing 1 part by mass of deionized water and 0.01 parts by mass of trisodium diethylenetriamine pentaacetate was uniformly mixed. The mixture was dried at 60°C for 1 hour, and then classified with a JIS standard sieve having a mesh size of 710 $\mu$m, and 0.3 parts by mass of hydrotalcite (product name: HT-P, manufactured by Sakai Chemical Industry Co., Ltd., chemical formula: $Mg_{4.5}Al_2(OH)_{13}CO_3 \cdot 3.5H_2O$, volume average particle size: 0.45 $\mu$m) was uniformly mixed, thereby preparing a water-absorbent resin (2-3). The water-absorbent resin (2-3) had a CRC of 47.4 (g/g), an AAP 0.3 of 26.3 (g/g), and a YI value of 15.17.

[Example 2-4]

In a reaction vessel, 90.2 g of acrylic acid, 26.0 g of ion-exchanged water, 0.36 g of polyethylene glycol diacrylate (molecular weight: 523) as an internal crosslinking agent, and 151.2 g of the aqueous solution of the solubilized polymer (1-1) (solid content concentration: 8.14 mass%) prepared in Example 1-1 were added and stirred. Next, the reaction vessel was immersed in an ice bath, and 75.33 g of an aqueous sodium hydroxide solution (solid content concentration: 48.5 mass%) was added little by little while the reaction liquid was stirred so that the temperature of the reaction liquid did not exceed 30°C, and then the reaction liquid was subjected to nitrogen gas replacement for 30 minutes.

Subsequently, the reaction vessel was immersed in a warm water bath at 50°C, and 0.167 g of sodium persulfate and 0.0007 g of L-ascorbic acid were added at the time when the temperature of the reaction liquid reached 30°C while the reaction liquid was stirred, and polymerization started after about 10 minutes. Thereafter, the polymerization was continued while the vessel was immersed in a warm water bath, and the water-containing gel (2-4) was taken out after 60 minutes from the start of the polymerization. The resulting water-containing gel (2-4) was pulverized with a meat chopper having a die diameter of 7.5 mm, and then dried with hot air at 190°C for 20 minutes. Subsequently, the dried polymer was pulverized using a vibration mill, and further classified with JIS standard sieves having mesh sizes of 850 $\mu$m and 150 $\mu$m, thereby preparing a water-absorbent resin precursor (2-4) in an amorphous crushed form. The water-absorbent resin precursor (2-4) had a mass average particle size of 350 $\mu$m.

With 100 parts by mass of the resulting water-absorbent resin precursor (2-4), a surface crosslinking agent solution containing 0.030 parts by mass of ethylene glycol diglycidyl ether, 1.0 part by mass of propylene glycol, and 3.0 parts by mass of deionized water were uniformly mixed, and a heat treatment was performed at 100°C for 45 minutes. Thereafter, cooling was performed, and an aqueous solution containing 1 part by mass of deionized water and 0.01 parts by mass of trisodium diethylenetriamine pentaacetate was uniformly mixed. The mixture was dried at 60°C for 1 hour, and then classified with a JIS standard sieve having a mesh size of 710 $\mu$m, and 0.5 parts by mass of tricalcium phosphate (manufactured by Wako Pure Chemical Industries, Ltd., CAS No. 7758-87-4) was uniformly mixed, thereby preparing a water-absorbent resin (2-4). The water-absorbent resin (2-4) had a CRC of 47.4 (g/g), an AAP 0.3 of 26.8 (g/g), and a YI value of 14.63.

[Example 2-5]

In a reaction vessel, 90.2 g of acrylic acid, 26.0 g of ion-exchanged water, 0.79 g of polyethylene glycol diacrylate (molecular weight: 523) as an internal crosslinking agent, and 151.2 g of the aqueous solution of the solubilized polymer (1-1) (solid content concentration: 8.14 mass%) prepared in Example 1-1 were added and stirred. Next, the reaction vessel was immersed in an ice bath, and 75.33 g of an aqueous sodium hydroxide solution (solid content concentration: 48.5 mass%) was added little by little while the reaction liquid was stirred so that the temperature of the reaction liquid did not exceed 30°C, and then the reaction liquid was subjected to nitrogen gas replacement for 30 minutes.

Subsequently, the reaction vessel was immersed in a warm water bath at 50°C, and 0.167 g of sodium persulfate and 0.0007 g of L-ascorbic acid were added at the time when the temperature of the reaction liquid reached 30°C while the reaction liquid was stirred, and polymerization started after about 10 minutes. Thereafter, the polymerization was continued while the vessel was immersed in a warm water bath, and the water-containing gel (2-5) was taken out after 60 minutes from the start of the polymerization. The resulting water-containing gel (2-5) was pulverized with a meat chopper having a die diameter of 7.5 mm, and then dried with hot air at 190°C for 20 minutes. Subsequently, the dried polymer was pulverized using a vibration mill, and further classified with JIS standard sieves having mesh sizes of 850 $\mu$m and 150 $\mu$m, thereby preparing a water-absorbent resin precursor (2-5) in an amorphous crushed form. The water-absorbent resin precursor (2-5) had a mass average particle size of 350 $\mu$m.

With 100 parts by mass of the resulting water-absorbent resin precursor (2-5), a surface crosslinking agent solution containing 0.025 parts by mass of ethylene glycol diglycidyl ether, 0.40 parts by mass of ethylene carbonate, 0.60 parts by mass of propylene glycol, and 3.0 parts by mass of deionized water was uniformly mixed, and heat treatment was performed at 190°C for 30 minutes. Thereafter, cooling was performed, and an aqueous solution containing 1 part by mass of deionized water and 0.01 parts by mass of trisodium diethylenetriamine pentaacetate was uniformly mixed. The mixture was dried at 60°C for 1 hour, then classified with a JIS standard sieve having a mesh size of 710 $\mu$m, and 0.3 parts by mass of silicon dioxide (trade name: AEROSIL 200, manufactured by Nippon Aerosil Co., Ltd.) was uniformly added, thereby preparing a water-absorbent resin (2-5). The water-absorbent resin (2-5) had a CRC of 35.1 (g/g), an AAP 0.3 of 29.1 (g/g), and a YI value of 15.21.

[Example 2-6]

In a reaction vessel, 90.2 g of acrylic acid, 26.0 g of ion-exchanged water, 0.79 g of polyethylene glycol diacrylate (molecular weight: 523) as an internal crosslinking agent, and 151.2 g of the aqueous solution of the solubilized polymer (1-2) (solid content concentration: 9.03 mass%) prepared in Example 1-2 were added and stirred. Next, the reaction vessel was immersed in an ice bath, and 75.33 g of an aqueous sodium hydroxide solution (solid content concentration: 48.5 mass%) was added little by little while the reaction liquid was stirred so that the temperature of the reaction liquid did not exceed 30°C, and then the reaction liquid was subjected to nitrogen gas replacement for 30 minutes.

Subsequently, the reaction vessel was immersed in a warm water bath at 50°C, and 0.167 g of sodium persulfate and 0.0007 g of L-ascorbic acid were added at the time when the temperature of the reaction liquid reached 30°C while the reaction liquid was stirred, and polymerization started after about 10 minutes. Thereafter, the polymerization was continued while the vessel was immersed in a warm water bath, and the water-containing gel (2-6) was taken out after 60 minutes from the start of the polymerization. The resulting water-containing gel (2-6) was pulverized with a meat chopper having a die diameter of 7.5 mm, and then dried with hot air at 190°C for 20 minutes. Subsequently, the dried polymer was pulverized using a vibration mill, and further classified with JIS standard sieves having mesh sizes of 850 $\mu$m and 150 $\mu$m, thereby preparing a water-absorbent resin precursor (2-6) in an amorphous crushed form. The water-absorbent resin precursor (2-6) had a mass average particle size of 350 $\mu$m.

With 100 parts by mass of the resulting water-absorbent resin precursor (2-6), a surface crosslinking agent solution containing 0.30 parts by mass of ethylene carbonate, 0.50 parts by mass of propylene glycol, and 2.0 parts by mass of deionized water was uniformly mixed, and heat treatment was performed at 200°C for 45 minutes. Thereafter, cooling was performed, and an aqueous solution containing 0.5 parts by mass of deionized water and 0.05 parts by mass of polyethylene glycol (average molecular weight: 400) was uniformly mixed. Further, an aqueous solution containing 0.01 parts by mass of trisodium diethylenetriamine pentaacetate, 0.6 parts by mass of a 27.5 mass% aluminum sulfate aqueous solution (8 mass% in terms of aluminum oxide), 0.1 parts by mass of a 60 mass% sodium lactate aqueous solution, and 0.02 parts by mass of propylene glycol was uniformly mixed. After drying at 60°C for 1 hour, classification was performed with a JIS standard sieve having a mesh size of 750 $\mu$m, thereby preparing a water-absorbent resin (2-6). The water-absorbent resin (2-6) had a CRC of 33.5 (g/g), an AAP 0.3 of 32.8 (g/g), and a YI value of 15.44.

[Example 2-7]

The same operation as in Example 2-1 was performed except that the solubilized polymer, the surface crosslinking agent solution, and the additive after surface crosslinking were changed. Specifically, in a reaction vessel, 90.2 g of acrylic acid, 26.0 g of ion-exchanged water, 0.36 g of polyethylene glycol diacrylate (molecular weight: 523) as an internal crosslinking agent, and 151.2 g of the solubilized polymer (1-3) aqueous solution (solid content concentration: 9.05 mass%) prepared in Example 1-3 were added and stirred. Next, the reaction vessel was immersed in an ice bath, and 75.33 g of an aqueous sodium hydroxide solution (solid content concentration: 48.5 mass%) was added little by little while the reaction liquid was stirred so that the temperature of the reaction liquid did not exceed 30°C, and then the reaction liquid was subjected to nitrogen gas replacement for 30 minutes.

Subsequently, the reaction vessel was immersed in a warm water bath at 50°C, and 0.167 g of sodium persulfate and 0.0007 g of L-ascorbic acid were added at the time when the temperature of the reaction liquid reached 30°C while the reaction liquid was stirred, and polymerization started after about 10 minutes. Thereafter, the polymerization was continued while the vessel was immersed in a warm water bath, and the water-containing gel (2-7) was taken out after 60 minutes from the start of the polymerization. The resulting water-containing gel (2-7) was pulverized with a meat chopper having a die diameter of 7.5 mm, and then dried with hot air at 190°C for 20 minutes. Subsequently, the dried polymer was pulverized using a vibration mill, and further classified with JIS standard sieves having mesh sizes of 850 $\mu$m and 150 $\mu$m, thereby a water-absorbent resin precursor (2-7) in an amorphous crushed form. The water-absorbent resin precursor (2-7) had a mass average particle size of 350 $\mu$m.

With 100 parts by mass of the resulting water-absorbent resin precursor (2-7), a surface crosslinking agent solution containing 0.040 parts by mass of ethylene glycol diglycidyl ether, 2.45 parts by mass of propylene glycol, 3.55 parts by mass of deionized water, and 0.75 parts by mass of aluminum sulfate tetradeca-octadecahydrate was uniformly mixed, and heat treatment was performed at 100°C for 30 minutes. Thereafter, cooling was performed, and an aqueous solution containing 1 part by mass of deionized water, 0.03 parts by mass of diethylenetriamine pentaacetic acid·trisodium (DTPA·3Na), and 0.1 parts by mass of polyethylene glycol 600 (trade name: PEG-600, manufactured by Sanyo Chemical Industries, Ltd.) was uniformly mixed. After drying at 60°C for 1 hour, classification was performed with a JIS standard sieve having a mesh size of 850 $\mu$m, thereby preparing a water-absorbent resin (2-7). The water-absorbent resin (2-7) had a CRC of 47.7 (g/g), an AAP 0.3 of 26.1 (g/g), and a YI value of 14.96.

[Comparative Example 2-1]

In a reaction vessel, 90.2 g of acrylic acid, 46.9 g of ion-exchanged water, 0.36 g of polyethylene glycol diacrylate (molecular weight: 523) as an internal crosslinking agent, and 130.3 g of the solution of the solubilized polymer (C1-4) (solid content concentration: 9.45 mass%) prepared in Comparative Example 1-4 were added and stirred. Next, the reaction vessel was immersed in an ice bath, and 75.33 g of an aqueous sodium hydroxide solution (solid content concentration: 48.5 mass%) was added little by little while the reaction liquid was stirred so that the temperature of the reaction liquid did not exceed 30°C, and then the reaction liquid was subjected to nitrogen gas replacement for 30 minutes.

Subsequently, the reaction vessel was immersed in a warm water bath at 50°C, and 0.167 g of sodium persulfate and 0.0007 g of L-ascorbic acid were added at the time when the temperature of the reaction liquid reached 30°C while the reaction liquid was stirred, and polymerization started after about 10 minutes. Thereafter, the polymerization was continued while the vessel was immersed in a warm water bath, and the water-containing gel (C2-1) was taken out after 60 minutes from the start of the polymerization. The resulting water-containing gel (C2-1) was pulverized with a meat chopper having a die diameter of 7.5 mm, and then dried with hot air at 190°C for 20 minutes. Subsequently, the dried polymer was pulverized using a vibration mill, and further classified with JIS standard sieves having mesh sizes of 850 $\mu$m and 150 $\mu$m, thereby preparing a water-absorbent resin precursor (C2-1) in an amorphous crushed form. The water-absorbent resin precursor (C2-1) had a mass average particle size of 350 $\mu$m.

With 100 parts by mass of the resulting water-absorbent resin precursor (C2-1), a surface crosslinking agent solution containing 0.030 parts by mass of ethylene glycol diglycidyl ether, 1.0 part by mass of propylene glycol, and 3.0 parts by mass of deionized water were uniformly mixed, and a heat treatment was performed at 100°C for 45 minutes. Thereafter, cooling was performed, and an aqueous solution containing 1 part by mass of deionized water and 0.01 parts by mass of trisodium diethylenetriamine pentaacetate was uniformly mixed. The mixture was dried at 60°C for 1 hour, and then classified with a JIS standard sieve having a mesh size of 710 μm, and 0.3 parts by mass of hydrotalcite (product name: DHT-6, manufactured by Kyowa Chemical Industry Co., Ltd., $Mg_6Al_2(OH)_{16}CO_3 \cdot 4H_2O$, volume average particle size: 0.5 μm) was uniformly mixed, thereby preparing a water-absorbent resin (C2-1). The water-absorbent resin (C2-1) had a CRC of 46.7 (g/g), an AAP 0.3 of 26.2 (g/g), and a YI value of 48.93.

The results of evaluating the water absorption properties and color tone of the water-absorbent resin produced by using the solubilized polymers prepared in Examples and Comparative Examples as a part of the raw material are shown in Table 3.

[Table 3]

[Table 3]

| | Solubilized polymer | Surface treatment agent (parts by mass/100 parts by mass of water-absorbent resin precursor) | | | | | Water-absorbent resin | | |
|---|---|---|---|---|---|---|---|---|---|
| | | EGDG[*1)] | PG[*2)] | EC[*3)] | Aluminum sulfate [*4)] | Deionized water | CRC (g/g) | AAP 0.3 (g/g) | YI value (-) |
| Example 2-1 | (1-1) | 0.030 | 1.0 | - | - | 3.0 | 47.5 | 26.5 | 14.76 |
| Example 2-2 | (1-2) | 0.030 | 1.0 | - | - | 3.0 | 36.1 | 32.0 | 15.16 |
| Example 2-3 | (1-3) | 0.030 | 1.0 | - | - | 3.0 | 47.4 | 26.3 | 15.17 |
| Example 2-4 | (1-1) | 0.030 | 1.0 | - | - | 3.0 | 47.4 | 26.8 | 14.63 |
| Example 2-5 | (1-1) | 0.025 | 0.60 | 0.40 | - | 3.0 | 35.1 | 29.1 | 15.21 |
| Example 2-6 | (1-2) | 0.30 | 0.50 | 0.30 | - | 2.0 | 33.5 | 32.8 | 15.44 |
| Example 2-7 | (1-3) | 0.040 | 2.45 | - | 0.75 | 3.55 | 47.7 | 26.1 | 14.96 |
| Comparative Example 2-1 | (C1-4) | 0.030 | 1.0 | - | - | 3.0 | 46.7 | 26.2 | 48.93 |

\* 1) EGDG: Ethylene glycol diglycidyl ether
\*2) PG: Propylene glycol
\*3) EC: Ethylene carbonate
\*4) Aluminum sulfate: aluminum sulfate tetradeca-octadecahydrate

Table 3 shows that the water-absorbent resins of Examples 2-1 to 2-7 were excellent in CRC and AAP 0.3, and were also less colored. On the other hand, the water-absorbent resin of Comparative Example 2-1 had excellent water-absorbing properties, but had a very large level of coloring.

For example, when comparing the water-absorbent resin of Example 2-1 with the water-absorbent resin of Comparative Example 2-1, which was produced in the same manner except that only the solubilized polymer was changed, in the solubilized polymer (C1-4) produced by using a large amount of a decomposer other than peroxide, the coloring of the solubilized polymer has greatly increased. In addition, since the coloring of the water-absorbent resin containing the solubilized polymer (C1-4) as a raw material is also large, it is found that the solubilized polymer (C1-4) is not suitable as a raw material of the water-absorbent resin.

[Example 3-1]

In a reaction vessel, 220.4 g of acrylic acid, 0.64 g of polyethylene glycol diacrylate (molecular weight: 523) (0.040 mol% with respect to carboxyl group-containing unsaturated monomer) as an internal crosslinking agent, 288.5 g of the aqueous solution of the solubilized polymer (1-5) (solid content concentration: 10.4 mass%) prepared in Example 1-5, 1.83 g of 1.0 mass% diethylenetriamine pentaacetic acid·trisodium (DTPA/3Na) aqueous solution, 93.4 g of a 48.5 mass% aqueous sodium hydroxide solution, and 61.5 g of deionized water were put and mixed to prepare an aqueous monomer solution (3-1').

Next, the aqueous monomer solution (3-1') was cooled with stirring. When the liquid temperature reached 40.0°C, 90.8 g of a 48.5 mass% aqueous sodium hydroxide solution adjusted to 40°C was added and mixed to prepare an aqueous monomer solution (3-1). At this time, the temperature of the aqueous monomer solution (3-1) was raised to 78.2°C because of the second stage neutralization heat immediately after the preparation. Immediately after the 48.5 mass% aqueous sodium hydroxide solution was started to be mixed, precipitates were observed, but the precipitates were gradually dissolved to form a clear homogeneous solution.

Next, to the aqueous monomer solution (3-1) in a stirred state, 10.9 g of a 4.0 mass% aqueous sodium persulfate solution was added, and immediately thereafter, the mixture was poured into a stainless tray-shaped container in an open-to-atmosphere system. The time from the start of the second stage neutralization to the pouring of the aqueous monomer solution (3-1) into the tray-shaped container was set to 55 seconds, a hot plate was used as the tray-shaped container, and heating was performed until the surface temperature reached 40°C after the pouring of the aqueous monomer solution (3-1). The polymerization reaction was started 70 seconds after the aqueous monomer solution (3-1) was poured into the tray-shaped container. In the polymerization reaction, the reaction product expanded and foamed in all directions while generating water vapor. After the reaction, the reaction product was shrunk to a slightly larger size than that of the tray-shaped container. After a lapse of 3 minutes from the start of the polymerization reaction, the reaction product was taken out as a water-containing gel-like crosslinked polymer (water-containing gel) (3-1). These series of operations were performed in an open-to-atmosphere system.

The water-containing gel (3-1) produced in the polymerization reaction was cut into a strip shape and subjected to gel pulverization with a meat chopper having a die diameter of 7.5 mm. Thereafter, the water-containing gel (3-1) in the form of particles was placed on a 50-mesh wire gauze and dried with hot air at 190°C for 60 minutes. Thereafter, the dried polymer was pulverized using a vibration mill. Next, the pulverized product was classified with JIS standard sieves having mesh sizes of 850 $\mu$m and 150 $\mu$m. These operations prepared a water-absorbent resin precursor (3-1) in an amorphous crushed form.

To 100 parts by mass of the resulting water-absorbent resin precursor (3-1), a surface crosslinking agent solution containing 0.030 parts by mass of ethylene glycol diglycidyl ether, 1.35 parts by mass of propylene glycol, and 3.15 parts by mass of deionized water was added, and the resulting mixture was mixed. Subsequently, the resulting mixture was heat-treated at 100°C for 45 minutes to surface-crosslink the water-absorbent resin precursor (3-1), thereby preparing a water-absorbent resin (3-1).

[Example 3-2]

A water-absorbent resin (3-2) was prepared by performing the same operations as those of Example 3-1 except using the solubilized polymer (1-6) produced in Example 1-6 in place of the solubilized polymer (1-5) in Example 3-1.

(Stability evaluation)

The operations of Example 3-1 and Example 3-2 were each repeated 10 times. The stability of the monomer during polymerization and the fluctuation in polymerization time were checked. The results are shown in Table 4. The stability of the monomer during polymerization was evaluated according to the following criteria:

-Evaluation criteria-

O: Viscosity of aqueous monomer solution did not increase in the time period from preparation of aqueous monomer solution to immediately before addition of initiator (aqueous sodium persulfate solution);

△: Viscosity of aqueous monomer solution slightly increased in the time period from preparation of aqueous monomer solution to immediately before addition of initiator (aqueous sodium persulfate solution); and

×: Viscosity of aqueous monomer solution greatly increased in the time period from preparation of aqueous monomer solution to immediately before addition of initiator (aqueous sodium persulfate solution) and generation of insoluble

**EP 4 617 301 A1**

matter was confirmed.

In Table 4, the fluctuation of the polymerization time was an induction time of polymerization, and was evaluated by measuring the time from when the aqueous monomer solution was poured into the tray-shaped container until when the polymerization reaction was started. Regarding the fluctuation in polymerization time, the description in parentheses indicates the fluctuation range in polymerization induction time.

Various physical properties of the water-absorbent resins (3-1) and (3-2) prepared in Example 3-1 and Example 3-2 are shown in Table 4.

[Table 4]

[Table 4]

| | Solubilized polymer | Amount of remaining decomposer in solubilized polymer (mass ppm) | Water-absorbent resin | | | Monomer stability during polymerization | Fluctuation in polymerization time (seconds) |
|---|---|---|---|---|---|---|---|
| | | | CRC (g/g) | AAP 0.3 (g/g) | YI value (-) | | |
| Example 3-1 | (1-5) | 1650 | 35.8 | 26.9 | 11.9 | △ | 65(±20) |
| Example 3-2 | (1-6) | 2 | 36.4 | 27.6 | 10.6 | ○ | 70(±5) |

Comparison of Example 3-1 and Example 3-2 (Table 4) showed that coloring of the water-absorbent resin produced using the solubilized polymer as a part of the raw material was further suppressed by controlling the amount of the remaining decomposer in the solubilized polymer to be small. Table 4 shows that the stability of the monomer during polymerization is improved by controlling the amount of the remaining decomposer in the solubilized polymer to be small. It is found that when the stability of the monomer during polymerization is improved, thickening of the aqueous monomer solution does not occur before the polymerization initiator is added, the polymerization initiator can be uniformly mixed, and thus the polymerization time is stabilized (fluctuation is reduced). Thus, by reducing the amount of the remaining decomposer in the solubilized polymer, a water-absorbent resin that is more stable in physical properties and production with less coloring can be provided.

[Reference Example 1]

In a reaction vessel, 100.2 g of acrylic acid, 65.0 g of ion-exchanged water, and 0.40 g of polyethylene glycol diacrylate (molecular weight: 523) as an internal crosslinking agent were added and mixed to prepare an aqueous monomer solution (R1').

Subsequently, the reaction vessel containing the aqueous monomer solution (R1') was immersed in an ice bath, and 83.7 g of a 48.5 mass% aqueous sodium hydroxide solution was added little by little while the aqueous monomer solution (R1') was stirred so that the temperature of the aqueous monomer solution (R1') did not exceed 30°C, thereby preparing an aqueous monomer solution (R1). Thereafter, the aqueous monomer solution (R1) was subject to nitrogen gas replacement for 30 minutes.

Subsequently, the reaction vessel was immersed in a warm water bath at 50°C, and 0.178 g of sodium persulfate and 0.004 g of L-ascorbic acid were added at the time point when the temperature of the aqueous monomer solution (R1) reached 30°C while the aqueous monomer solution (R1) was stirred, and polymerization was started after about 2 minutes (polymerization induction time). Thereafter, the polymerization was continued while the vessel was immersed in a warm water bath, and the water-containing gel (R1) was taken out 60 minutes after the polymerization was started.

The resulting water-containing gel (R1) was gel-pulverized with a meat chopper having a die diameter of 7.5 mm, and then dried with hot air at 190°C for 20 minutes. Subsequently, the dried polymer was pulverized using a vibration mill, and the pulverized product was further classified with JIS standard sieves having mesh sizes of 850 $\mu$m and 150 $\mu$m, thereby preparing a water-absorbent resin precursor (R1) in an amorphous crushed form.

With 100 parts by mass of the resulting water-absorbent resin precursor (R1), a surface crosslinking agent solution containing 0.030 parts by mass of ethylene glycol diglycidyl ether, 1.35 parts by mass of propylene glycol, and 3.15 parts by mass of deionized water were uniformly mixed, and a heat treatment was performed at 100°C for 45 minutes.

Thereafter, cooling was performed, and an aqueous solution composed of 1 part by mass of deionized water and 0.01 parts by mass of trisodium diethylenetriamine pentaacetate was uniformly mixed. After drying at 60°C for 1 hour, the resulting material was passed through a JIS standard sieve with a mesh size of 710 μm, thereby preparing a water-absorbent resin (R1).

Various physical properties of the resulting water-absorbent resin (R1) are shown in Table 5.

[Example 4-1]

In a reaction vessel, 90.2 g of acrylic acid, 80.0 g of ion-exchanged water, 0.36 g of polyethylene glycol diacrylate (molecular weight: 523) as an internal crosslinking agent, and 152.1 g of the aqueous solution of the solubilized polymer (1-7) (solid content concentration: 8.1 mass%, temperature: 25°C) prepared in Example 1-7 were added and mixed to prepare an aqueous monomer solution (4-1').

Subsequently, the reaction vessel containing the aqueous monomer solution (4-1') was immersed in an ice bath, and 75.3 g of a 48.5 mass% aqueous sodium hydroxide solution was added little by little while the aqueous monomer solution (4-1') was stirred so that the temperature of the aqueous monomer solution (4-1') did not exceed 30°C, thereby preparing an aqueous monomer solution (4-1). Thereafter, the aqueous monomer solution (4-1) was subjected to nitrogen gas replacement for 30 minutes.

Subsequently, the reaction vessel was immersed in a warm water bath at 50°C, and 0.167 g of sodium persulfate and 0.004 g of L-ascorbic acid were added at the time point when the temperature of the aqueous monomer solution (4-1) reached 30°C while the aqueous monomer solution (4-1) was stirred, and polymerization was started after about 10 minutes (polymerization induction time). Thereafter, the polymerization was continued while the vessel was immersed in a warm water bath, and the water-containing gel (4-1) was taken out 60 minutes after the polymerization was started.

The resulting water-containing gel (4-1) was gel-pulverized with a meat chopper having a die diameter of 7.5 mm, and then dried with hot air at 190°C for 20 minutes. Subsequently, the dried polymer was pulverized using a vibration mill, and the pulverized product was further classified with JIS standard sieves having mesh sizes of 850 μm and 150 μm, thereby preparing a water-absorbent resin precursor (4-1) in an amorphous crushed form.

With 100 parts by mass of the resulting water-absorbent resin precursor (4-1), a surface crosslinking agent solution containing 0.030 parts by mass of ethylene glycol diglycidyl ether, 1.35 parts by mass of propylene glycol, and 3.15 parts by mass of deionized water were uniformly mixed, and a heat treatment was performed at 100°C for 45 minutes.

Thereafter, cooling was performed, and an aqueous solution composed of 1 part by mass of deionized water and 0.01 parts by mass of trisodium diethylenetriamine pentaacetate was uniformly mixed. After drying at 60°C for 1 hour, the resulting material was passed through a JIS standard sieve with a mesh size of 710 μm, thereby preparing a water-absorbent resin (4-1).

Various physical properties of the resulting water-absorbent resin (4-1) are shown in Table 5.

[Example 4-2]

A water-absorbent resin (4-2) was prepared by performing the same operations as those of Example 4-1 except using a heated aqueous solution of the solubilized polymer (1-7) (temperature: 60°C) in place of the aqueous solution of the solubilized polymer (1-7) at room temperature (25°C) in Example 4-1. In Example 4-2, the induction time to the polymerization time was 2 minutes, which was shorter than the induction time (10 minutes) in Example 4-1.

Various physical properties of the resulting water-absorbent resin (4-2) are shown in Table 5.

[Reference Example 2]

Into a reaction vessel, 244.9 g of acrylic acid, 0.71 g (0.040 mol% with respect to the carboxyl group-containing unsaturated monomer) of polyethylene glycol diacrylate (molecular weight: 523) as an internal crosslinking agent, 1.83 g of a 1.0 mass% aqueous solution of diethylenetriamine pentaacetic acid·trisodium (DTPA-3Na), 103.7 g of a 48.5 mass% aqueous sodium hydroxide solution, and 389.0 g of deionized water were put and mixed to prepare an aqueous monomer solution (R2').

Next, the aqueous monomer solution (R2') was cooled with stirring. When the liquid temperature reached 40.0°C, 100.9 g of a 48.5 mass% aqueous sodium hydroxide solution adjusted to 40°C was added and mixed to prepare an aqueous monomer solution (R2). At this time, the temperature of the aqueous monomer solution (R2) was raised to 77.9°C because of the second stage neutralization heat immediately after the preparation. Immediately after the 48.5 mass% aqueous sodium hydroxide solution was started to be mixed, precipitates were observed, but the precipitates were gradually dissolved to form a clear homogeneous solution.

Next, to the aqueous monomer solution (R2) in a stirred state, 12.1 g of a 4.0 mass% aqueous sodium persulfate solution was added, and immediately thereafter, the mixture was poured into a stainless tray-shaped container (bottom surface 340 × 340 mm, height 25 mm, inner surface; Teflon (trade name) coating) in an open-to-atmosphere system. A hot plate was used as the tray-shaped container, and heating was performed until the surface temperature reached 40°C. The time from the start of the second stage neutralization to the pouring of the aqueous monomer solution (R2) into the tray-shaped container was 55 seconds, and the polymerization reaction was started 70 seconds after the pouring of the aqueous monomer solution (R2) into the tray-shaped container (polymerization induction time). In the polymerization reaction, the reaction product expanded and foamed in all directions while generating water vapor. After the reaction, the reaction product was shrunk to a slightly larger size than that of the tray-shaped container. After a lapse of 3 minutes from the start of the polymerization reaction, the reaction product was taken out as a water-containing gel (R2). These series of operations were performed in an open-to-atmosphere system.

The water-containing gel (R2) produced in the polymerization reaction was cut into a strip shape and subjected to gel pulverization with a meat chopper having a die diameter of 7.5 mm. Thereafter, the water-containing gel (R2) was placed on a 50-mesh wire gauze and dried with hot air at 190°C for 60 minutes. Thereafter, the dried polymer was pulverized using a vibration mill. Next, the pulverized product was classified with JIS standard sieves having mesh sizes of 850 μm and 150 μm. These operations prepared a water-absorbent resin precursor (R2) in an amorphous crushed form.

With 100 parts by mass of the resulting water-absorbent resin precursor (R2), a surface crosslinking agent solution containing 0.030 parts by mass of ethylene glycol diglycidyl ether, 1.35 parts by mass of propylene glycol, and 3.15 parts by mass of deionized water were uniformly mixed, and a heat treatment was performed at 100°C for 45 minutes. Thereafter, the mixture was cooled and passed through a JIS standard sieve with a mesh size of 710 μm, thereby preparing a water-absorbent resin (R2).

Various physical properties of the resulting water-absorbent resin (R2) are shown in Table 5.

[Example 4-3]

Into a reaction vessel, 220.4 g of acrylic acid, 0.64 g of polyethylene glycol diacrylate (molecular weight: 523) (0.040 mol% with respect to carboxyl group-containing unsaturated monomer) as an internal crosslinking agent, 333.3 g of the aqueous solution of the solubilized polymer (1-7) (solid content concentration: 8.1 mass%, temperature: 25°C) prepared in Example 1-7, 1.83 g of a 1.0 mass% aqueous solution of diethylenetriamine pentaacetic acid·trisodium (DTPA-3Na), 93.4 g of a 48.5 mass% aqueous sodium hydroxide solution, and 389.0 g of deionized water were put and mixed to prepare an aqueous monomer solution (4-3').

Next, the aqueous monomer solution (4-3') was cooled with stirring. When the liquid temperature reached 40.0°C, 90.8 g of a 48.5 mass% aqueous sodium hydroxide solution adjusted to 40°C was added and mixed to prepare an aqueous monomer solution (4-3). At this time, the temperature of the aqueous monomer solution (4-3) was raised to 77.9°C because of the second stage neutralization heat immediately after the preparation. Immediately after the 48.5 mass% aqueous sodium hydroxide solution was started to be mixed, precipitates were observed, but the precipitates were gradually dissolved to form a clear homogeneous solution.

Next, to the aqueous monomer solution (4-3) in a stirred state, 10.9 g of a 4.0 mass% aqueous sodium persulfate solution was added, and immediately thereafter, the mixture was poured into a stainless tray-shaped container in an open-to-atmosphere system. A hot plate was used as the tray-shaped container, and heating was performed until the surface temperature reached 40°C. The time from the start of the second stage neutralization to the pouring of the aqueous monomer solution (4-3) into the tray-shaped container was 55 seconds, and the polymerization reaction was started 80 seconds after the pouring of the aqueous monomer solution (4-3) into the tray-shaped container (polymerization induction time). In the polymerization reaction, the reaction product was expanded and foamed in all directions while generating water vapor, and after the reaction, the reaction product was shrunk to a size slightly larger than that of the tray-shaped container. After a lapse of 3 minutes from the start of the polymerization reaction, the reaction product was taken out as a water-containing gel (4-3). These series of operations were performed in an open-to-atmosphere system.

The water-containing gel (4-3) produced in the polymerization reaction was cut into a strip shape and subjected to gel pulverization with a meat chopper having a die diameter of 7.5 mm. Thereafter, the water-containing gel (4-3) was placed on a 50-mesh wire gauze and dried with hot air at 190°C for 60 minutes. Thereafter, the dried polymer was pulverized using a vibration mill, and the pulverized product was further classified with JIS standard sieves having mesh sizes of 850 μm and 150 μm. These operations prepared a water-absorbent resin precursor (4-3) in an amorphous crushed form.

A surface crosslinking agent solution containing 0.030 parts by mass of ethylene glycol diglycidyl ether, 1.35 parts by mass of propylene glycol, and 3.15 parts by mass of deionized water were uniformly mixed with 100 parts by mass of the resulting water-absorbent resin precursor (4-3), and a heat treatment was performed at 100°C for 45 minutes. Thereafter, the mixture was cooled and passed through a JIS standard sieve with a mesh size of 710 μm, thereby preparing a water-absorbent resin (4-3).

Various physical properties of the resulting water-absorbent resin (4-3) are shown in Table 5.

[Example 4-4]

A water-absorbent resin (4-4) was prepared by performing the same operations as those of Example 4-3 except using a heated aqueous solution of the solubilized polymer (1-7) (temperature: 60°C) in place of the aqueous solution of the solubilized polymer (1-7) at room temperature (25°C) in Example 4-3 and preliminarily heating the water-absorbent resin raw materials (acrylic acid, polyethylene glycol diacrylate, diethylenetriamine pentaacetic acid·trisodium (DTPA·3-Na) aqueous solution, aqueous sodium hydroxide solution, and deionized water) other than the aqueous solution of the solubilized polymer (1-7) to 40°C. In Example 4-4, the polymerization reaction was started 70 seconds after the aqueous monomer solution was poured into the tray-shaped container (polymerization induction time).

Various physical properties of the resulting water-absorbent resin (4-4) are shown in Table 5.

[Table 5]

[Table 5]

|  | Solubilized polymer | | Polymerization | | Water-absorbent resin | | | |
|---|---|---|---|---|---|---|---|---|
|  | Name | Temperature [°C] | Polymerization method | Induction time of polymerization | Name | CRC (g/g) | AAP 0.3 (g/g) | YI value (-) |
| Reference Example 1 | - | - | Redox polymerization | 2 minutes | (R1) | 36.8 | 26.9 | 13.5 |
| Example 4-1 | 1-7 | 25 | Redox polymerization | 10 minutes | (4-1) | 36.1 | 25.3 | 15.3 |
| Example 4-2 | 1-7 | 60 | Redox polymerization | 2 minutes | (4-2) | 36.9 | 26.5 | 13.8 |
| Reference Example 2 | - | - | Thermal polymerization | 70 seconds | (R2) | 36 | 27.4 | 11.3 |
| Example 4-3 | 1-7 | 25 | Thermal polymerization | 80 seconds | (4-3) | 36.4 | 26.2 | 13.2 |
| Example 4-4 | 1-7 | 60 | Thermal polymerization | 70 seconds | (4-4) | 36.1 | 27.8 | 11.9 |

As shown in Table 5 above, the water-absorbent resin produced using the solubilized polymer produced by the solubilization method according to the present invention as a part of the raw material had small level of coloring.

In addition, comparison between Examples 4-2 and 4-4 (heating and mixing) and Examples 4-1 and 4-3 (room temperature mixing) showed that the delay in the induction time of polymerization was able to be suppressed by using the heated solubilized polymer. It was also confirmed that a decrease in water absorption property (AAP 0.3) and an increase in coloring can be suppressed.

[Reference Example 3]

As an apparatus for producing a polyacrylic acid (salt)-based water-absorbent resin, a production apparatus including a solubilized polymer preparation step (as an example, the solubilization reaction vessel 10 of FIG. 1), a step for preparing an aqueous monomer solution (as an example, the monomer mixing apparatus 30 and the Venturi tube 40 of FIG. 1), a polymerization step (as an example, the polymerization apparatus 50 in FIG. 1), a water-containing gel pulverization step (as an example, the gel pulverizer 60 of FIG. 1), a drying step (as an example, the drying apparatus 70 of FIG. 1), a pulverization step, a classification step, a surface crosslinking step, a cooling step, a granulating step, and a transportation step of connecting the respective steps was prepared. A polyacrylic acid (salt)-based water-absorbent resin was produced using the production apparatus.

First, an aqueous monomer solution (R3) containing 212.4 parts by mass of acrylic acid, 98.9 parts by mass of a 48.5 mass% aqueous sodium hydroxide solution, 1.38 parts by mass of polyethylene glycol diacrylate (molecular weight: 523) as an internal crosslinking agent, 2.0 parts by mass of a 1 mass% aqueous solution of ethylenediamine tetra (methylene phosphonic acid) pentasodium, and 341.3 parts by mass of deionized water was prepared.

Next, the aqueous monomer solution (R3) whose temperature had been adjusted to 40°C was continuously supplied with a metering pump, and further, 96.1 parts by mass of a 48.5 mass% aqueous sodium hydroxide solution was continuously line mixed. At this time, the liquid temperature of the aqueous monomer solution (R3) increased to 85°C because of the heat of neutralization.

Further, 11.6 parts by mass of a 4 mass% aqueous solution of sodium persulfate was continuously line mixed, and then continuously supplied to a continuous polymerization machine having a planar polymerization belt provided with weirs at both ends such that the thickness of the reaction liquid (mixture of aqueous monomer solution and aqueous sodium persulfate solution) became about 7.5 mm. The time from when the aqueous sodium persulfate solution was added until expansion and foaming was observed in the aqueous monomer solution on the polymerization belt was recorded as the polymerization initiation time. Thereafter, polymerization was continuously performed, thereby producing a belt-like water-containing gel (R3).

Subsequently, the belt-shaped water-containing gel (R3) was continuously cut at equal intervals in the width direction with respect to the traveling direction of the polymerization belt, and the cut water-containing gel (R3) was chopped to several mm with a meat chopper and then sprayed on a punching metal, and dried at 180°C for 30 minutes.

Subsequently, the whole amount of the dried polymer (R3) at about 60°C produced in the drying step was pulverized (pulverization step) with a roll mill, and then the pulverized product was classified using JIS standard sieves having mesh sizes of 850 $\mu$m and 150 $\mu$m, thereby preparing a water-absorbent resin precursor (R3) in an amorphous crushed form. In Reference Example 3, the water-absorbent resin precursor (R3) was used as a water-absorbent resin (R3).

The operation was repeated 10 times, and the average value and fluctuation range of various physical properties such as polymerization initiation time and CRC were checked. The results are shown in Table 6.

[Example 4-5]

A polyacrylic acid (salt)-based water-absorbent resin was produced using the same production apparatus as in Reference Example 3.

First, an aqueous monomer solution (4-5) containing 193.3 parts by mass of acrylic acid, 81.9 parts by mass of a 48.5 mass% aqueous sodium hydroxide solution, 1.26 parts by mass of polyethylene glycol diacrylate (molecular weight: 523) as an internal crosslinking agent, 1.8 parts by mass of a 1 mass% aqueous solution of ethylenediamine tetra(methylene phosphonic acid) pentasodium, 11.4 parts by mass of deionized water, and 296.3 parts by mass of the aqueous solution of the solubilized polymer (1-7) (solid content concentration: 8.1 mass%, temperature: 25°C) prepared in Example 1-7 was prepared. The aqueous monomer solution (4-5) was prepared by continuously charging the aqueous solution of the solubilized polymer (1-7) into the aqueous monomer solution (4-5') containing components other than the aqueous solution of the solubilized polymer (1-7) in the Venturi tube 40 of FIG. 1.

Next, the aqueous monomer solution (4-5) whose temperature had been adjusted to 40°C was continuously supplied with a metering pump, and 79.6 parts by mass of a 48.5 mass% aqueous sodium hydroxide solution was further continuously line mixed. At this time, the liquid temperature of the aqueous monomer solution (4-5) increased to 85°C because of the heat of neutralization.

Further, 9.6 parts by mass of a 4 mass% aqueous solution of sodium persulfate was continuously line mixed, and then continuously supplied to a continuous polymerization machine having a planar polymerization belt provided with weirs at both ends such that the liquid thickness of the reaction liquid (mixture of aqueous monomer solution and aqueous sodium persulfate solution) became about 7.5 mm. The time from when the aqueous sodium persulfate solution was added until expansion and foaming was observed in the aqueous monomer solution on the polymerization belt was recorded as the polymerization initiation time (induction time). Thereafter, polymerization was continuously performed, thereby producing a belt-like water-containing gel (4-5).

Subsequently, the belt-shaped water-containing gel (4-5) was continuously cut at equal intervals in the width direction with respect to the traveling direction of the polymerization belt, and the cut water-containing gel (4-5) was chopped to several mm with a meat chopper and then sprayed on a punching metal, and dried at 180°C for 30 minutes.

Subsequently, the whole amount of the dried polymer (4-5) at about 60°C produced in the drying step was pulverized (pulverization step) with a roll mill, and then the pulverized product was classified using JIS standard sieves having mesh sizes of 850 $\mu$m and 150 $\mu$m, thereby preparing a water-absorbent resin precursor (4-5) in an amorphous crushed form. In Example 4-5, the water-absorbent resin precursor (4-5) was used as a water-absorbent resin (4-5).

The operation was repeated 10 times, and the average value and fluctuation range of various physical properties such as polymerization initiation time (induction time) and CRC were checked. The results are shown in Table 6.

[Example 4-6]

A water-absorbent resin (4-6) was prepared by performing the same operations as those of Example 4-5 except that a heated (60°C) aqueous solution of the solubilized polymer (1-7) (temperature: 60°C) was continuously put into the aqueous monomer solution in the Venturi tube in place of the aqueous solubilized polymer (1-7) solution at room temperature (25°C) in Example 4-5. As the solubilized polymer (1-7) used in Example 4-6, one stored in the storage vessel 20 illustrated in FIG. 1 at 60°C ± 5°C for an average residence time of 3 hours was used.

The operation was repeated 10 times, and the average value and fluctuation range of various physical properties such as polymerization initiation time (induction time) and CRC were checked. The results are shown in Table 6.

(Evaluation of mixed state of solubilized polymer)

The evaluation of the "mixed state" of the solubilized polymer shown in the following Table 6 was performed as follows: Blue No. 1 was added to a solubilized polymer aqueous solution such that the content of Blue No. 1 was 1 mass%, and the resulting solubilized polymer aqueous solution was added to the water-absorbent resin raw material (excluding solubilized polymers) contained in the aqueous monomer solution prepared in each Example and Production Example, and the state of stirring and mixing was checked. At this time, the mixed state was visually evaluated.

[Table 6]

[Table 6]

| | Solubilized polymer | | | Polymerization | | | Water-absorbent resin | | | |
|---|---|---|---|---|---|---|---|---|---|---|
| | Name | Storage temperature (°C) | Mixed state | Polymerization method | Polymerization initiation time (seconds) | | Name | CRC (g/g) | | YI (average value) (-) |
| | | | | | Average value | Fluctuation range | | Average value | Fluctuation range | |
| Reference Example 3 | - | - | - | Belt polymerization | 60 | 5 | (R3) | 35.1 | 0.5 | 10.8 |
| Example 4-5 | (1-7) | 25 | Slightly uneven | Belt polymerization | 70 | 10 | (4-5) | 35.5 | 1.2 | 12.3 |
| Example 4-6 | (1-7) | 60 | Uniform | Belt polymerization | 60 | 5 | (4-6) | 35.4 | 0.6 | 10.9 |

Table 6 shows that the polymerization and physical properties are stabilized by using the heated aqueous solution of the solubilized polymer in the addition of the aqueous solution of the solubilized polymer (1-7) to the aqueous monomer solution in the continuous polymerization. Specifically, in the case of using the heated (60°C) solubilized polymer aqueous solution (Example 4-6), a water-absorbent resin having less coloring (small YI value) was produced as compared with the case of using the solubilized polymer aqueous solution at room temperature (25°C) (Example 4-5). When the heated (60°C) solubilized polymer aqueous solution was used (Example 4-6), the solution was able to be more uniformly mixed with the raw material of the water-absorbent resin, the delay in the polymerization initiation time and the fluctuation range were small, and the fluctuation range of CRC was small.

Industrial Applicability

According to one embodiment of the present invention, there can be provided a method for producing a solubilized polymer (solubilizing method of a water-absorbent resin) capable of decomposing a water-absorbent resin in a short time without using a large amount of a decomposer in a technique for decomposing and solubilizing a water-absorbent resin. According to another embodiment of the present invention, there can be provided a production method capable of stably obtaining a water-absorbent resin with less coloring when a water-absorbent resin is produced using the solubilized polymer as a part of a raw material. The solubilized polymer produced by the solubilization method and the water-absorbent resin produced by the production method can be suitably used as raw materials of recycled water-absorbent resins for various applications, in particular, sanitary products such as disposable diapers, sanitary napkins, and adult incontinence products.

The present application is based on Japanese Patent Application No. 2022-178500 filed on November 7, 2022, Japanese Patent Application No. 2023-7768 filed on January 23, 2023, Japanese Patent Application No. 2023-113188 filed on July 10, 2023, Japanese Patent Application No. 2023-130519 filed on August 9, 2023, and Japanese Patent Application No. 2023-137023 filed on August 25, 2023, the disclosures of which are incorporated herein by reference in their entireties.

**Claims**

1. A method for producing a solubilized polymer by decomposing a recovered water-absorbent resin to produce a solubilized polymer, the method comprising preparing a mixture by mixing

   100 parts by mass of a recovered water-absorbent resin,
   66 parts by mass or more and 1900 parts by mass or less of water, and
   0.1 parts by mass or more and 50 parts by mass or less of a peroxide (excluding persulfates),
   wherein the mixture has a pH of 6.5 or more and 8.5 or less.

2. The method for producing a solubilized polymer according to claim 1, wherein the solubilized polymer has a weight-average molecular weight of 10,000 or more and 1,000,000 or less.

3. The method for producing a solubilized polymer according to claim 1 or 2, the method further comprising heating the mixture to 50°C or higher and 130°C or lower.

4. The method for producing a solubilized polymer according to any one of claims 1 to 3, wherein the mixture further contains 0.01 parts by mass or more and 50 parts by mass or less of a reducing agent with respect to 100 parts by mass of the recovered water-absorbent resin.

5. The method for producing a solubilized polymer according to claim 4, wherein the reducing agent contains at least one selected from the group consisting of ascorbic acid (salt) and/or a derivative thereof, hydrogen sulfite (salt), and sulfurous acid (salt).

6. The method for producing a solubilized polymer according to any one of claims 1 to 5, wherein the mixture further contains $1.0 \times 10^{-6}$ mol or more and 1 mol or less of transition metal ions with respect to 100 parts by mass of the recovered water-absorbent resin.

7. The method for producing a solubilized polymer according to any one of claims 1 to 6, the method further comprising applying a shear force to the recovered water-absorbent resin before the recovered water-absorbent resin contained in the mixture is decomposed and/or during a period from a start to an end of decomposition of the recovered water-absorbent resin contained in the mixture, and pulverizing the recovered water-absorbent resin to reduce its particle size.

8. The method for producing a solubilized polymer according to claim 7, wherein
the recovered water-absorbent resin with a reduced particle size has:

a mass average particle size obtained in terms of dry matter of 20 $\mu$m or more and 160 $\mu$m or less; and/or
a mass proportion of particles having a mass average particle size of 80 $\mu$m or less obtained in terms of dry matter of 40 mass% or more.

9. The method for producing a solubilized polymer according to any one of claims 1 to 8, wherein

the solubilized polymer has a weight-average molecular weight (Mw) of 30,000 or more, and
a content of remaining peroxide is 1000 mass ppm or less with respect to a solid content of the solubilized polymer.

10. The method for producing a solubilized polymer according to any one of claims 1 to 9, wherein the recovered water-absorbent resin is a used water-absorbent resin recovered from a used absorbent article.

11. A method for producing a water-absorbent resin using the solubilized polymer as a part of a raw material, the method comprising:
in one or more steps, adding the solubilized polymer produced by the method described in any one of claims 1 to 10 or an aqueous solution of the solubilized polymer.

12. The method for producing a water-absorbent resin according to claim 11, wherein addition of the solubilized polymer or an aqueous solution of the solubilized polymer is performed in a state where the solubilized polymer is heated.

13. The method for producing a water-absorbent resin according to claim 12, wherein a heating temperature of the solubilized polymer is 50°C or higher.

14. A method for producing an absorbent article using the water-absorbent resin produced by the method described in any one of claims 11 to 13.

FIG. 1

## INTERNATIONAL SEARCH REPORT

| International application No. |
| --- |
| **PCT/JP2023/040035** |

### A. CLASSIFICATION OF SUBJECT MATTER

*C08J 3/03*(2006.01)i; *C08F 8/50*(2006.01)i; *C08J 11/16*(2006.01)i
FI: C08J3/03 CEP; C08J11/16; C08F8/50

According to International Patent Classification (IPC) or to both national classification and IPC

### B. FIELDS SEARCHED

Minimum documentation searched (classification system followed by classification symbols)

C08J3/03; C08F8/50; C08J11/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 9-249711 A (MITSUBISHI GAS CHEM CO INC) 22 September 1997 (1997-09-22) entire text | 1-14 |
| A | JP 11-172039 A (IDEMITSU PETROCHEM CO LTD) 29 June 1999 (1999-06-29) entire text | 1-14 |
| A | JP 6-313008 A (MITSUBISHI PETROCHEM CO LTD) 08 November 1994 (1994-11-08) entire text | 1-14 |
| A | JP 2019-131789 A (NIPPON CATALYTIC CHEM IND) 08 August 2019 (2019-08-08) entire text | 1-14 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 January 2024** | **23 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

EP 4 617 301 A1

INTERNATIONAL SEARCH REPORT
Information on patent family members

| Patent document cited in search report | Publication date (day/month/year) | Patent family member(s) | Publication date (day/month/year) |
|---|---|---|---|
| JP 9-249711 A | 22 September 1997 | (Family: none) | |
| JP 11-172039 A | 29 June 1999 | (Family: none) | |
| JP 6-313008 A | 08 November 1994 | (Family: none) | |
| JP 2019-131789 A | 08 August 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020213298 A
- US 20220212165 A1
- JP H04317785 A
- JP H05247221 A
- JP 2019131789 A
- WO 2021042113 A
- WO 2022183184 A
- WO 2008096713 A
- US 20100009846 A1
- WO 2012102406 A
- US 20050215734 A1
- WO 2009123197 A
- US 20080194863 A1
- US 6241928 B2
- US 20080161512 A1
- US 7265190 B2
- US 4893999 B2
- US 2005215734 A1
- US 6987151 B2
- US 6710141 B2
- WO 2011126079 A
- WO 2006100300 A
- WO 2011025012 A
- WO 2011025013 A
- WO 2011111657 A
- US 7183456 B2
- JP 2022 A
- JP 178500 A
- JP 2023007768 A
- JP 2023113188 A
- JP 2023130519 A
- JP 2023137023 A

### Non-patent literature cited in the description

- HT-1 NC. Sakai Chemical Industry Co., Ltd.
- *CHEMICAL ABSTRACTS*, 7758-87-4